# EUROPEAN PATENT APPLICATION

(11) **EP 4 181 600 A1**
(43) Date of publication of application: **17.05.2023**
(21) Application number: 21850114.6
(22) Date of filing: 27.07.2021
(51) Int. Cl.: H04W 72/04

(54) **LOGICAL CHANNEL (LCH) CONFIGURATION METHOD, COMMUNICATION DEVICE AND COMMUNICATION SYSTEM**

(30) Priority: 31.07.2020 CN 202010757494
(71) Applicant: Huawei Technologies Co., Ltd., Shenzhen, Guangdong 518129 (CN)
(72) Inventor: LIU, Jing, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Pfenning, Meinig & Partner mbB
(86) International application number: PCT/CN2021/108547
(87) International publication number: WO 2022/022484

(57) **Abstract**

Embodiments of this application disclose a logical channel LCH method and a communication apparatus. In the method, a first data radio bearer DRB of a terminal corresponds to a first LCH, and the first LCH is for transmitting packet data convergence protocol PDCP data corresponding to a source donor node. The method includes: A first relay node generates configuration information of a second LCH corresponding to the first DRB, where the second LCH is for transmitting PDCP data corresponding to a target donor node; and the first relay node sends the configuration information of the second LCH to the terminal. The source donor node and the target donor node are respectively a source donor node and a target donor node during first relay node handover or second relay node handover. A second relay node is a relay node on a link between the first relay node and the source donor node.

## Description

### CROSS-REFERENCE TO RELATED APPLICATIONS

This application claims priority to Chinese Patent Application No. 202010757494.3, filed with the China National Intellectual Property Administration on July 31, 2020 and entitled "LOGICAL CHANNEL LCH CONFIGURATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a data processing method, a communication apparatus, and a communication system.

### BACKGROUND

Compared with a fourth generation mobile communication system, fifth generation (fifth generation, 5G) mobile communication imposes stricter requirements on various network performance indicators in an all-round way. For example, a capacity indicator needs to be increased by 1000 times, wider coverage is required, and ultra-high reliability and an ultra-low latency are required. An integrated access and backhaul (Integrated access and backhaul, IAB) system emerges. In the IAB system, a large quantity of densely deployed nodes may provide flexible and convenient access and backhaul services for a terminal, to expand coverage and satisfy a stricter performance indicator of 5G.

In a relay system such as the IAB system, relay node handover may occur due to link quality or the like, and the relay node handover may cause service interruption of the terminal. As a result, user experience is greatly reduced.

### SUMMARY

Embodiments of this application provide a logical channel LCH configuration method, a communication apparatus, and a communication system, to reduce a probability of service interruption of a terminal during relay node handover, and ensure service continuity of the terminal.

The following describes downlink solutions provided in embodiments of this application with reference to the first aspect to the fourth aspect. It should be noted that the first aspect to the fourth aspect describe the downlink solutions from perspectives of different network elements, and content in the first aspect to the fourth aspect may be mutually referenced.

A first aspect of embodiments of this application provides a logical channel LCH configuration method. The method may be performed by a relay node or a chip in the relay node. The following provides descriptions by using an example in which the method is performed by the relay node. In the method, a first data radio bearer DRB of a terminal corresponds to a first LCH, and the first LCH is for transmitting packet data convergence protocol PDCP data corresponding to a source donor node. The method includes: A first relay node generates configuration information of a second LCH corresponding to the first DRB, where the second LCH is for transmitting PDCP data corresponding to a target donor node; and the first relay node sends the configuration information of the second LCH to the terminal.

In the method, the first relay node is an access relay node of the terminal.

In the method, the source donor node is a source donor node during first relay node handover, and the target donor node is a target donor node during the first relay node handover. In other words, the first relay node is a node on which handover occurs. Alternatively, the source donor node is a source donor node during second relay node handover, and the target donor node is a target donor node during the second relay node handover, where a second relay node is a relay node on a link between the first relay node and the source donor node. In other words, the second relay node is a node on which handover occurs.

In the method, the first DRB corresponds to the first LCH, and the second LCH may be configured for the first DRB. The first LCH is for transmitting the data corresponding to the source donor node, and the second LCH is for transmitting the data corresponding to the target donor node. The terminal may distinguish, based on different LCHs, between the data corresponding to the source donor node and the data corresponding to the target donor node, to ensure that the terminal processes the data by using correct configuration information, reduce a probability of service interruption, and improve service transmission continuity.

In a possible implementation, the PDCP data corresponding to the source donor node is processed by using PDCP configuration information corresponding to the source donor node, and the PDCP data corresponding to the target donor node is processed by using PDCP configuration information corresponding to the target donor node.

In a possible implementation, the PDCP data corresponding to the source donor node includes uplink PDCP data and/or downlink PDCP data corresponding to the source donor node, and the PDCP data corresponding to the target donor node includes uplink PDCP data and/or downlink PDCP data corresponding to the target donor node.

In a possible implementation, the method further includes: The first relay node receives first indication information from the source donor node or the target donor node; and the first relay node generates the configuration information of the second LCH based on the first indication information.

Optionally, the first indication information is carried in a user equipment UE context modification request message received by the first relay node from the source donor node or a UE context setup request message received by the first relay node from the target donor node.

In a possible implementation, after the first relay node receives a first message from the target donor node, the first relay node generates the configuration information of the second LCH.

Optionally, the first message is a UE context setup request message.

In a possible implementation, the method further includes:

The first relay node sends second indication information to the terminal, where the second indication information is for configuring the second LCH for the first DRB, or indicates the terminal to associate the first DRB with two LCHs.

Optionally, the second indication information may be generated by the first relay node and sent by the first relay node to the terminal. Alternatively, the second indication information may be generated by the target donor node, sent by the target donor node to the first relay node, and sent by the first relay node to the terminal.

In a possible implementation, the method further includes:

The first relay node sends third indication information to the terminal, where the third indication information indicates the terminal to process uplink data by using the PDCP configuration information corresponding to the target donor node. Optionally, the first relay node may be the node on which the handover occurs, or the second relay node is the node on which the handover occurs. The second relay node may send the third indication information to the first relay node, or the first relay node sends the third indication information to the terminal.

Optionally, the source donor node is the source donor node during the first relay node handover, and the target donor node is the target donor node during the first relay node handover. In other words, the first relay node is the node on which the handover occurs. The method includes: After the first relay node performs a physical uplink shared channel PUSCH switch, or after a GTP tunnel is established between the first relay node and the target donor node, the first relay node sends the third indication information to the terminal.

In a possible implementation, the method further includes:
The first relay node sends fourth indication information to the target donor node, where the fourth indication information is used by the target donor node to indicate the terminal to delete the first LCH.

Optionally, after the first relay node completes sending, to the terminal, the PDCP data that corresponds to the source donor node and that is buffered by the first relay node, the first relay node sends the fourth indication information to the target donor node.

In a possible implementation, the source donor node is the source donor node during the first relay node handover, and the target donor node is the target donor node during the first relay node handover. The method further includes: The first relay node receives fifth indication information from the target donor node through the source donor node; and the first relay node maintains a connection to the source donor node during the handover based on the fifth indication information.

In a possible implementation, the method further includes: The first relay node sends capability indication information to the source donor node, and the source donor node sends the capability indication information to the target donor node, where the capability indication information indicates that the first relay node supports a capability of maintaining the connection to the source donor node during the handover.

In a possible implementation, the first LCH corresponds to a GTP-U tunnel between the first relay node and the source donor node, and the second LCH corresponds to a GTP-U tunnel between the first relay node and the target donor node.

In a possible implementation, the method further includes: The first relay node receives, through the source donor node, information about a BAP address allocated by the target donor node, where the BAP address allocated by the target donor node to the first relay node is different from a BAP address allocated by the source donor node to the first relay node.

In this implementation, optionally, the PDCP data corresponding to the source donor node includes the downlink PDCP data, the downlink PDCP data corresponding to the source donor node includes the BAP address allocated by the source donor node to the first relay node, the PDCP data corresponding to the target donor node includes the downlink PDCP data, and the downlink PDCP data corresponding to the target donor node includes the BAP address allocated by the target donor node to the first relay node. In this way, the first relay node can determine, based on the BAP address of the downlink data, whether the downlink data is from the source donor node or the target donor node.

In a possible implementation, the method further includes: The first relay node receives sixth indication information from the target donor node, where the sixth indication information indicates the first relay node to start, activate, or enable dual configurations of a BAP layer, and the dual configurations of the BAP layer include a BAP configuration corresponding to the source donor node and a BAP configuration corresponding to the target donor node.

A first aspect of embodiments of this application provides a logical channel LCH configuration method. The method may be performed by a terminal or a chip in the terminal. The following provides description by using an example in which the method is performed by the terminal. In the method, a first DRB of the terminal corresponds to a first LCH, and the first LCH is for transmitting PDCP data corresponding to a source donor node. The method includes: The terminal receives configuration information of a second LCH from a first relay node, where the second LCH is for transmitting PDCP data corresponding to a target donor node; and the terminal configures the second LCH for the first DRB.

In the method, the first relay node is an access relay node of the terminal.

In the method, the source donor node is a source donor node during first relay node handover, and the target donor node is a target donor node during the first relay node handover. In other words, the first relay node is a node on which handover occurs. Alternatively, the source donor node is a source donor node during second relay node handover, and the target donor node is a target donor node during the second relay node handover, where a second relay node is a relay node on a link between the first relay node and the source donor node. In other words, the second relay node is a node on which handover occurs.

In a possible implementation, the PDCP data corresponding to the source donor node is processed by using PDCP configuration information corresponding to the source donor node, and the PDCP data corresponding to the target donor node is processed by using PDCP configuration information corresponding to the target donor node.

In a possible implementation, the PDCP data corresponding to the source donor node includes uplink PDCP data and/or downlink PDCP data corresponding to the source donor node, and the PDCP data corresponding to the target donor node includes uplink PDCP data and/or downlink PDCP data corresponding to the target donor node.

In a possible implementation, the method further includes: The terminal receives first indication information from the first relay node. That the terminal configures the second LCH for the first DRB includes: The terminal configures the second LCH for the first DRB based on the first indication information, to associate the first DRB with two LCHs.

In a possible implementation, the PDCP data corresponding to the source donor node includes the downlink PDCP data, and the PDCP data corresponding to the target donor node includes the downlink PDCP data. The method further includes:

The terminal receives, from the first relay node, the downlink PDCP data that corresponds to the source donor node and that is mapped to the first LCH; and the terminal processes, by using the PDCP configuration information corresponding to the source donor node, the downlink PDCP data corresponding to the source donor node; and/or
the terminal receives, from the first relay node, the downlink PDCP data that corresponds to the target donor node and that is mapped to the second LCH; and the terminal processes, by using the PDCP configuration information corresponding to the target donor node, the downlink PDCP data corresponding to the target donor node.

In a possible implementation, the PDCP data corresponding to the source donor node includes the uplink PDCP data, and the PDCP data corresponding to the target donor node includes the uplink PDCP data. The method further includes:

The terminal processes uplink data by using the PDCP configuration information corresponding to the source donor node, to obtain the uplink PDCP data corresponding to the source donor node, maps, to the first LCH, the uplink PDCP data corresponding to the source donor node, and sends, to the first relay node, the uplink PDCP data that corresponds to the source donor node and that is mapped to the first LCH; and/or
the terminal processes the uplink data by using the PDCP configuration information corresponding to the target donor node, to obtain the uplink PDCP data corresponding to the target donor node, maps, to the second LCH, the uplink PDCP data corresponding to the target donor node, and sends, to the first relay node, the uplink PDCP data that corresponds to the target donor node and that is mapped to the second LCH.

In a possible implementation, the PDCP data corresponding to the target donor node includes the uplink PDCP data corresponding to the target donor node. The method further includes:

The terminal receives second indication information from the first relay node; and
the terminal processes, based on the second indication information, uplink data by using the PDCP configuration information corresponding to the target donor node, to obtain the uplink PDCP data corresponding to the target donor node.

In a possible implementation, the PDCP data corresponding to the target donor node includes the uplink PDCP data corresponding to the target donor node. The method further includes:

After the terminal receives the configuration information of the second LCH from the target donor node through the first relay node, the terminal processes uplink data by using the PDCP configuration information corresponding to the target donor node, to obtain the uplink PDCP data corresponding to the target donor node.

In a possible implementation, the method further includes: The terminal receives third indication information from the first relay node; and the terminal deletes the first LCH based on the third indication information.

A third aspect of embodiments of this application provides a BAP address allocation method. The method may be performed by a source donor node or a chip in the source donor node. The following provides descriptions by using an example in which the method is performed by the source donor node. The method includes: The source donor node sends, to a target donor node, a BAP address allocated by the source donor node to an access relay node.

In the method, the source donor node is a source donor node during access relay node handover or intermediate relay node handover, and the target donor node is a target donor node during the access relay node handover or the intermediate relay node handover. The intermediate relay node is connected to the access relay node. A relay node on which handover occurs may be referred to as a migration relay node.

Optionally, the method further includes: The source donor node receives, from the target donor node, a BAP address allocated by the target donor node to the access relay node, and sends the BAP address to the access relay node.

In a possible implementation, the BAP address allocated by the source donor node to the access IAB node is different from the BAP address allocated by the target donor node to the access IAB node.

The source donor node and the target donor node allocate different BAP addresses to the access relay node. Therefore, after receiving downlink data, the access relay node determines, based on the BAP address carried in the downlink data, whether the downlink data is from the source donor node or the target donor node, so that the downlink data can be processed by using correct configuration information, to ensure data continuity.

Optionally, the method further includes: The source donor node sends first indication information to the access relay node, so that the access relay node generates configuration information of a second LCH. The first indication information may be carried in a UE context modification request message. Optionally, the access relay node is a relay node on which handover occurs. The method further includes: The source donor node receives second indication information from the target donor node, and sends the second indication information to the access relay node, where the second indication information indicates the access relay node to maintain a connection to the source donor node during the handover.

Optionally, the access relay node is a relay node on which handover occurs. The method further includes: The source donor node receives capability indication information from the access relay node, where the capability indication information indicates that the first relay node supports a capability of maintaining the connection to the source donor node during the handover; and the source donor node sends the capability indication information to the target donor node.

A fourth aspect of embodiments of this application provides a BAP address allocation method. The method may be performed by a target donor node or a chip in the target donor node. The following provides descriptions by using an example in which the method is performed by the target donor node. The method includes: The target donor node receives, from a source donor node, a BAP address allocated by the source donor node to an access relay node.

In the method, the source donor node is a source donor node during access relay node handover or intermediate relay node handover, and the target donor node is a target donor node during the access relay node handover or the intermediate relay node handover. The intermediate relay node is connected to the access relay node. A relay node on which handover occurs may be referred to as a migration relay node.

Optionally, the method further includes: The target donor node sends, to the access IAB node through the source donor node, a BAP address allocated by the target donor node to the access IAB node.

In a possible implementation, the BAP address allocated by the source donor node to the access IAB node is different from the BAP address allocated by the target donor node to the access IAB node.

In a possible implementation, the method further includes: The target donor node sends first indication information to the access relay node, so that the access relay node generates configuration information of a second LCH. Optionally, the first indication information is carried in a UE context setup request message.

In a possible implementation, the method further includes: The target donor node sends second indication information to a terminal through the access relay node, where the second indication information is for configuring the second LCH for a first DRB, or indicates the terminal to associate a first DRB with two LCHs.

In a possible implementation, the method further includes: The target donor node receives third indication information sent by the access relay node, where the third indication information is used by the target donor node to indicate the terminal to delete a first LCH.

In a possible implementation, the method further includes: The target donor node sends fourth indication information to the access relay node through the source donor node, where the fourth indication information indicates the access relay node to maintain a connection to the source donor node during the handover.

Optionally, the method includes: The target donor node receives capability indication information from the access relay node through the source donor node, where the capability indication information indicates that the access relay node supports a capability of maintaining the connection to the source donor node during the handover.

In a possible implementation, the method further includes: The target donor node sends fifth indication information to the access relay node, where the fifth indication information indicates the access relay node to start, activate, or enable dual configurations of a BAP layer, and the dual configurations of the BAP layer include a BAP configuration corresponding to the source donor node and a BAP configuration corresponding to the target donor node.

One or more of the methods in the first aspect to the fourth aspect may be combined with each other. In addition, in the method in each aspect, one or more of a plurality of possible implementations may be combined with each other.

A fifth aspect of embodiments of this application provides a communication apparatus. The communication apparatus may be a terminal or a chip in the terminal, the communication apparatus may be a relay node or a chip in the relay node, the communication apparatus may be a target donor node or a chip in the target donor node, or the communication apparatus may be a source donor node or a chip in the source donor node. The communication apparatus includes a processor, where the processor is configured to execute a computer program or instructions, to enable the communication apparatus to perform the methods according to the first aspect to the fourth aspect.

Optionally, the communication apparatus further includes a memory. The processor is coupled to the memory, the memory is configured to store the computer program or the instructions, and the processor is configured to execute the computer program or the instructions in the memory.

Optionally, the communication apparatus may further include a communication unit. The communication unit is configured to communicate with another device or another component in the communication apparatus. For example, the communication apparatus is the terminal, and the communication unit is a transceiver. For example, the communication apparatus is the chip in the terminal, and the communication unit is an input/output circuit or an interface of the chip.

A sixth aspect of embodiments of this application provides a communication apparatus. The communication apparatus has a function of implementing behavior of the terminal, the relay node, the source donor node, or the target donor node in the foregoing method aspects, and includes corresponding means (means) configured to perform the steps or functions described in the method aspects according to the first aspect to the sixth aspect. The steps or the functions may be implemented by software, hardware, or a combination of hardware and software.

A seventh aspect of embodiments of this application provides a chip. The chip includes a processor and an interface circuit, where the interface circuit is coupled to the processor, the processor is configured to run a computer program or instructions, to implement the method according to any one of the first aspect to the fourth aspect, and the interface circuit is configured to communicate with a module other than the chip.

An eighth aspect of embodiments of this application provides a computer storage medium. The computer storage medium stores a program for implementing the method according to any one of the first aspect to the fourth aspect. When the program is run in a wireless communication apparatus, the wireless communication apparatus is enabled to perform the method according to any one of the first aspect to the fourth aspect.

A ninth aspect of embodiments of this application provides a computer program product. The program product includes a program. When the program is run, the method according to any one of the first aspect to the fourth aspect is performed.

A tenth aspect of embodiments of this application provides a communication system. The communication system includes one or more of the terminal, the relay node, the source donor node, and the target donor node in the methods according to the first aspect to the fourth aspect. Optionally, the communication system may further include a core network element. Optionally, the core network element is connected to the source donor node and the target donor node.

### BRIEF DESCRIPTION OF DRAWINGS

To describe technical solutions in embodiments of this application or in the background more clearly, the following describes the accompanying drawings for describing embodiments of this application or the background.
FIG. 1 is a schematic diagram of a mobile communication system 100 according to an embodiment of this application;
FIG. 2 is a schematic diagram of an IAB network 200 according to an embodiment of this application;
FIG. 3 is a schematic diagram of a CU-DU split architecture according to an embodiment of this application;
FIG. 4 is a schematic diagram of a control plane protocol stack in a CU-DU split architecture according to an embodiment of this application;
FIG. 5 is a schematic diagram of a user plane protocol stack in a CU-DU split architecture according to an embodiment of this application;
FIG. 6 is a schematic diagram of a control plane protocol stack in an IAB network according to an embodiment of this application;
FIG. 7 is a schematic diagram of a user plane protocol stack in an IAB network according to an embodiment of this application;
FIG. 8 is a schematic diagram of a DAPS according to an embodiment of this application;
FIG. 9A and FIG. 9B are a schematic flowchart of DAPS-based handover in the case of a single air interface according to an embodiment of this application;
FIG. 10 is a schematic diagram of relay node handover according to an embodiment of this application;
FIG. 11 is a schematic diagram of inter-donor-CU handover according to an embodiment of this application;
FIG. 12 is a schematic diagram of a dual-LCH user plane protocol stack according to an embodiment of this application;
FIG. 13 is a schematic flowchart of an LCH configuration method according to an embodiment of this application;
FIG. 14 is a flowchart of an indication method according to an embodiment of this application;
FIG. 15 is a flowchart of an LCH deletion method according to an embodiment of this application;
FIG. 16 is a flowchart of an indication method according to an embodiment of this application;
FIG. 17A to FIG. 17E are a schematic diagram of an inter-donor-node handover method according to an embodiment of this application;
FIG. 18A to FIG. 18D are a schematic diagram of another inter-donor-node handover method according to an embodiment of this application;
FIG. 19 is a schematic diagram of a structure of a terminal according to an embodiment of this application;
FIG. 20 is a schematic diagram of a structure of a communication apparatus according to an embodiment of this application;
FIG. 21 is a schematic diagram of a structure of an access network device according to an embodiment of this application; and
FIG. 22 is a schematic diagram of a structure of a communication apparatus according to an embodiment of this application.

### DESCRIPTION OF EMBODIMENTS

The following describes embodiments of this application with reference to the accompanying drawings in embodiments of this application.

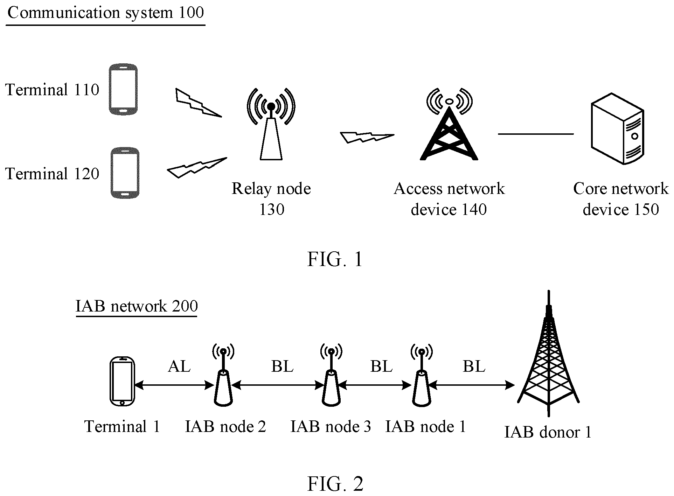

FIG. 1 is a schematic diagram of an architecture of a communication system 100 according to an embodiment of this application. The communication system 100 includes at least one terminal (for example, a terminal 110 and a terminal 120), at least one relay node (relay node, RN) 130, at least one access network device 140, and at least one core network device 150. The terminals 110 and 120 are connected to the access network device 140, or the terminals 110 and 120 are connected to the access network device 140 through the relay node 130. The relay node 130 is connected to the access network device 140, or the relay node 130 is connected to the access network device 140 through another relay node. The access network device 140 is connected to the core network device 150 in a wired manner. The terminals 110 and 120, the relay node 130, the access network device 140, and the core network device 150 may be connected in a wireless or wired manner. This is not limited in this application.

The communication system provided in this application may be, for example, a long term evolution (long term evolution, LTE) system supporting a 4G access technology, a new radio (new radio, NR) system supporting a 5G access technology, any cellular system related to a 3rd generation partnership project (3rd generation partnership project, 3GPP), a wireless fidelity (wireless fidelity, Wi-Fi) system, a worldwide interoperability for microwave access (worldwide interoperability for microwave access, WiMAX) system, a multi-radio access technology (Radio Access Technology, RAT) system, or a system using another future-oriented communication technology. In this application, the terminal is a device having a wireless transceiver function. The terminal may be deployed on land, including an indoor or outdoor terminal, a hand-held terminal, a wearable terminal, or a vehicle-mounted terminal; may be deployed on a water surface (for example, on a ship); or may be deployed in the air (for example, on a drone, an airplane, a balloon, and a satellite). The terminal may be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal may sometimes also be referred to as a terminal device, user equipment (user equipment, UE), an access terminal device, a station, a UE unit, a UE station, a mobile station, a remote station, a remote terminal device, a mobile device, a UE terminal device, a terminal device, a wireless communication device, a UE agent, a UE apparatus, or another appropriate term. The terminal may be fixed or movable.

The access network device may be a device that is on an access network side and that is configured to support the terminal in accessing the communication system. The access network device may be referred to as a base station (base station, BS), for example, an evolved NodeB (evolved NodeB, eNB) in the communication system supporting the 4G access technology, a next-generation NodeB (next-generation NodeB, gNB) in the communication system supporting the 5G access technology, a transmission reception point (transmission reception point, TRP), a relay node (relay node), an access point (access point, AP), an access node in a Wi-Fi system, or a wireless backhaul node. Alternatively, the access network device may be referred to as a donor node, an IAB donor (IAB donor), a donor IAB, a donor, a donor gNB (donor gNB, DgNB), or the like. The base station may be a macro base station, a micro base station, a pico base station, a small cell, a relay station, or the like. A plurality of base stations may support the foregoing networks using a same technology, or may support the foregoing networks using different technologies. The base station may include one or more co-site or non-co-site transmission reception points (Transmission reception points, TRPs). The access network device may alternatively be a radio controller, a central unit (central unit, CU), and/or a distributed unit (distributed unit, DU) in a cloud radio access network (cloud radio access network, CRAN) scenario. The access network device may alternatively be a server, a wearable device, a vehicle-mounted device, or the like. The following provides descriptions by using an example in which the access network device is a base station. A plurality of access network devices in the communication system may be base stations of a same type, or may be base stations of different types. The base station may communicate with the terminal, or may communicate with the terminal device through a relay station. The terminal may communicate with a plurality of base stations using different technologies. For example, the terminal may communicate with a base station supporting an LTE network, communicate with a base station supporting a 5G network, or support dual connections to a base station in an LTE network and a base station in a 5G network.

The core network device may be connected to one or more access network devices, and may provide the terminal in the system with one or more functions of session management, access authentication, internet protocol (Internet Protocol, IP) address allocation, and data transmission. For example, the core network device may be a mobility management entity (mobility management entity, MME) or a serving gateway (serving gateway, SGW) in the communication system supporting the 4G access technology, or an access and mobility management function (Access and Mobility Management Function, AMF) network element or a user plane function (User Plane Function, UPF) network element in the communication system supporting the 5G access technology. The core network device may alternatively be referred to as a core network element.

The relay node may be a node that provides a wireless access service and/or a wireless backhaul service. The wireless access service is a data and/or signaling access service provided through a wireless access link, and the wireless backhaul service is a data and/or signaling backhaul service provided through a wireless backhaul link. The relay node is configured to forward data and/or signaling between the terminal and the access network device. In one aspect, the relay node provides the wireless access service for the terminal through an access link (access link, AL). In another aspect, the relay node is connected to the access network device through a one-hop or multi-hop backhaul link (backhaul link, BL).

The relay node may have different names in different communication systems. For example, the relay node may be referred to as a wireless backhaul node or a wireless backhaul device. For example, in a 5G system, the relay node may be referred to as an integrated access and backhaul node (integrated access and backhaul node, IAB node). Certainly, in a future communication system, the relay node may alternatively have a different name. This is not limited herein.

FIG. 2 is a schematic diagram of an integrated access and backhaul (integrated access and backhaul, IAB) network 200 according to an embodiment of this application. FIG. 2 is an application scenario of the communication system 100 shown in FIG. 1. The following further describes the terminal, the relay node, and the access network device in FIG. 1 with reference to FIG. 2.

In FIG. 2, a terminal 1 may be the terminal 110 in FIG. 1. An IAB node (node) 2, an IAB node 3, and an IAB node 1 may be the relay node 130 in FIG. 1. An IAB donor 1 may be the access network device 140 in FIG. 1. The IAB donor 1 may be connected to the core network device 150 in FIG. 1 (for example, in a wired manner). An IAB donor may be referred to as a donor node (donor node), a DgNB (namely, a donor gNodeB), or another appropriate name. This is not limited in this application.

The IAB network 200 includes one or more terminals (where for clarity, FIG. 2 shows only the terminal 1), one or more IAB nodes (where for example, FIG. 2 shows three IAB nodes, namely, the IAB node 2, the IAB node 3, and the IAB node 1), and one or more donor nodes (where for clarity, FIG. 2 shows only the IAB donor 1). The terminal 1 may be connected to the one or more IAB nodes in a wireless manner, where each IAB node may be connected to one or more other IAB nodes in a wireless manner, and the one or more IAB nodes may be connected to the one or more donor nodes in a wireless manner. Optionally, the one or more IAB nodes may further be connected to each other in a wireless manner. This is not limited in this application.

It may be understood that, in the IAB network, one transmission path between the terminal and the donor node may include one or more IAB nodes. If one IAB node is a node accessed by the terminal, a link between the IAB node and a child node (namely, the terminal) may be referred to as an access link. If one IAB node is a node that provides a backhaul service for the terminal served by another IAB node, a link between the IAB node and a child node (namely, the another IAB node) may be referred to as a backhaul link. For example, as shown in FIG. 2, the terminal 1 is connected to the IAB node 2 through a wireless access link, the IAB node 2 is connected to the IAB node 3 through a wireless backhaul link, the IAB node 3 is connected to the IAB node 1 through a wireless backhaul link, and the IAB node 1 is connected to the IAB donor 1 through a wireless backhaul link.

To ensure service transmission reliability, optionally, in the IAB network, multi-hop IAB node networking and multi-connectivity IAB node networking are supported. There may be a plurality of transmission paths between the terminal and the IAB donor. On one path, there are determined hierarchical relationships between IAB nodes and between the IAB node and the donor node serving the IAB node. Each IAB node considers, as a parent node, a node that provides an access service for the IAB node. Correspondingly, each IAB node may be considered as a child node of the parent node of the IAB node.

For example, in FIG. 2, a parent node of the IAB node 1 is the IAB donor 1, the IAB node 1 is a parent node of the IAB node 3, the IAB node 3 is a parent node of the IAB node 2, and the IAB node 2 is a parent node of the terminal 1.

An uplink data packet of the terminal may be transmitted to the donor node through one or more IAB nodes, and then sent by the donor node to the core network device, for example, a mobile gateway device (for example, a user plane function (user plane function, UPF for short) network element in a 5G network). A downlink data packet of the terminal is received by the donor node from the core network device (namely, the mobile gateway device), and then sent to the terminal through one or more IAB nodes.

For example, in FIG. 2, a transmission path of an uplink data packet between the terminal 1 and the IAB donor 1 is: terminal 1→IAB node 2→IAB node 3→IAB node 1→IAB donor 1, and a transmission path of a downlink data packet between the terminal 1 and the IAB donor 1 is: IAB donor 1→IAB node 1→IAB node 3→IAB node 2→terminal 1.

In the IAB network, on one transmission path, an IAB node accessed by the terminal may be referred to as an access IAB node, and another IAB node on the transmission path is referred to as an intermediate IAB node. The intermediate IAB node may provide a backhaul service for the terminal. One IAB node may be used as an access IAB node of a terminal, and may also be used as an intermediate IAB node of another terminal.

For example, in FIG. 2, on the path "terminal 1→IAB node 2→IAB node 3→IAB node 1→IAB donor 1", the IAB node 2 is an access IAB node, and the IAB node 3 and the IAB node 1 are intermediate IAB nodes. The IAB node 3 provides an access service for the IAB node 2, and/or provides a backhaul service for the terminal 1. The IAB node 1 provides an access service for the IAB node 3, and/or provides a backhaul service for the terminal 1. If a terminal 2 (not shown in FIG. 2) accesses the IAB node 3, for the terminal 1, the IAB node 3 is an intermediate IAB node, and for the terminal 2, the IAB node 3 is an access IAB node.

In the IAB network, one or more IAB nodes served by an IAB node and one or more terminals may be referred to as descendant (descendant) nodes of the IAB node. It may be understood that the descendant nodes may include IAB nodes served by the IAB node, for example, a child node, a grandchild node, and a great-grandchild node, and a terminal accessing the IAB nodes, for example, a terminal that accesses the child node, the grandchild node, and the great-grandchild node.

For example, in FIG. 2, descendant nodes of the IAB node 1 include the terminal 1, the IAB node 2, and the IAB node 3.

The foregoing IAB network is merely an example. In an IAB network with multi-hop and multi-connectivity combined, there are more other possibilities in the IAB network. For example, a donor node and an IAB node served by another donor node form dual connectivity to serve a terminal. The possibilities are not listed one by one herein.

In the IAB network, for the IAB donor, the IAB donor may include a central unit (which may be referred to as an IAB donor CU) and a distributed unit (which may be referred to as an IAB donor DU).

In the IAB network, for the IAB node, when serving as a parent node, the IAB node may play a role similar to the access network device, to provide an access service for a child node of the IAB node, for example, allocate, to the child node of the IAB node through scheduling, an uplink resource for uplink data transmission. When the IAB node serves as a child node, for a parent node serving the IAB node, the IAB node may play a role of the terminal device, for example, establish a connection to the parent node through operations such as cell selection and random access, and obtain an uplink resource that is for uplink data transmission and that is scheduled by the parent node for the IAB node.

By way of example and not limitation, in this embodiment of this application, a functional unit that is in the IAB node and that supports the IAB node in implementing the role of the terminal device is referred to as a mobile terminal (mobile terminal, MT) functional unit of the IAB node, which is referred to as an IAB-MT or IAB-UE for short, and a functional unit that is in the IAB node and that supports the IAB node in implementing the role of the access network device is referred to as a DU functional unit of the IAB node, which is referred to as an IAB -DU for short. The IAB-MT and the IAB-DU may be logical functional units, and functions of the IAB-MT and the IAB-DU are implemented by the IAB node. Alternatively, the IAB-MT and the IAB-DU may be physical division, and the IAB-MT and the IAB-DU may be different physical devices in the IAB node.

It should be noted that FIG. 2 is described by using the IAB network as an example. Content in FIG. 2 is also applicable to a relay network other than the IAB network, and "IAB" in FIG. 2 may be replaced with "relay". For example, the IAB node 2 may be replaced with a relay node 2, the IAB node 3 may be replaced with a relay node 3, the IAB node 1 may be replaced with a relay node 1, and the IAB donor 1 may be replaced with a donor node 1. For descriptions of a connection relationship between network elements, an access link, a backhaul link, a parent node, a child node, an access relay node, an intermediate access node, and the like in the relay network, refer to descriptions of the IAB network 200.

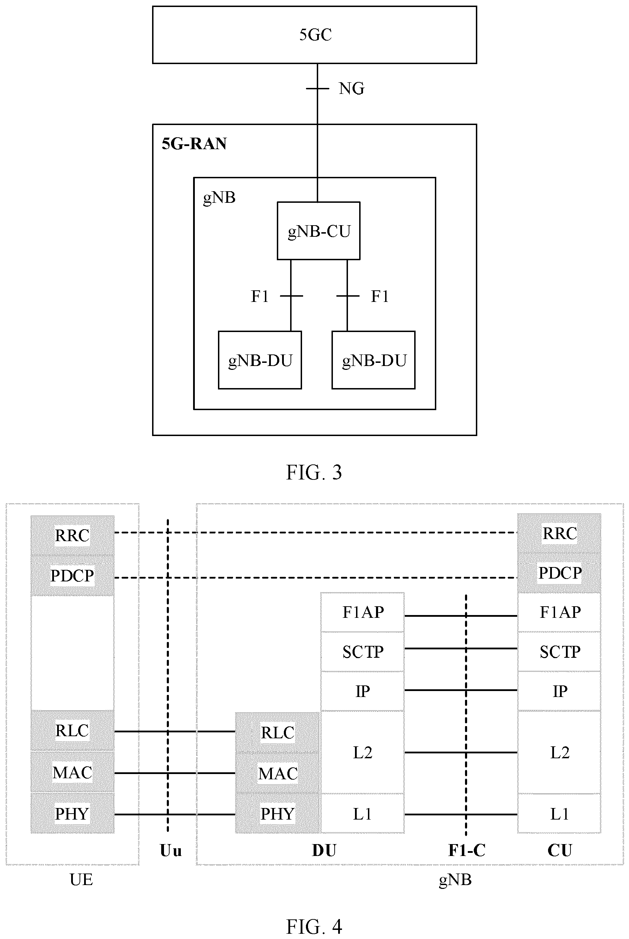

FIG. 3 is a schematic diagram of a CU-DU split architecture according to an embodiment of this application. The access network device in FIG. 1 or the IAB donor in FIG. 2 may use the CU-DU split architecture. The following provides descriptions with reference to FIG. 3.

The access network device 140 may be implemented by using a cloud radio access network (cloud radio access network, C-RAN) architecture. Some functions of a base station (where a gNB is used as an example for description) are implemented by a central unit (central unit, CU), and the other functions are implemented by a distributed unit (distributed unit, DU). CU-DU division may be performed by protocol stacks. In a possible manner, a radio resource control (radio resource control, RRC) layer, a service data mapping protocol (service data adaptation protocol, SDAP) layer, and a packet data convergence protocol (packet data convergence protocol, PDCP) layer are deployed in the CU, and a radio link control (radio link control, RLC) layer, a media access control (media access control, MAC) layer, and a physical (physical, PHY) layer are deployed in the DU. One CU may be connected to one or more DUs, to facilitate network expansion. The CU is connected to the DU through an interface (for example, an F1 interface), and the CU is connected to a core network through an interface (for example, an NG interface).

In an implementation, the CU includes a user plane (User plane, UP for short) (referred to as a CU-UP for short in this application) and a control plane (Control plane, CP for short) (referred to as a CU-CP for short in this application).

In a single air interface scenario, a terminal may access a CU through a DU. Functions of a peer RLC layer, MAC layer, and PHY layer of the UE are implemented by the DU, and functions of a corresponding PDCP layer, SDAP layer, and PDCP layer of the UE are implemented by the CU.

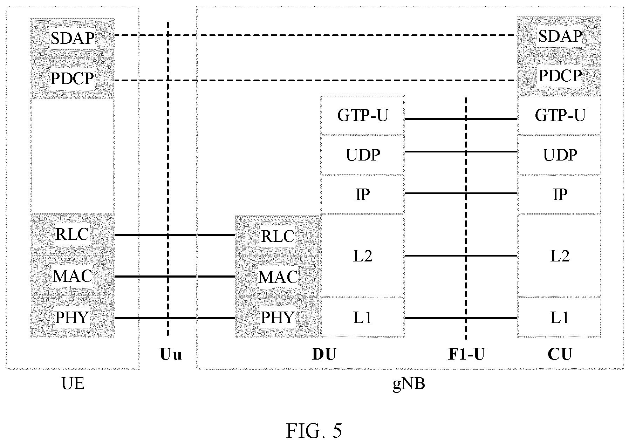

FIG. 4 is a schematic diagram of a control plane protocol stack in a CU-DU split architecture according to an embodiment of this application. FIG. 5 is a schematic diagram of a user plane protocol stack in a CU-DU split architecture according to an embodiment of this application. The following provides descriptions with reference to FIG. 4 and FIG. 5.

For a control plane, as shown in FIG. 4, UE and a CU each establish a peer RRC layer and PDCP layer. The UE is connected to a DU through an interface (for example, a Uu interface), and the UE and the DU each establish a peer RLC layer, MAC layer, and PHY layer. The DU is connected to the CU through a control plane interface (for example, an F1-control plane (F1-control plane, F1-C) interface), and the DU and the CU each establish a peer F1 application protocol (F1 application protocol, F1AP) layer, stream control transmission protocol (stream control transmission protocol, SCTP) layer, internet protocol (Internet Protocol, IP) layer, layer (layer, L) 2, and layer (layer, L)1.

For a user plane, as shown in FIG. 5, UE and a CU each establish a peer SDAP layer and PDCP layer. The UE is connected to a DU through a Uu interface, and the UE and the DU each establish a peer RLC layer, MAC layer, and PHY layer. The DU is connected to the CU through an F1-user plane (F1-user plane, F1-U) interface, and the DU and the CU each establish a peer general packet radio service (general packet radio service, GPRS) tunneling protocol-user plane (GPRS tunneling protocol-user plane, GTP-U) layer, user datagram protocol (user datagram protocol, UDP) layer, IP layer, L2, and L1.

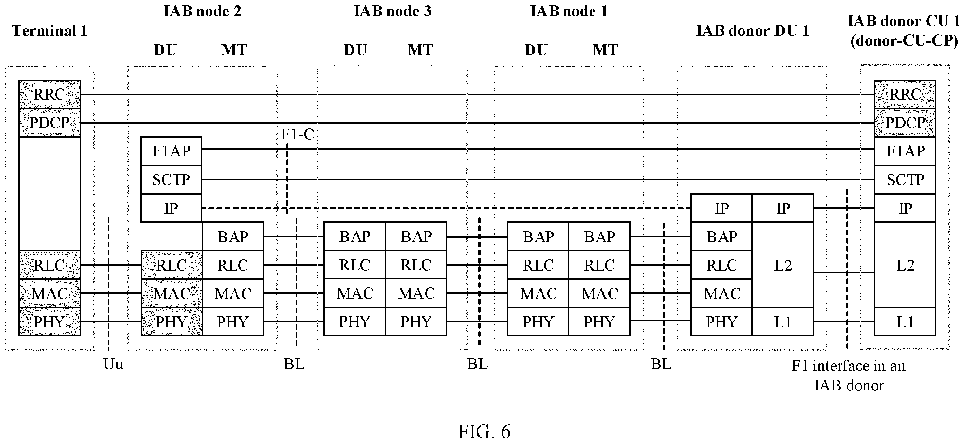

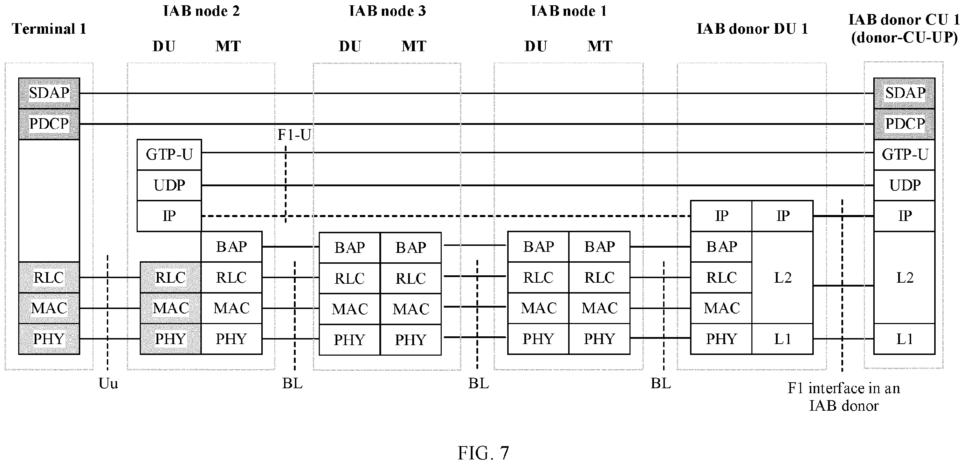

FIG. 6 is a schematic diagram of a control plane protocol stack in an IAB network according to an embodiment of this application. FIG. 7 is a schematic diagram of a user plane protocol stack in an IAB network according to an embodiment of this application. The following provides descriptions with reference to FIG. 6 and FIG. 7.

In the IAB network, a peer PHY layer, MAC layer, and RLC layer of a terminal are located on an access IAB node, and a peer PDCP layer, SDAP layer, and RRC layer of the UE are located on an IAB donor CU. If the IAB donor CU includes a CP and a UP, for a control plane, the peer PDCP layer and RRC layer of the UE are located on the CP of the IAB donor CU (namely, a donor-CU-CP), and for a user plane, the peer PDCP layer and SDAP layer of the UE are located on the UP of the IAB donor CU (namely, a donor-CU-UP).

For the control plane, as shown in FIG. 6, a Uu interface is established between a terminal 1 and a DU of an IAB node 2, and peer protocol layers include an RLC layer, a MAC layer, and a PHY layer. An F1-C interface is established between the DU of the IAB node 2 and an IAB donor CU 1, and peer protocol layers include an FlAP layer and an SCTP layer. An F1 interface in an IAB donor is established between an IAB donor DU 1 and the IAB donor CU 1, and peer protocol layers include an IP layer, an L2, and an L1. BLs are established between the IAB node 2 and an IAB node 3, between the IAB node 3 and an IAB node 1, and between the IAB node 1 and the IAB donor DU 1, and peer protocol layers include a backhaul adaptation protocol (Backhaul Adaptation Protocol, BAP) layer, an RLC layer, a MAC layer, and a PHY layer. In addition, the terminal 1 and the IAB donor CU 1 each establish a peer RRC layer and PDCP layer, and the DU of the IAB node 2 and the IAB donor DU 1 each establish a peer IP layer

It can be learned that, compared with a control plane protocol stack of a single air interface, in the control plane protocol stack in the IAB network, a DU of the access IAB node implements functions of a gNB-DU of the single air interface (namely, functions of establishing a peer RLC layer, MAC layer, and PHY layer with the terminal and establishing a peer FlAP layer and SCTP layer with a CU). It may be understood that the DU of the access IAB node in the IAB network implements the functions of the gNB-DU of the single air interface, and the IAB donor CU implements functions of a gNB-CU of the single air interface.

On the control plane, an RRC message of the UE is encapsulated in an F1AP message between the access IAB node and the IAB donor CU for transmission.

For the user plane, as shown in FIG. 7, a Uu interface is established between a terminal 1 and a DU of an IAB node 2, and peer protocol layers include an RLC layer, a MAC layer, and a PHY layer. An F1-U interface is established between the DU of the IAB node 2 and an IAB donor CU 1, and peer protocol layers include a GTP-U layer and a UDP layer. An F1 interface in an IAB donor is established between an IAB donor DU 1 and the IAB donor CU 1, and peer protocol layers include an IP layer, an L2, and an L1. BLs are established between the IAB node 2 and an IAB node 3, between the IAB node 3 and an IAB node 1, and between the IAB node 1 and the IAB donor DU 1, and peer protocol layers include a BAP layer, an RLC layer, a MAC layer, and a PHY layer. In addition, the terminal 1 and the IAB donor CU 1 each establish a peer SDAP layer and PDCP layer, and the DU of the IAB node 2 and the IAB donor DU 1 each establish a peer IP layer

It can be learned that, compared with a user plane protocol stack of a single air interface, in the user plane protocol stack in the IAB network, a DU of the access IAB node implements functions of a gNB-DU of the single air interface (namely, functions of establishing a peer RLC layer, MAC layer, and PHY layer with the terminal and establishing a peer GTP-U layer and UDP layer with the IAB donor CU 1). It may be understood that the DU of the access IAB node implements the functions of the gNB-DU of the single air interface, and the IAB donor CU implements functions of a gNB-CU of the single air interface.

On the user plane, a PDCP data packet of the UE is encapsulated in a GTP-U tunnel between the access IAB node and the IAB donor CU for transmission. The GTP-U tunnel is established on the Fl-U interface.

In FIG. 7, a PDCP entity, an RLC entity, and the GTP-U tunnel of the terminal may be established at a bearer granularity. In other words, the bearer, the PDCP entity, the RLC entity, and the GTP-U tunnel may be in a one-to-one correspondence.

A logical channel is established between the terminal and the DU of the access IAB node. The logical channel is a transmission channel between the RLC entity and a lower-layer entity of the RLC entity, namely, a transmission channel between the RLC entity and a MAC entity. One RLC entity corresponds to one logical channel. RLC channels (channels) are established between an MT of the access IAB node and a DU of an intermediate IAB node (for example, an MT of the IAB node 2 and a DU of the IAB node 3), between an MT of the intermediate IAB node and the DU of the intermediate IAB node (for example, an MT of the IAB node 3 and a DU of the IAB node 1), and between the DU of the intermediate IAB node and an IAB donor DU (for example, an MT of the IAB node 1 and the IAB donor DU 1). The RLC channel is a transmission channel between the RLC entity and an upper-layer entity of the RLC entity. For example, if the upper-layer entity of the RLC entity is an adaptation (also referred to as backhaul adaptation protocol (Backhaul Adaptation Protocol, BAP)) layer entity, the RLC channel on a backhaul link is a channel between the RLC entity and the BAP entity. One RLC entity corresponds to one RLC channel. Therefore, in FIG. 7, the bearer, the PDCP entity, the RLC entity, the GTP-U tunnel, and the logical channel are in a one-to-one correspondence.

FIG. 6 and FIG. 7 each are described by using only the protocol stacks in the IAB scenario shown in FIG. 2 as an example. It should be noted that one IAB node may play one or more roles. The IAB node may have one or more protocol stacks of the one or more roles. Alternatively, the IAB node may have one protocol stack, and for different roles of the IAB node, protocol layers corresponding to different roles in the protocol stacks may be used for processing. The following provides descriptions by using an example in which the IAB node has the one or more protocol stacks of the one or more roles.

### (1) Protocol stack of a terminal

When accessing an IAB network, the IAB node may play a role of the terminal. In this case, an MT of the IAB node has the protocol stack of the terminal, for example, a protocol stack of the terminal 1 in FIG. 6 and FIG. 7: the RRC layer, the PDCP layer, the RLC layer, the MAC layer, and the PHY layer. On a control plane, an RRC message of the IAB node is encapsulated in an FlAP message between a parent node of the IAB node and an IAB donor CU for transmission. On a user plane, a PDCP data packet of the IAB node is encapsulated in a GTP-U tunnel between the parent node of the IAB node and the IAB donor CU for transmission.

In addition, after the IAB node accesses the IAB network, the IAB node may still play a role of the terminal, for example, transmitting an uplink and/or downlink data packet (for example, an CAM data packet) of the IAB node with an IAB donor, and performing measurement through the RRC layer

### (2) Protocol stack of an access IAB node

After the IAB node accesses the IAB network, the IAB node may provide an access service for the terminal, to play a role of the access IAB node. In this case, the IAB node has the protocol stack of the access IAB node, for example, a protocol stack of the IAB node 2 in FIG. 6 and FIG. 7.

### (3) Protocol stack of an intermediate IAB node

After the IAB node accesses the IAB network, the IAB node may play a role of the intermediate IAB node. In this case, the IAB node has the protocol stack of the intermediate IAB node, for example, a protocol stack of the IAB node 3 or the IAB node 1 in FIG. 6 and FIG. 7.

The IAB node may have the one or more protocol stacks of the one or more roles. For example, after accessing the IAB network, the IAB node may play the role of the terminal and the role of the access IAB node. In this case, there may be two protocol stacks on an interface between the IAB node and the parent node of the IAB node. One is the protocol stack of the terminal, and the other is a protocol stack of a node providing a backhaul service for the terminal (namely, the protocol stack of the access IAB node). For another example, after accessing the IAB network, the IAB node may play the role of the terminal and the role of the intermediate IAB node. In this case, there may be two protocol stacks on an interface between the IAB node and the parent node of the IAB node. One is the protocol stack of the terminal, and the other is the protocol stack of the intermediate IAB node. For still another example, after accessing the IAB network, the IAB node may play the role of the terminal, the role of the access IAB node, and the role of the intermediate IAB node (where for example, the IAB node may be an access IAB node for some terminals, and is an intermediate IAB node for some other terminals; in addition, the IAB node needs to transmit an operation, administration, and maintenance (operation, administration and maintenance, OAM) data packet of the IAB node with the IAB donor). In this case, the IAB node may have three protocol stacks. One is the protocol stack of the terminal, one is the protocol stack of the access IAB node, and the other is the protocol stack of the intermediate IAB node.

It should be noted that FIG. 6 and FIG. 7 each are described by using the IAB network as an example. Content in FIG. 6 and FIG. 7 is also applicable to a relay network other than the IAB network. For an architecture of a control plane protocol stack of the relay network, refer to FIG. 6. For an architecture of a user plane protocol stack of the relay network, refer to FIG. 7.

In a single air interface scenario, terminal handover may occur. When the terminal is handed over from a source base station to a target base station, the terminal first disconnects from the source base station, and service transmission of the terminal is interrupted. After the terminal accesses the target base station, the service transmission of the terminal is resumed. To reduce a problem of service transmission interruption of the terminal in the case of a single air interface, a dual active protocol stack (dual active protocol stack, DAPS) solution is introduced.

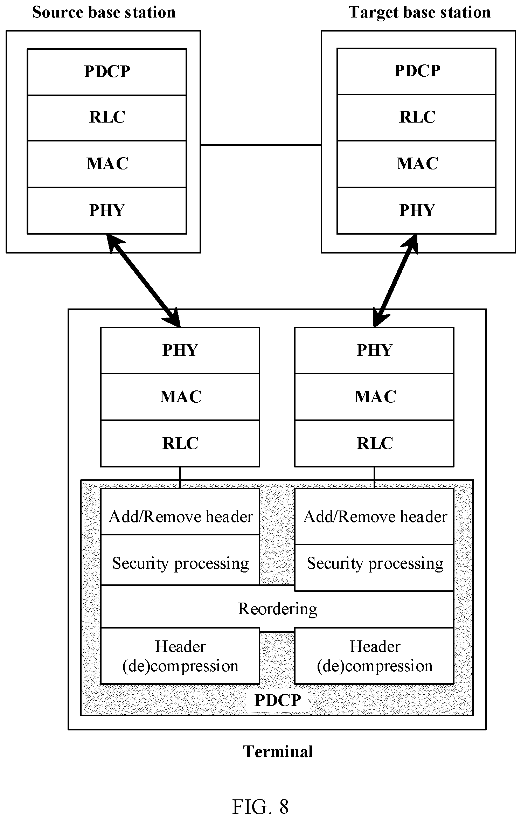

The following first describes the DAPS solution in the case of the single air interface with reference to FIG. 8 to FIG. 9B.

FIG. 8 is a schematic diagram of a DAPS according to an embodiment of this application. As shown in FIG. 8, a source base station receives downlink data of a terminal from a core network. During terminal handover, the source base station may send a part of the received downlink data to the terminal, and forward the other part of the received downlink data to a target base station (where the part of the data may be referred to as forwarded data), so that after the terminal accesses the target base station, the target base station sends the part of the data to the terminal. The source base station and the target base station have respective user plane protocol stacks. The terminal has two protocol stacks. One protocol stack corresponds to the source base station and includes a corresponding PHY entity, MAC entity, and RLC entity. The other protocol stack corresponds to the target base station and includes a corresponding PHY layer, MAC entity, and RLC entity. Although the terminal has two protocol stacks, for the forwarded data of the terminal, one PDCP entity is associated with two RLC entities, where one RLC entity corresponds to the source base station, and the other RLC entity corresponds to the target base station. The PDCP entity is configured at a bearer granularity, which may be understood as that one bearer of the terminal corresponds to one PDCP entity. However, in the PDCP entity, functions such as header compression (header compression), header decompression (header decompression), security processing (security processing), add header (add header), and remove header (remove header) are independent of each other for the source base station and the target base station, and a reordering function is common for the source base station and the target base station. A PDCP sequence number (sequence number, SN) required for reordering may be uniformly allocated by the source base station.

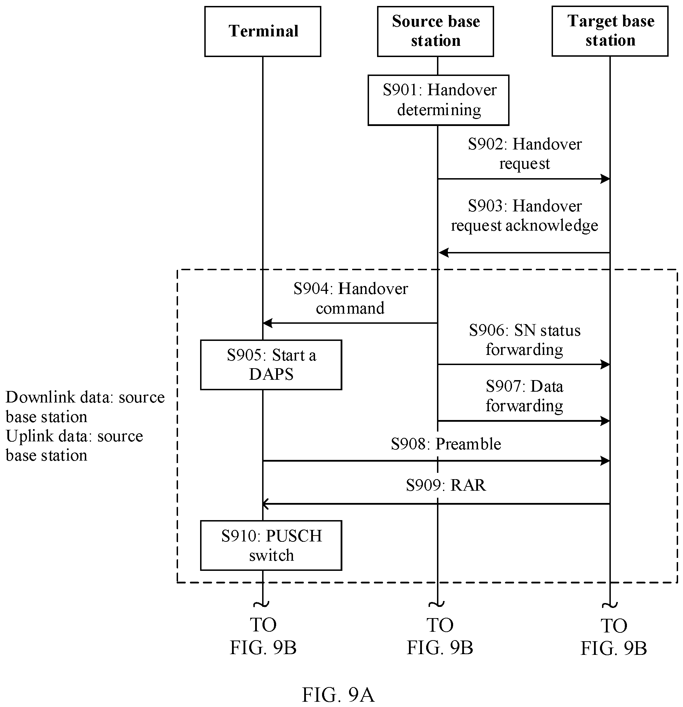

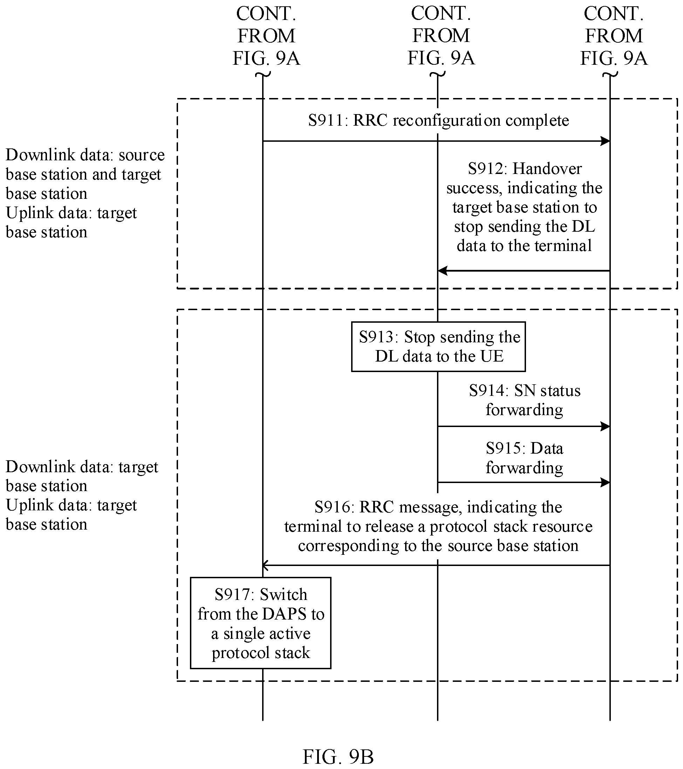

FIG. 9A and FIG. 9B are a schematic flowchart of DAPS-based handover in the case of a single air interface according to an embodiment of this application. As shown in FIG. 9A and FIG. 9B, the method includes the following steps.

S901: A source base station performs handover determining.

Before S901, a terminal establishes the protocol stack corresponding to the source base station shown in FIG. 8, and performs uplink data transmission and downlink data transmission with the source base station based on the protocol stack corresponding to the source base station.

S902: The source base station sends a handover request message to a target base station.

The handover request message includes context information of the terminal, so that the target base station generates configuration information of an air interface resource of the target base station for the terminal.

S903: The target base station sends a handover request acknowledge message to the source base station.

The handover request acknowledge message includes a handover command message generated by the target base station. The handover command message includes the configuration information of the air interface resource generated by the target base station for the terminal. The configuration information of the air interface resource includes configuration information of an air interface resource allocated by the target base station to forwarded data. The forwarded data of the terminal includes terminal data that is received by the source base station from a core network and that is forwarded to the target base station. The target base station sends the forwarded data to the terminal. The configuration information of the air interface resource allocated by the target base station to the forwarded data includes configuration information of one or more of a PDCP layer, an RLC layer, a MAC layer, and a PHY layer. The configuration information of the PDCP layer may include security configuration information and/or a robust header compression (robust header compression, ROHC) profile (profile). The security configuration information may include a security algorithm (for example, an encryption algorithm and/or an integrity protection algorithm) and/or a key-related parameter.

S904: The source base station sends, to the terminal, the handover command message generated by the target base station.

The handover command message includes the configuration information of the air interface resource generated by the target base station for the terminal. The terminal may establish, based on the configuration information, the protocol stack corresponding to the target base station shown in FIG. 8. In this case, the terminal establishes the protocol stack corresponding to the source base station and the protocol stack corresponding to the target base station that are shown in FIG. 8.

Optionally, the handover command message may additionally carry one piece of indication information, where the indication information may correspond to one service bearer of the terminal, and indicates that DAPS handover is to be configured for the service bearer of the terminal. The service bearer may be a data radio bearer (data radio bearer, DRB).

S905: The terminal starts a DAPS.

After the terminal starts, based on the indication information carried in the handover command message, the DAPS operation on the service bearer corresponding to the indication information, because the terminal has not successfully accessed the target base station at this moment, the terminal may continue to use the protocol stack corresponding to the source base station to perform uplink data and downlink data transmission on the service bearer with the source base station, and attempt to access the target base station at the same moment.

S906 and S907 describe a process in which the source base station forwards a sequence number (sequence number, SN) status and data. The source base station may forward, to the target base station, a part of downlink data that is of the terminal and that is received from the core network, and the target base station sends the part of the downlink data to the terminal. The source base station continues to send the other part of the data to the terminal.

S906: The source base station forwards the SN status to the target base station.

S907: The source base station forwards the data to the target base station.

The terminal data forwarded by the source base station to the target base station is a PDCP service data unit (service data unit, SDU). The source base station uniformly allocates PDCP SNs to PDCP SDUs, and forwards, to the target base station, the PDCP SDU and a PDCP SN corresponding to the PDCP SDU, so that after the terminal successfully accesses the target base station, the target base station processes the PDCP SDU based on the received PDCP SN and the configuration information of the PDCP layer, and then sends processed PDCP SDU to the terminal.

S908: The terminal sends a preamble (preamble) to the target base station.

S909: The target base station sends a random access response (random access response, RAR) to the terminal.

S910: The terminal performs a physical uplink shared channel (physical uplink shared channel, PUSCH) switch (switch).

Before the PUSCH switch, the terminal receives an uplink (uplink, UL) grant (grant) allocated by the target base station. For example, for non-contention-based random access, the UL grant is carried in the RAR in S909, and for contention-based random access, the UL grant may be carried in downlink control information (downlink control information, DCI) and sent to the terminal. After receiving the UL grant, the terminal performs the PUSCH switch operation, that is, stops uplink data transmission with the source base station, and starts uplink data transmission with the target base station. In other words, a PUSCH of the terminal is switched from the source base station to the target base station. It should be noted that although the PUSCH of the terminal is switched to the target base station, and the terminal cannot perform uplink data transmission with the source base station, the terminal can still perform downlink data transmission with the source base station.

It can be learned from the foregoing descriptions that in S904 to S910, the terminal and the source base station can perform downlink data transmission and uplink data transmission.

S911: The terminal sends an RRC reconfiguration complete message to the target base station.

After the PUSCH of the terminal is switched to the target base station, the terminal may send the RRC reconfiguration complete message to the target base station on a resource indicated by the UL grant, which means that the terminal has successfully accessed the target base station, and the terminal can perform downlink data transmission with the target base station.

S912: The target base station sends a handover success message to the source base station, to indicate the source base station to stop sending downlink data to the terminal.

It can be learned from the foregoing descriptions that in S911 to S912, the terminal and the source base station can perform downlink data transmission, the terminal and the target base station can perform downlink data transmission, and the terminal and the target base station may perform uplink data transmission.

Specifically, the terminal processes, based on an ROHC profile, a security algorithm, and a key that are configured by the source base station, downlink data received from the source base station, and the terminal processes, based on an ROHC profile, a security algorithm, and a key that are configured by the target base station, downlink data received from the target base station. Then, the terminal sends a processed packet to a public buffer (buffer) of the PDCP layer for reordering, and sequentially submits the processed packet to an upper layer.

S913: The source base station stops sending the downlink (downlink, DL) data to the UE.

After receiving the handover success message sent by the target base station, the source base station stops sending the downlink data to the terminal, and sends remaining downlink data of the terminal on the source base station to the target base station through the following S914 and S915, and the target base station sends the downlink data to the terminal.

S914: The source base station forwards the SN status to the target base station.

S915: The source base station forwards the data to the target base station.

S916: The target base station sends an RRC message (message) to the terminal, to indicate the terminal to release an air interface resource corresponding to the source base station.

S917: The terminal switches from the DAPS to a single active protocol stack.

After the terminal switches to the single active protocol stack, the terminal completely stops transmission with the source base station, including physical uplink control channel (physical uplink control channel, PUCCH) transmission and the like.

It can be learned from the foregoing descriptions that in S913 to S917, the terminal and the target base station perform downlink data transmission and uplink data transmission.

In a solution in FIG. 9A and FIG. 9B, the terminal starts the DAPS, so that the terminal can maintain a connection to the source base station during inter-base-station handover in the case of a single air interface, to ensure that the uplink data transmission and downlink data transmission of the terminal are not interrupted, and improve user experience.

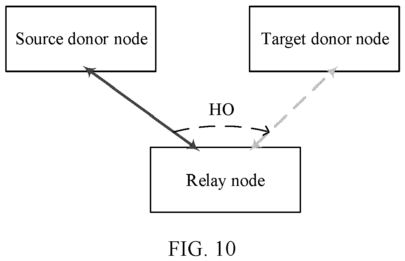

In a relay network, relay node handover may occur. FIG. 10 is a schematic diagram of relay node handover according to an embodiment of this application. As shown in FIG. 10, handing over a relay node from a source donor node to a target donor node may be understood as that the source donor node is a source donor node during the relay node handover, and the target donor node is a target donor node during the relay node handover.

Optionally, the relay node handover may be understood that the relay node uses the relay node and a descendant node of the relay node as a group (group), and the group is handed over from the source donor node to the target donor node. In this embodiment of this application, a node whose parent node changes is referred to as a relay node on which handover occurs or on which handover is performed.

Optionally, the relay node on which handover occurs may be referred to as a handover relay node or a migration relay node.

Optionally, the migration relay node may be a parent node of a terminal. In other words, the migration relay node is directly connected to the terminal, that is, the migration relay node is an access relay node (where in this embodiment of this application, a relay node accessed by the terminal is referred to as an access relay node); or the migration relay node may be connected to the terminal through one or more other relay nodes, that is, the migration relay node is an intermediate relay node (where in this embodiment of this application, a relay node that provides a backhaul service for the terminal is referred to as an intermediate relay node).

Optionally, that the source donor node is a source donor node during the relay node handover may be understood as that a donor node before relay node handover is the source donor node, or the relay node is connected to the source donor node before the handover. A manner of connecting the relay node to the source donor node is not limited in this application. For example, the source donor node may be a parent node of the relay node, or the source donor node may be connected to the relay node through one or more other relay nodes.

Optionally, that the target donor node is a target donor node during the relay node handover may be understood that a donor node after relay node handover is the target donor node, but the relay node handover may finally succeed or fail. This is not limited in this embodiment of this application. A manner of connecting the relay node to the target donor node is not limited in this application. For example, the target donor node may be a parent node of the relay node, or the target donor node may be connected to the relay node through one or more other relay nodes.

Optionally, a source parent node during the relay node handover may be referred to as a source parent node, and a target parent node during the relay node handover may be referred to as a target parent node. It may be understood that, before the relay node handover, the relay node is connected to the source parent node, and the source parent node provides an access service for the relay node. After the relay node handover, the relay node is connected to the target parent node, and the target parent node provides an access service for the relay node.

Optionally, the source parent node may be the source donor node, or the source parent node is connected to the source donor node through m other relay nodes, where m is an integer greater than or equal to 1. The target parent node may be the target donor node, or the target parent node is connected to the target donor node through n other relay nodes, where n is an integer greater than or equal to 1. Optionally, the donor node may include a CU and/or a DU.

Optionally, the source donor node may include a source CU. Optionally, the source donor node may further include a source DU. The target donor node may include a target CU. Optionally, the target donor node may further include a target DU. The source CU is different from the target CU, and the source DU is different from the target DU.

The handover of the relay node from the source donor node to the target donor node may be referred to as inter-donor-node handover or inter-CU handover.

With reference to an IAB scenario, the following further describes the inter-donor-node handover by using an example in which the relay node is an IAB node, the source donor node includes a source IAB donor CU, and the target donor node includes a target IAB donor CU.

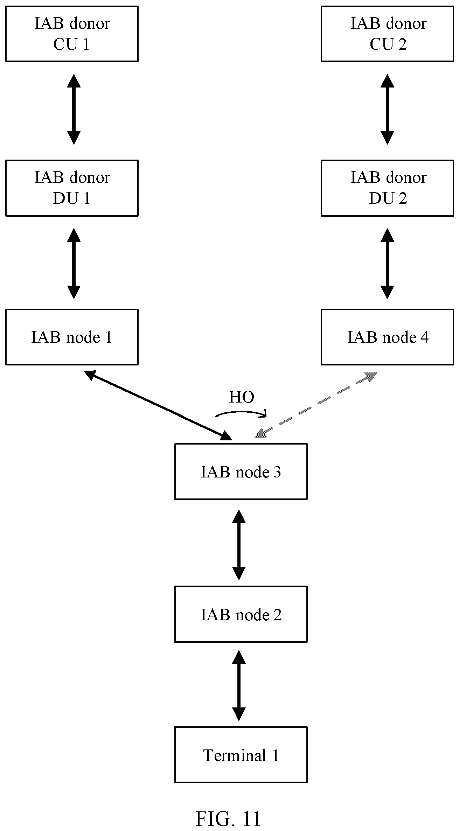

FIG. 11 is a schematic diagram of inter-donor-CU handover according to an embodiment of this application. An example in which the inter-donor-CU handover occurs on the IAB node 3 in FIG. 2 is used. As shown in FIG. 11, before the handover, a parent node of the IAB node 3 (namely, a source parent node of the IAB node 3) is an IAB node 1, a source IAB donor DU is an IAB donor DU 1, and a source IAB donor CU is an IAB IAB donor CU 1. After the handover, a parent node of the IAB node 3 (namely, a target parent node of the IAB node 3) is an IAB node 4, a target IAB donor DU is an IAB donor DU 2, and a target IAB donor CU is an IAB IAB donor CU 2.

The handover of the IAB node 3 may be considered as handover of an MT of the IAB node 3. A source donor node may include the IAB donor CU 1, or a source donor node may include the IAB donor CU 1 and the IAB donor DU 1. A target donor node may include the IAB donor CU 2, or a target donor node may include the IAB donor CU 2 and the IAB donor DU 2.

It should be noted that FIG. 11 is described by using only an example in which inter-donor-node handover occurs on an intermediate IAB node, and the inter-donor-node handover may also occur on an access IAB node (for example, an IAB node 2).

In a relay node scenario, during the inter-donor-node handover, a donor node connected to a relay node that performs handover changes, and the relay node needs to first disconnect from the source donor node (that is, the relay node cannot receive downlink data of a terminal from the source donor node, and cannot send uplink data of the terminal to the source donor node). As a result, the relay node stops serving the terminal, and data transmission of the terminal is interrupted. Then, the terminal detects that an RLF occurs on a link between the relay node and the terminal, and triggers an RRC reestablishment procedure to resume the data transmission. In the process, service transmission of the terminal is interrupted, greatly reducing user experience.

Therefore, the DAPS solution in the case of the single air interface may be applied to an inter-donor-node handover scenario, to ensure that uplink data transmission and downlink data transmission of the relay node playing a role of the terminal are not interrupted. Specifically, the relay node has a function of the DAPS shown in FIG. 8 during the handover. The relay node has two protocol stacks. In one protocol stack, a PHY layer, a MAC layer, and an RLC layer of the relay node correspond to the source parent node of the relay node. In another protocol stack, the PHY layer, the MAC layer, and the RLC layer of the relay node correspond to the target parent node of the relay node. The relay node includes one PDCP entity, and the PDCP entity is associated with two RLC entities. One RLC entity corresponds to the source parent node, and the other RLC entity corresponds to the target parent node.

For example, the relay node may perform an action performed by the terminal in FIG. 9A and FIG. 9B, the source donor node may perform an action performed by the source base station in FIG. 9A and FIG. 9B, and the target donor node may perform an action performed by the target base station in FIG. 9A and FIG. 9B.

After the DAPS solution in the case of the single air interface is applied to the inter-donor-node handover scenario, it can be ensured that transmission of data (which may be understood as data terminated at the relay node, for example, CAM data) of the relay node is not interrupted during the relay node handover. In addition, the relay node may provide a backhaul service (that is, serve as an access relay node or an intermediate relay node) for the terminal during the handover. Similar to the DAPS solution, the relay node may have both a peer protocol stack of the source parent node and a peer protocol stack of the target parent node, so that during the handover, the relay node may transmit data (including the uplink data and the downlink data) between the terminal and the source donor node or transmit data (including uplink data and downlink data) between the terminal and the target donor node.

However, for the terminal, the terminal is always connected to the relay node, handover does not occur on the terminal, and the terminal cannot learn whether the data is from the source donor node or the target donor node. To be specific, for downlink data, the terminal cannot learn whether the downlink data received from the relay node is from the source donor node or the target donor node; for uplink data, the terminal cannot learn whether the sent uplink data is sent by the relay node to the source donor node or the target donor node. For ease of description, data received from or sent to the source donor node is briefly referred to as data of the source donor node, and data received from or sent to the target donor node is briefly referred to as data of the target donor node.

Configuration information required for processing the data of the source donor node is different from that required for processing the data of the target donor node. In other words, the data of the source donor node needs to be processed based on configuration information of the source donor node, and the data of the target donor node needs to be processed based on configuration information of the target donor node. Because the terminal cannot learn whether the configuration information of the source donor node or the configuration information of the target donor node needs be used for processing a data packet, a service of the terminal is interrupted.

For example, for downlink data, the terminal cannot learn whether a received data packet is from the source donor node or the target donor node. As a result, the terminal cannot parse the received data packet by using correct configuration information. Once the terminal fails to parse the data packet, a packet loss is caused, and the service is interrupted. For uplink data, the terminal cannot learn whether an uplink data packet is to be sent to the source donor node or the target donor node. As a result, the terminal cannot process the uplink data by using correct configuration information. Once the donor node fails to parse the uplink data, a packet loss occurs, and the service of the terminal is interrupted.

In addition, even if the DAPS solution is not applied to the inter-donor-node handover scenario, that is, during the inter-donor-node handover, the relay node first disconnects from the source donor node (that is, cannot transmit the uplink data and/or the downlink data of the terminal with the source donor node), the relay node may still buffer the downlink data that is previously received from the source donor node but has not been sent to the terminal. In this case, during the handover, the relay node may further continue to send, to the terminal, the previously buffered downlink data that is received from the source donor node. After the relay node is successfully handed over to the target donor node, the relay node may receive the downlink data from the target donor node, and send, to the terminal, the downlink data received from the target donor node. Therefore, due to the inter-donor-node handover of the relay node, the terminal may receive two types of downlink data, namely, the downlink data of the source donor node and the downlink data of the target donor node. The terminal cannot learn whether the configuration information of the source donor node or the configuration information of the target donor node needs to be used for processing the data. As a result, the service of the terminal is interrupted.

Based on this, an embodiment of this application provides a solution, to reduce a probability of service interruption of the terminal in the inter-donor-node handover scenario, and improve user experience. In this solution, the access relay node of the terminal may configure two logical channels (logical channels, LCHs) for one bearer (for example, one DRB) of the terminal. One LCH is for transmitting data corresponding to the source donor node, and the other LCH is for transmitting data corresponding to the target donor node. The terminal may distinguish, based on different LCHs, between the data corresponding to the source donor node and the data corresponding to the target donor node, to ensure that the terminal processes the data by using correct configuration information, reduce the probability of the service interruption, and improve service transmission continuity.

Specifically, in this embodiment of this application, for one bearer of the terminal, there is a GTP-U tunnel (referred to as a GTP-U tunnel corresponding to the source donor node below) between the access relay node and the source donor node, and there is another GTP-U tunnel (referred to as a GTP-U tunnel corresponding to the target donor node below) between the access relay node and the target donor node. For one bearer of the terminal, there are two LCHs on the terminal. One LCH of the terminal corresponds to the GTP-U tunnel corresponding to the source donor node, and the other LCH of the terminal corresponds to the GTP-U tunnel corresponding to the target donor node.

The following describes a dual-LCH user plane protocol stack during inter-donor-node handover in this embodiment of this application.

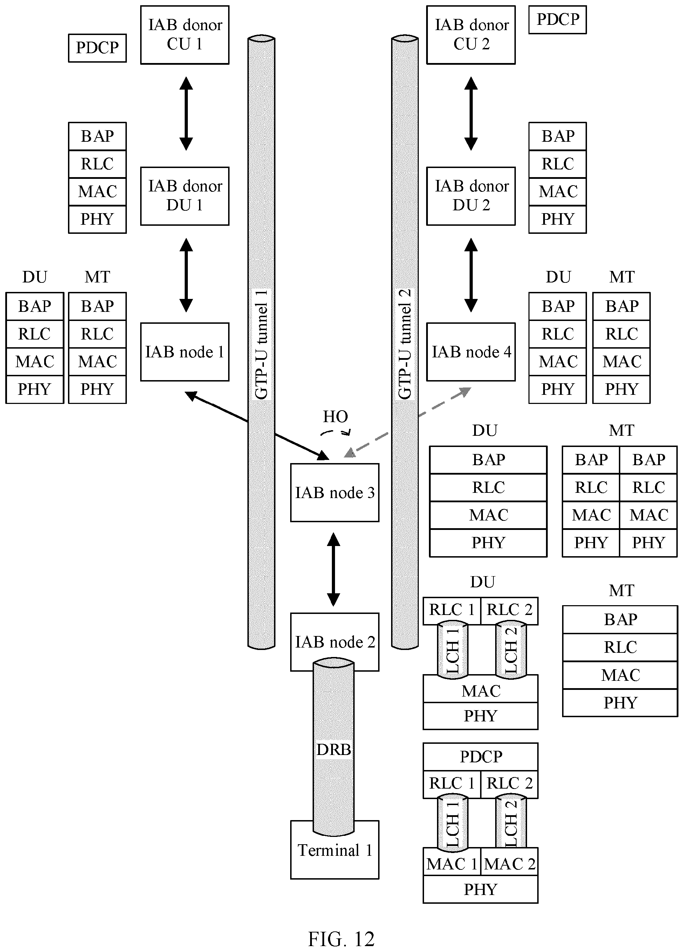

FIG. 12 is a schematic diagram of a dual-LCH user plane protocol stack according to an embodiment of this application.

A terminal has one protocol stack, including a PHY layer, a MAC layer, an RLC layer, and a PDCP layer. The RLC layer, the MAC layer, and the PHY layer of the terminal correspond to an RLC layer, a MAC layer, and a PHY layer of a parent node of the terminal, and the PDCP layer of the terminal corresponds to a PDCP layer of a source donor node (namely, an IAB donor CU 1 in FIG. 12) and a PDCP layer of a target donor node (namely, an IAB donor CU 2 in FIG. 12).

Optionally, the PDCP layer includes a PDCP entity, the RLC layer includes an RLC entity, the MAC layer includes a MAC entity, and the PHY layer includes a PHY entity. The MAC entity and the PHY entity of the terminal are configured at a terminal granularity, and the terminal has one MAC entity and one PHY entity. The PDCP entity of the terminal is configured at a bearer granularity. For one bearer of the terminal, the terminal may have one corresponding PDCP entity.

Specifically, for one bearer, the terminal has only one PDCP entity, but PDCP configuration information corresponding to the source donor node and PDCP configuration information corresponding to the target donor node are configured for the PDCP entity, which may be understood as that the PDCP entity may use or maintain both the PDCP configuration information corresponding to the source donor node and the PDCP configuration information corresponding to the target donor node, where the PDCP configuration information corresponding to the source donor node may be for processing data (including uplink data and/or downlink data) corresponding to the source donor node, and the PDCP configuration information corresponding to the target donor node may be for processing data (including uplink data and/or downlink data) corresponding to the target donor node.

It may be understood that the terminal may have two sets of PDCP configuration information, one set of PDCP configuration information corresponds to the PDCP configuration information corresponding to the source donor node, and the other set of PDCP configuration information corresponds to the PDCP configuration information corresponding to the target donor node.

That the configuration information corresponds to each other may be understood as that the configuration information may be used together or used in pairs.

Optionally, that the configuration information corresponds to each other may include that the configuration information is the same. For example, one set of PDCP configuration information of the terminal is the same as the PDCP configuration information corresponding to the source donor node, and/or the other set of PDCP configuration information of the terminal is the same as the PDCP configuration information corresponding to the target donor node. Optionally, that the configuration information corresponds to each other may include that the configuration information is different. For example, one set of PDCP configuration information of the terminal is different from the PDCP configuration information corresponding to the source donor node, and/or the other set of PDCP configuration information of the terminal is different from the PDCP configuration information corresponding to the target donor node.

Optionally, the PDCP configuration information that is of the terminal and that corresponds to the PDCP configuration information corresponding to the source donor node may be allocated by the source donor node. For example, the source donor node sends, to the terminal through a relay node, the PDCP configuration information corresponding to the PDCP configuration information corresponding to the source donor node. The PDCP configuration information that is of the terminal and that corresponds to the PDCP configuration information corresponding to the source donor node may be referred to as PDCP configuration information allocated by the source donor node or the PDCP configuration information corresponding to the source donor node. Similarly, the PDCP configuration information that is of the terminal and that corresponds to the PDCP configuration information corresponding to the target donor node may be allocated by the target donor node. For example, the target donor node sends, to the terminal through the relay node, the PDCP configuration information corresponding to the PDCP configuration information corresponding to the target donor node. The PDCP configuration information that is of the terminal and that corresponds to the PDCP configuration information corresponding to the target donor node may be referred to as PDCP configuration information allocated by the target donor node or the PDCP configuration information corresponding to the target donor node.

Specifically, for the PDCP entity, one or more functions of header compression (header compression), header decompression (header decompression), security processing (security processing), add header (add header), remove header (remove header), and the like are independent of each other for the source donor node and the target donor node. In the PDCP entity, a reordering function is common for the source donor node and the target donor node. For details, refer to descriptions of the PDCP entity in FIG. 8.

Different from FIG. 7, one PDCP entity of the terminal may correspond to two RLC entities, one RLC entity corresponds to the source donor node, and the other RLC entity corresponds to the target donor node. The terminal has one MAC entity. There is one logical channel between the MAC entity and the RLC entity corresponding to the source donor node, and there is another logical channel between the MAC entity and the RLC entity corresponding to the target donor node. As shown in FIG. 12, one PDCP entity of the terminal corresponds to two RLC entities, and the terminal has only one MAC entity. There is an LCH 1 between the MAC entity and one RLC entity, namely, an RLC 1, and there is an LCH 2 between the MAC entity and the other RLC entity, namely, an RLC 2. One RLC entity of the terminal is configured to process the data corresponding to the source donor node, and an LCH corresponding to the RLC entity is for transmitting the data corresponding to the source donor node. The other RLC entity of the terminal is configured to process the data corresponding to the target donor node, and an LCH corresponding to the other RLC entity is for transmitting the data corresponding to the target donor node. As shown in FIG. 12, the RLC 1 of the terminal is configured to process the data corresponding to the source donor node, the LCH 1 is for transmitting the data corresponding to the source donor node, the RLC 2 of the terminal is configured to process the data corresponding to the target donor node, and the LCH 2 is for transmitting the data corresponding to the target donor node.

A protocol stack on a DU of an access relay node is the same as the protocol stack of the terminal, and the "same" herein may be understood as "peered". To be specific, the DU of the access relay node has two RLC entities, one MAC entity, and one PHY entity that are peered to those of the terminal, the two RLC entities are peered to the two RLC entities of the terminal, there is one LCH between each of the two RLC entities and the MAC entity, and the two LCHs of the DU of the access relay node are peered to the two LCHs of the terminal. As shown in FIG. 12, for one bearer of the terminal, an IAB node 2 has two RLC entities, namely, an RLC 1 and an RLC 2. The RLC 1 of the IAB node 2 is peered to the RLC 1 of the terminal, and the RLC 2 of the IAB node 2 is peered to the RLC 2 of the terminal. There is an LCH, namely, an LCH 1, between the RLC 1 and a MAC entity of the IAB node 2. Downlink transmission is used as an example. The IAB node 2 sends data on the LCH 1 of the IAB node 2, and the terminal 1 receives the data on the LCH 1 of the terminal 1. There is an LCH, namely, an LCH 2, between the RLC 2 and the MAC entity of the IAB node 2. Downlink transmission is used as an example. The IAB node 2 sends data on the LCH 2 of the IAB node 2, and the terminal 1 receives the data on the LCH 2 of the terminal 1.

Similar to a case of the terminal, one RLC entity on the DU of the access relay node is configured to process the data corresponding to the source donor node, and an LCH corresponding to the RLC entity is for transmitting the data corresponding to the source donor node. The other RLC entity on the DU of the access relay node is configured to process the data corresponding to the target donor node, and an LCH corresponding to the other RLC entity is for transmitting the data corresponding to the target donor node. For details, refer to content of the RLC entity and the LCH of the terminal. Details are not described herein again. It should be noted that the LCHs on the terminal and the access relay node may be used together, used in pairs, or used correspondingly, and the LCHs on the terminal and the access relay node (or configuration information of the LCHs on the terminal and the access relay node) may be the same or different. This is not limited in this embodiment of this application.

Corresponding GTP-U tunnels may be established between the DU of the access relay node and the source donor node and between the DU of the access relay node and the target donor node at a granularity of the bearer of the terminal. For example, for one bearer of the terminal, a corresponding GTP tunnel is established between the IAB node 2 and the IAB donor CU 1, and a corresponding GTP tunnel is also established between the IAB node 2 and the IAB donor CU 2. As shown in FIG. 12, for one bearer of the terminal, there is a GTP-U tunnel, namely, a GTP-U 1, between the IAB donor CU 1 and a DU of the IAB node 2. The GTP-U 1 is for transmitting the data corresponding to the source donor node. There is another GTP-U tunnel, namely, a GTP-U 2, between the IAB donor CU 2 and the DU of the IAB node 2. The GTP-U 2 is for transmitting the data corresponding to the target donor node.

One LCH on the access relay node corresponds to one GTP-U tunnel. In other words, the LCH and the GTP-U tunnel are in a one-to-one correspondence. In an uplink direction, data received through one LCH is mapped to a GTP-U tunnel corresponding to the LCH. In a downlink direction, data received through one GTP-U tunnel is mapped to an LCH corresponding to the GTP-U tunnel. Using FIG. 12 as an example, on the IAB node 2, the LCH 1 and the GTP-U 1 are in a one-to-one correspondence, and the LCH 2 and the GTP-U 2 are in a one-to-one correspondence. In an uplink direction, data received through the LCH 1 is mapped to the GTP-U 1 and sent to the IAB donor CU 1, and data received through the LCH 2 is mapped to the GTP-U 2 and sent to the IAB donor CU 2. In a downlink direction, data received from the IAB donor CU 1 through the GTP-U 1 is mapped to the LCH 1, and data received from the IAB donor CU 2 through the GTP-U 2 is mapped to the LCH 2.

For example, transmission of the uplink data corresponding to the source donor node (namely, the IAB donor CU 1) in FIG. 12 is used as an example. On the terminal 1, the PDCP entity may process the uplink data by using PDCP configuration information corresponding to the IAB donor CU 1. Then, the PDCP entity sends, to the RLC 1 of the terminal 1, uplink data that is processed by using the PDCP configuration information corresponding to the source donor node. The RLC 1 of the terminal 1 sends the uplink data to the MAC entity of the terminal 1 through the LCH 1. The MAC entity of the terminal 1 may encapsulate the data received from the LCH 1 of the terminal 1, and add an identifier of the LCH 1 of the terminal 1 to a MAC header. The PHY entity of the terminal 1 processes the data, and sends processed data to the IAB node 2. Correspondingly, after the IAB node 2 receives the data from the terminal 1, the MAC layer of the IAB node 2 may parse the MAC header, to obtain the identifier of the LCH 1 of the terminal. The IAB node 2 sends the data to the RLC 1 through an LCH that is peered to the LCH 1 of the terminal, namely, the LCH 1 of the IAB node 2. The IAB node 2 extracts the uplink data of the terminal from the RLC 1, maps the uplink data to the corresponding GTP-U tunnel 1, and further sends, to the IAB donor CU 1 through a backhaul link based on current route configuration information, the data that is mapped to the GTP-U tunnel 1. After extracting the uplink data of the terminal from the GTP-U tunnel 1, the IAB donor CU 1 processes the uplink data by using the PDCP configuration information corresponding to the IAB donor CU 1.

Transmission of the uplink data corresponding to the target donor node (namely, the IAB donor CU 2) is similar to the transmission of the uplink data corresponding to the source donor node. For details, refer to content of the transmission of the uplink data corresponding to the source donor node.

For another example, transmission of the downlink data corresponding to the source donor node (namely, the IAB donor CU 1) in FIG. 12 is used as an example. The IAB donor CU 1 processes the downlink data by using PDCP configuration information corresponding to the IAB donor CU 1, and then the IAB donor CU 1 sends the downlink data to the DU of the IAB node 2 through the GTP-U tunnel 1. After receiving the downlink data from the GTP-U tunnel 1, the DU of the IAB node 2 maps the downlink data to the RLC 1 corresponding to the GTP-U tunnel 1. The RLC 1 processes the downlink data, and sends processed downlink data to the MAC entity through the LCH 1. The MAC entity may add, to a MAC header, an identifier of an LCH that is on the terminal 1 (namely, an identifier of the LCH 1 of the terminal 1) and that is peered to the LCH 1 of the DU of the IAB node 2. After being processed at a PHY layer of the DU of the IAB node 2, the downlink data is sent to the terminal 1. Correspondingly, after the terminal 1 receives the data from the DU of the IAB node 2, the MAC entity of the terminal 1 may parse the MAC header, to obtain the identifier of the LCH 1 of the terminal 1. Then, the terminal 1 sends the data to the RLC 1 of the terminal 1 through the LCH 1 of the terminal 1. The RLC 1 of the terminal 1 processes the data, and sends processed data to the corresponding PDCP entity. The PDCP entity processes the downlink data by using the configuration information corresponding to the source donor node.

Transmission of the downlink data corresponding to the target donor node (namely, the IAB donor CU 2) is similar to the transmission of the downlink data corresponding to the source donor node. For details, refer to content of the transmission of the uplink data corresponding to the source donor node.

An MT of the access relay node has a BAP entity, an RLC entity, a MAC entity, and a PHY entity.

A DU of a migration relay node has a protocol stack peered to that of an MT of a child node. As shown in FIG. 12, a DU of an IAB node 3 has a BAP entity, an RLC entity, a MAC entity, and a PHY entity that are peered to those of an MT of the IAB node 2.

Optionally, the source donor node may configure a routing rule and/or a bearer mapping rule on a path between the access relay node and the source donor node, and the target donor node may configure a routing rule and/or a bearer mapping rule on a path between the access relay node and the target donor node, where the routing rule and/or the bearer mapping rule are/is used for signaling/data transmission.

To ensure that both the data corresponding to the source donor node and the data corresponding to the target donor node can be transmitted on a path between the access relay node and the migration relay node, two sets of BAP configurations need to be supported on one or more MTs and/or DUs of one or more nodes (including the access relay node, the migration relay node, and one or more other relay nodes between the access relay node and the migration relay node) on the path between the access relay node and the migration relay node. One set of BAP configurations is provided by the source donor node, including a routing configuration and/or a bearer mapping configuration, and the other set of BAP configurations is provided by the target donor node, including a routing configuration and/or a bearer mapping configuration.

In an example, the access relay node is not the migration relay node. Because a parent node of the migration relay node changes, two sets of BAP configurations are configured on the migration relay node. One set of BAP configurations is the routing configuration and/or the bearer mapping configuration provided by the source donor node, and the other set of BAP configurations is the routing configuration and/or the bearer mapping configuration provided by the target donor node. Because a parent node of the access relay node does not change, bearer mapping on a link between the access relay node and the parent node may remain unchanged, but a routing configuration on the link between the access relay node and the parent node may change (for example, a BAP address of the access relay node in the routing configuration changes). Therefore, two sets of BAP configurations are configured on the access relay node, one set of BAP configurations is the routing configuration provided by the source donor node, and the other set of BAP configurations is the routing provided by the target donor node.

Optionally, the one or more MTs (or DUs) of the one or more nodes may have only one BAP entity, and the BAP entity supports the two sets of BAP configurations. Alternatively, the one or more MTs (or DUs) may have two BAP entities, one BAP entity supports the BAP configuration provided by the source donor node, and the other BAP entity supports the BAP configuration provided by the target donor node.

Optionally, the target donor node may separately send indication information to the one or more nodes through the source donor node. Each piece of indication information indicates a corresponding node to start two sets of BAP configuration information. Starting may be understood as activating or enabling, and starting two sets of BAP configuration information may be understood as starting dual configurations of a BAP layer. Alternatively, the source donor node may separately send indication information to the one or more nodes.

For a downlink, after receiving the downlink data from the source donor node, a node in the one or more nodes sends the downlink data to a next-hop node of the node based on the BAP configuration of the source donor node; and/or after receiving the downlink data from the target donor node, a node in the one or more nodes sends the downlink data to a next-hop node of the node based on the BAP configuration of the target donor node. Data transmission in an uplink direction is similar, and is not described herein again.

An MT of the migration relay node has protocol stacks similar to a DAPS. That the protocol stacks are similar to the DAPS may be understood as that the MT of the migration relay node has a protocol stack peered to that of a source parent node and a protocol stack peered to that of a target parent node. Source downlink data received by the migration relay node from the source parent node may be processed by using the protocol stack corresponding to the source parent node, and target downlink data received by the migration relay node from the target parent node may be processed by using the protocol stack corresponding to the target parent node. For example, as shown in FIG. 12, an MT of the IAB node 3 has BAP entities, RLC entities, MAC entities, and PHY entities that are respectively peered to those of an IAB node 1 and an IAB node 4. It should be noted that the migration relay node may have only one BAP entity or two BAP entities. For details, refer to the foregoing descriptions.

Optionally, there may be one or more other relay nodes between the access relay node and the migration relay node. In this case, on the link between the access relay node and the migration relay node, a DU of each node has a BAP entity, an RLC entity, a MAC entity, and a PHY entity that are peered to those of an MT of a child node. This is not limited in this embodiment of this application.

Optionally, the access relay node and the migration relay node may be a same node, that is, handover occurs on the access relay node. In this case, the access relay node has the protocol stack of the DU of the IAB node 2 and the protocol stack of the MT of the IAB node 3 in FIG. 12.

As shown in FIG. 12, two adjacent nodes between the source parent node and the source donor node or between the target parent node and the target donor node have peer protocol stacks. For details, refer to content in FIG. 7. Details are not described herein again.

In the foregoing embodiment, for the downlink, the access relay node distinguishes, based on different GTP-U tunnels, between the data corresponding to the source donor node and/or the data corresponding to the target donor node, to map the data to different LCHs and send the data to the terminal, so that the terminal distinguishes between the data corresponding to the source donor node and/or the data corresponding to the target donor node. For the uplink, the access relay node distinguishes, based on different LCHs, between the data corresponding to the source donor node and/or the data corresponding to the target donor node, to map the data to different GTP-U tunnels and send the data to the source donor node and/or the target donor node.

In another possible implementation, for the downlink, a downlink data packet may carry routing identifier (routing ID) information, and the access relay node may distinguish, based on the routing identifier information, between the data corresponding to the source donor node and/or the data corresponding to the target donor node.

Specifically, the routing identifier information includes a BAP address of the access relay node and a path identifier (path ID), and the access relay node may distinguish, based on the BAP address carried in the routing identifier information, whether the downlink data packet is from the source donor node or the target donor node, to further map the downlink data packet to different LCHs and send the downlink data packet to the terminal. The source donor node and the target donor node respectively allocate two different BAP addresses to the access relay node, routing identifier information in a downlink data packet sent by the source donor node carries a BAP address allocated by the source donor node to the access relay node, and routing identifier information in a downlink data packet sent by the target donor node carries a BAP address allocated by the target donor node to the access relay node.

To ensure that the BAP addresses allocated by the source donor node to the access relay node and the BAP address allocated by the target donor node to the access relay node are different, in a handover preparation process, the source donor node may send, to the target donor node, the BAP address allocated by the source donor node to the access relay node, so that the target donor node generates the BAP address different from the BAP address allocated by the source donor node to the access relay node. In an example, the source donor node may include the BAP address allocated by the source donor node to the access relay node in a handover request message, and send the handover request message to the target donor node. The target donor node may include the BAP address allocated by the target donor node to the access relay node in a handover command message (which may be referred to as an RRC reconfiguration message), and send the handover command message to the access relay node through the source donor node.

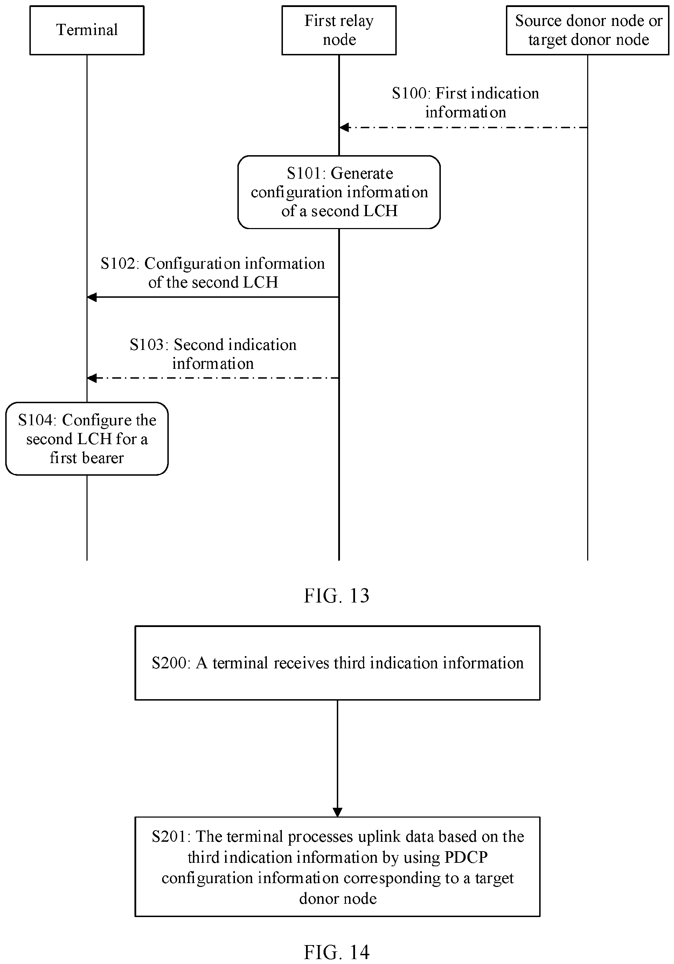

The following describes the solutions provided in this application with reference to FIG. 13 to FIG. 16. Content in FIG. 13 to FIG. 16 and content of the protocol stack in FIG. 12 may be mutually referenced.

In methods in FIG. 13, FIG. 14, FIG. 15, and FIG. 16, a first relay node is an access relay node of a terminal (or may be understood as that a first relay node is a parent node of a terminal), and the first relay node may be referred to as the access relay node. Inter-donor-node handover may occur on the first relay node, to be specific, the first relay node is handed over from a source donor node to a target donor node. Alternatively, inter-donor-node handover occurs on a relay node (which may be referred to as a second relay node) on a link between the first relay node and a source donor node, to be specific, the first relay node is connected to the second relay node, and the second relay node is handed over from the source donor node to a target donor node. For content of the inter-donor-node handover, refer to content in FIG. 10 and FIG. 11. The inter-donor-node handover in FIG. 11 is used as an example. The first relay node may be the IAB node 2 in FIG. 11, the second relay node may be the IAB node 3 in FIG. 11, and the IAB node 3 is handed over from the IAB donor CU 1 to the IAB donor CU 2.

FIG. 13 is a schematic flowchart of an LCH configuration method according to an embodiment of this application. As shown in FIG. 13, the method in FIG. 13 includes the following steps.

S100: A source donor node or a target donor node sends first indication information to a first relay node.

S100 is optional.

The first relay node may generate, based on the first indication information, configuration information of a second LCH corresponding to a first bearer. The second LCH is for transmitting PDCP data corresponding to the target donor node.

Optionally, the first indication information may be carried in a first message.

Optionally, before S100, the first bearer of a terminal corresponds to a first LCH, and the first LCH is for transmitting PDCP data corresponding to the source donor node.

Optionally, in this application, the first bearer may be a first data radio bearer (data radio bearer, DRB).

For example, before the first relay node or a second relay node performs inter-donor-node handover, the first relay node has configured the first LCH for the terminal, where the first LCH is for transmitting the PDCP data corresponding to the source donor node.

Specifically, before the first relay node or the second relay node performs inter-donor-node handover, the first relay node sends air interface configuration information of the first bearer to the terminal through the source donor node, where the air interface configuration information of the first bearer includes configuration information of a bottom layer (which may include one or more of an RLC layer, a MAC layer, a PHY layer, and the first LCH) generated by the first relay node for the terminal.

Optionally, the first LCH may be the LCH 1 of the terminal in FIG. 12, and the second LCH may be the LCH 2 of the terminal in FIG. 12. For details, refer to content in FIG. 12.

There may be a plurality of types of content indicated by the first indication information. The following provides descriptions with reference to several examples.

In an example, the first indication information may be at a bearer granularity. In other words, the first indication information is in a one-to-one correspondence with one bearer of the terminal. The first indication information may indicate the first relay node to generate the configuration information of the second LCH corresponding to one bearer, may indicate that data transmission of one bearer is not to be interrupted during the inter-donor-node handover, may indicate that DAPS handover is to be configured for one bearer, or may indicate other content. This is not limited in this embodiment of this application.

In this example, optionally, the first indication information may include an identifier of one bearer, and the bearer includes the first bearer.

In this example, the first relay node receives a plurality of pieces of first indication information, where each piece of first indication information is in a one-to-one correspondence with one bearer, and the first relay node may generate the configuration information of the second LCH for each of one or more bearers of the terminal. In this application, the first bearer is used as an example for description. A person skilled in the art may learn that content in this embodiment of this application is also applicable to a case of one or more other bearers.

In another example, the first indication information may be at a terminal granularity. In other words, the first indication information does not indicate a specific bearer. The first indication information may indicate the first relay node to generate the configuration information of the second LCH for each bearer of the terminal, may indicate that data transmission of the terminal is not to be interrupted during the inter-donor-node handover, may indicate that DAPS handover is to be configured for the terminal, or may indicate other content. This is not limited in this embodiment of this application.

In this example, optionally, the first indication information may not include an identifier of the bearer.

In this example, the first relay node may generate the configuration information of the second LCH for each bearer (including the first bearer) of the terminal. In this application, the first bearer is used as an example for description. A person skilled in the art may learn that content in this embodiment of this application is also applicable to a case of one or more other bearers.

The first indication information may be carried in the first message. There may be a plurality of cases for a time point at which the source donor node or the target donor node sends the first message. The following provides descriptions with reference to several examples.

It should be noted that, if the inter-donor-node handover occurs on the first relay node, the first relay node may sense the inter-donor-node handover. For example, the first relay node may receive a handover command from the target donor node through the source donor node, and the first relay node may initiate a random access request to the target donor node. Then, after accessing the target donor node, the first relay node may establish a connection to the target donor node. If the inter-donor-node handover occurs on the second relay node, the second relay node may sense the inter-donor-node handover. A person skilled in the art may understand that the actions performed by the first relay node may alternatively be performed by the second relay node. However, when the inter-donor-node handover occurs on the second relay node, the first relay node may not sense the handover. However, after the second relay node accesses the target donor node, and after the second relay base station establishes a connection to the target donor node, descendant nodes of the second relay node sequentially establish connections to the target donor node, to provide a data transmission service for the terminal. Therefore, the first relay node may sense establishment of the connection to the target donor node. Therefore, regardless of whether the inter-donor-node handover occurs the first relay node or the second relay node, the first relay node establishes the connection to the target donor node. The establishment of the connection herein may include establishment of one or both of an F1 interface and a GTP-U tunnel.

In an example, after establishing the connection to the target donor node, the first relay node may receive the first message from the target donor node.

Optionally, in this example, the first message may be a UE context setup request message.

In another example, before establishing the connection to the target donor node, the first relay node may receive the first message from the source donor node.

Specifically, when the source donor node determines that the inter-donor-node handover is to occur on the first relay node or the second relay node, the source donor node may send a handover request message to the target donor node. Before the source donor node performs handover determining and sends the handover request message to the target donor node or after the source donor node sends the handover request message to the target donor node, the first relay node receives the first message from the source donor node.

Optionally, in the another example, the first message may be a UE context modification request message.

S101: The first relay node generates the configuration information of the second LCH.

Optionally, S100 may exist, and the first relay node generates the configuration information of the second LCH based on the first indication information.

Optionally, S100 may not exist. In an example, after the first relay node receives a connection establishment request from the target donor node, the first relay node generates the configuration information of the second LCH. Optionally, the connection establishment request may be a GTP tunnel establishment request and/or an F1 interface establishment request, or the connection establishment request may have another name. This is not limited in this embodiment of this application.

In the foregoing example, after receiving the connection establishment request from the target donor node, the first relay node may generate the configuration information of the second LCH for each bearer (including the first bearer) of the terminal. Herein, the first bearer is used as an example for description. A person skilled in the art may learn that content in this embodiment of this application is also applicable to a case of one or more other bearers.

S102: The first relay node sends the configuration information of the second LCH to the terminal.

It may be understood that, through S101 and S102, the first relay node configures the second LCH for the first DRB of the terminal, so that the first bearer corresponds to the first LCH and the second LCH.

Optionally, that the first bearer corresponds to the first LCH and the second LCH may be understood as that the first LCH and the second LCH are configured for the first bearer, the first bearer is associated with the first LCH and the second LCH, the first bearer may use the first LCH and the second LCH, or the first bearer has a capability of using the first LCH and the second LCH, but actually whether the first bearer uses the first LCH and the second LCH depends on whether there is the PDCP data corresponding to the source donor node and the PDCP data corresponding to the target donor node. This is not limited in this embodiment of this application. For example, in a period of time, there is only the PDCP data corresponding to the source donor node, and there is no PDCP data corresponding to the target donor node. Therefore, only the first LCH is used, and the second LCH is not used. Alternatively, that the first bearer corresponds to the first LCH and the second LCH may be understood as that when the first bearer uses the second LCH, the first LCH is maintained, not released, still in an active state, or the like.

Optionally, that the first bearer corresponds to the first LCH and the second LCH may be understood as that the first bearer corresponds to both the first LCH and the second LCH. To be specific, at one or more time points or in a period of time, the first bearer corresponds to both the first LCH and the second LCH.

Optionally, the configuration information of the second LCH includes one or more of an identifier of the second LCH, a priority of the second LCH, and a bearer identifier of the first DRB.

The first LCH is for transmitting the PDCP data corresponding to the source donor node, and the second LCH is for transmitting the PDCP data corresponding to the target donor node.

Optionally, the first LCH corresponds to a GTP-U tunnel between the first relay node and the source donor node, and the second LCH corresponds to a GTP-U tunnel between the first relay node and the target donor node. For details, refer to content in FIG. 12. Details are not described herein again.

Optionally, the first LCH corresponds to a BAP address allocated by the source donor node to the first relay node, and the second LCH corresponds to a BAP address allocated by the target donor node to the first relay node. For details, refer to content in FIG. 12. Details are not described herein again.

In a possible implementation, S102 may include: The first relay node sends the configuration information of the second LCH to the terminal through the target donor node.

Specifically, the first relay node may send the configuration information of the second LCH to the target donor node, and the target donor node generates a second message, where the second message includes a third message, and the third message includes the configuration information of the second LCH. The target donor node sends the second message to the source donor node, and then the source donor node sends the third message to the terminal through the first relay node. For example, the third message may be an RRC reconfiguration message, and may be referred to as a handover command. The second message may be a handover request response message.

The source donor node forwards the third message to the target donor node, to avoid a case in which the target donor node cannot send a message to the terminal by itself before the target donor node and the terminal perform security negotiation based on PDCP configuration information corresponding to the target donor node.

Optionally, in addition to the configuration information of the second LCH, the third message may further include one or more of the air interface configuration information of the first bearer, PDCP configuration information corresponding to the source donor node, the PDCP configuration information corresponding to the target donor node, and the BAP address allocated by the target donor node to the first relay node. The air interface configuration information of the first bearer and the PDCP configuration information corresponding to the source donor node may be sent by the first relay node or the source donor node to the target donor node, and the PDCP configuration information corresponding to the target donor node may be generated by the target donor node. The following provides descriptions.

Optionally, the third message may include the air interface configuration information of the first bearer. Optionally, the air interface configuration information of the first bearer may include configuration information of the first LCH. For details, refer to the foregoing descriptions. The third message includes the configuration information of the second LCH and the air interface configuration information of the first bearer. For an air interface configuration, the terminal may replace, in a full configuration manner, an existing air interface configuration between the terminal and the first relay node with the received configuration information of the second LCH and the air interface configuration information of the first bearer, so that the terminal performs data transmission with the first relay node based on an updated air interface configuration. Two LCHs are configured for the first bearer, where one is for transmitting the data corresponding to the source donor node, and the other is for transmitting the data corresponding to the target donor node, to ensure that service transmission of the terminal is not interrupted during first relay node handover or second relay node handover.

Optionally, the third message may not include the air interface configuration information of the first bearer, but include the configuration information of the second LCH. In this case, after the terminal receives the third message, for an air interface configuration of the first bearer, the terminal may add the second LCH based on the existing air interface configuration of the first bearer in an incremental configuration manner, to save a communication resource.

Optionally, the third message may include the PDCP configuration information corresponding to the target donor node, but may not include the PDCP configuration information corresponding to the source donor node. After receiving the third message, the terminal adds, to a PDCP entity of the first bearer, the PDCP configuration information corresponding to the target donor node. It may be understood that before receiving the third message, the PDCP entity of the first DRB of the terminal includes the PDCP configuration information corresponding to the source donor node. After receiving the third message, for a PDCP configuration of the first bearer, the terminal may add the PDCP configuration information corresponding to the target donor node based on the original PDCP entity of the first bearer in an incremental configuration manner. In addition, the third message includes the configuration information of the second LCH and the PDCP configuration information corresponding to the target donor node, which may implicitly indicate that the configuration information of the second LCH corresponds to the PDCP configuration information corresponding to the target donor node. To be specific, in a downlink direction, data received by the terminal through the second LCH is processed by using the PDCP configuration information corresponding to the target donor node; in an uplink direction, the terminal may transmit, through the second LCH, uplink data that is processed by using the PDCP configuration information corresponding to the target donor node.

Optionally, the third message may include the PDCP configuration information corresponding to the target donor node and the PDCP configuration information corresponding to the source donor node. Therefore, for a PDCP configuration of the first bearer, the terminal may replace, in a full configuration manner, the PDCP configuration information corresponding to the source donor node with the PDCP configuration information corresponding to the source donor node and the PDCP configuration information corresponding to the target donor node for a PDCP entity of the first bearer, so that the terminal performs data transmission with the first relay node based on an updated air interface configuration. Two LCHs are configured for the first bearer, where one is for transmitting the data corresponding to the source donor node, the data is processed by using the PDCP configuration information corresponding to the source donor node, the other is for transmitting the data corresponding to the target donor node, and the data is processed by using the PDCP configuration information corresponding to the target donor node, to ensure that service transmission of the terminal is not interrupted during first relay node handover or second relay node handover.

Optionally, there may be a plurality of cases for a time point at which the first relay node sends the configuration information of the second LCH to the target donor node. For example, after the first relay node establishes the connection to the target donor node or before the first relay node establishes the connection to the target donor node, the first relay node sends the configuration information of the second LCH to the target donor node. The following provides descriptions with reference to several implementations.

In an implementation, after establishing the connection to the target donor node, the first relay node sends the configuration information of the second LCH to the target donor node.

For example, the first relay node sends a fourth message to the target donor node, where the fourth message includes the configuration information of the second LCH. Then, the target donor node sends the second message to the source donor node, and the source donor node sends the third message to the terminal. For content of the second message and the third message, refer to the foregoing descriptions.

It may be understood that, when S100 exists, after the first relay node establishes the connection to the target donor node, the first relay node may first receive, from the target donor node, the first message that carries the first indication information, and then the first relay node sends the fourth message to the target donor node.

Optionally, the first message may be the UE context setup request message, and the fourth message may be a UE context setup response message.

Optionally, S100 may not exist. After the first relay node receives the first message from the target donor node, the first relay node generates the configuration information of the second LCH, and then the first relay node sends the fourth message to the target donor node. For details, refer to the foregoing content.

Optionally, the fourth message may further include the air interface configuration information of the first bearer, so that the third message forwarded by the target donor node to the terminal through the source donor node may include the air interface configuration information of the first bearer.

Optionally, the fourth message may not include the air interface configuration information of the first bearer. After the source donor node determines to hand over a migration relay node (namely, the first relay node or the second relay node) from the source donor node to the target donor node, the source donor node may send a context of a descendant node of the migration relay node to the target donor node, where the descendant node includes the terminal, the context of the descendant node of the migration relay node includes a context of the terminal, and the context of the terminal includes the PDCP configuration information corresponding to the source donor node and the air interface configuration information of the first DRB. Therefore, the target donor node may obtain the PDCP configuration information corresponding to the source donor node and the air interface configuration information of the first DRB.

In another implementation, before the first relay node establishes the connection to the target donor node, the first relay node sends the configuration information of the second LCH to the source donor node, and then the source donor node sends the configuration information of the second LCH to the target donor node.

It may be understood that because the first relay node has not established the connection to the target donor node, the first relay node cannot directly send information to the target donor node, and may send the information to the target donor node through the source donor node.

For example, the first relay node sends a fifth message to the source donor node, and the source donor node sends a sixth message to the target donor node, where the fifth message and the sixth message include the configuration information of the second LCH. Then, the target donor node sends the second message to the source donor node, and the source donor node sends the third message to the terminal. For content of the second message and the third message, refer to the foregoing content.

It may be understood that, when S100 exists, before the first relay node establishes the connection to the target donor node, the first relay node may first receive, from the source donor node, the first message that carries the first indication information, and then sends the fifth message to the source donor node, and the source donor node sends the sixth message to the target donor node.

Specifically, when the source donor node determines that the first relay node or the second relay node is to perform handover, the source donor node sends the first message to the first relay node, and then the first relay node sends the fifth message to the source donor node, so that the source donor node sends the sixth message to the target donor node.

Optionally, the first message may be the UE context modification request message, the fifth message may be a UE context modification response message, and the sixth message may be the handover request message.

Optionally, the fifth message may include the air interface configuration information of the first bearer. Alternatively, the fifth message may not include the air interface configuration information of the first bearer, and the source donor node has the air interface configuration information of the first bearer. For example, before the terminal establishes a connection to the source donor node, the source donor node receives the air interface configuration information of the first bearer from the first relay node, and stores the air interface configuration information of the first bearer.

Optionally, the sixth message may include the air interface configuration information of the first bearer and/or the PDCP configuration information corresponding to the source donor node. Optionally, the sixth message may be sent by the source donor node to the target donor node after the source donor node determines to hand over the migration relay node (namely, the first relay node or the second relay node) from the source donor node to the target donor node.

S103: The terminal receives second indication information.

The terminal may configure the second LCH for the first bearer based on the second indication information.

There may be a plurality of types of content indicated by the second indication information. The following provides descriptions with reference to several examples.

In an example, the second indication information may be at a bearer granularity. In other words, the second indication information is in a one-to-one correspondence with one bearer. The second indication information may indicate the terminal to configure the first LCH and the second LCH for one bearer; may indicate the terminal to configure the second LCH for one bearer; may indicate to associate one bearer with two LCHs, namely, the first LCH and the second LCH; may indicate that both the first LCH and the second LCH of one bearer are used for data transmission of the bearer; may indicate the terminal not to replace the first LCH of one bearer with the second LCH of the bearer; may indicate the terminal to start or activate a function of PDCP dual configurations for one bearer, where the PDCP dual configurations may include the PDCP configuration information corresponding to the source donor node and the PDCP configuration information corresponding to the target donor node; may indicate that data transmission of one bearer is not to be interrupted during the inter-donor-node handover; may indicate that the DAPS handover is to be configured for one bearer; or may indicate other content. This is not limited in this embodiment of this application.

In this example, optionally, the second indication information may include an identifier of one bearer, and the bearer includes the first bearer.

In this example, the first relay node receives a plurality of pieces of second indication information, and each piece of first indication information is in a one-to-one correspondence with one bearer. The first relay node may configure, for each of one or more bearers of the terminal, the second LCH corresponding to the bearer. In this application, the first bearer is used as an example for description. A person skilled in the art may learn that content in this embodiment of this application is also applicable to a case of one or more other bearers.

In another example, the second indication information may be at a terminal granularity. In other words, the second indication information does not indicate a specific bearer. The second indication information may indicate that the first relay node configures the first LCH and the second LCH for each bearer of the terminal, indicate the terminal to configure the second LCH for each bearer, indicate to associate each bearer with two LCHs, or indicate not to replace the first LCH of each bearer with the second LCH of the bearer, or the like. For other content that may be indicated by the second indication information, refer to content described when the second indication information may be at the terminal granularity. A difference lies in that an object indicated by the second indication information is the terminal or each bearer of the terminal. Alternatively, the second indication information may indicate that data transmission of the terminal is not to be interrupted during the inter-donor-node handover, may indicate that the DAPS handover is to occur, or may indicate other content. This is not limited in this embodiment of this application.

In this example, optionally, the second indication information may not include an identifier of the bearer.

In this example, the first relay node may configure the second LCH for each bearer (including the first bearer) of the terminal. In this application, the first bearer is used as an example for description. A person skilled in the art may learn that content in this embodiment of this application is also applicable to a case of one or more other bearers. In this case, in S102, the terminal may receive the configuration information of the second LCH corresponding to each of the one or more other bearers.

There are a plurality of manners in which the terminal receives the second indication information. The following provides descriptions with reference to several possible implementations.

In a possible implementation, the target donor node sends the second indication information to the terminal through the first relay node.

In this implementation, the second indication information is generated by the target donor node.

In this implementation, the second indication information and the configuration information of the second LCH that is sent by the target donor node to the terminal in S102 may be carried in a single message. For example, the message is the third message in S102, and the third message may further include one or more of the air interface configuration information of the first bearer, the PDCP configuration information corresponding to the source donor node, and the PDCP configuration information corresponding to the target donor node, and the BAP address allocated by the target donor node to the first relay node. For details, refer to a process in which the relay node sends the configuration information of the second LCH to the terminal through the target donor node in S102.

In another implementation, the first relay node sends the second indication information to the terminal.

In this implementation, the second indication information is generated by the first relay node.

Optionally, when the first relay node generates the configuration information of the second LCH, the first relay node may generate the second indication information, and then send the second indication information to the terminal.

For example, the second indication information may be carried in a MAC CE.

In still another implementation, the second indication information may be sent by the source donor node to the terminal. This is not limited in this embodiment of this application.

The terminal receives the second indication information, to avoid a case in which the terminal receives the configuration information of the second LCH and mistakenly considers that the configuration information of the first LCH needs to be deleted, so as to ensure that both the first LCH and the second LCH can be configured for the first bearer of the terminal, reduce a probability of data transmission interruption during the inter-donor-node handover, and improve service continuity.

S103 is optional.

S104: The terminal configures the second LCH for the first bearer.

Optionally, after S104, the terminal may transmit, through the first LCH, the PDCP data corresponding to the source donor node, and the terminal may transmit, through the second LCH, the PDCP data corresponding to the target donor node. The following provides descriptions with reference to several implementations.

Optionally, the method in FIG. 13 may further include: The target donor node sends, to one or more nodes (including the access relay node, the migration relay node, and one or more other nodes between the access relay node and the migration relay node) on a link between the access relay node and the migration relay node through the source donor node, an indication for starting dual configurations of a BAP layer, where the dual configurations of the BAP layer include a BAP configuration corresponding to the source donor node and a BAP configuration corresponding to the target donor node. For details, refer to content in FIG. 12. Details are not described herein again. Alternatively, the source donor node may send, to one or more nodes, an indication for starting dual configurations of a BAP layer

Optionally, in the method in FIG. 13, the PDCP data corresponding to the source donor node includes downlink PDCP data and/or uplink PDCP data. Optionally, the PDCP data corresponding to the target donor node includes downlink PDCP data and/or uplink PDCP data.

Optionally, the PDCP data corresponding to the source donor node is processed by using the PDCP configuration information corresponding to the source donor node, and may be specifically processed by the source donor node or the terminal. The PDCP data corresponding to the target donor node is processed by using the PDCP configuration information corresponding to the target donor node, and may be specifically processed by the target donor node or the terminal.

Optionally, the PDCP entity of the first bearer of the terminal includes the configuration information corresponding to the source donor node and the configuration information corresponding to the target donor node. For details, refer to content in FIG. 12. Details are not described herein again.

When the PDCP data corresponding to the source donor node is the downlink PDCP data, that the first LCH is for transmitting the PDCP data corresponding to the source donor node may be understood as that the first LCH is for receiving the downlink PDCP data corresponding to the source donor node. Similarly, when the PDCP data corresponding to the target donor node is the downlink PDCP data, that the second LCH is for transmitting the PDCP data corresponding to the target donor node may be understood as that the second LCH is for receiving the PDCP data corresponding to the target donor node.

In an example, the source donor node processes the downlink PDCP data by using the PDCP configuration information corresponding to the source donor node, and sends the downlink PDCP data to the first relay node. The first relay node maps, to the first LCH, the downlink PDCP data corresponding to the source donor node, and sends the downlink PDCP data to the terminal. The terminal may receive, from the first relay node, the downlink PDCP data that corresponds to the source donor node and that is mapped to the first LCH (which may be understood as that the terminal receives, through the first LCH, the downlink PDCP data corresponding to the source donor node). The terminal processes, by using the PDCP configuration information corresponding to the source donor node, the downlink PDCP data corresponding to the source donor node.

In another example, the target donor node processes the downlink PDCP data by using the PDCP configuration information corresponding to the target donor node, and sends the downlink PDCP data to the first relay node. The first relay node maps, to the second LCH, the downlink PDCP data corresponding to the target donor node, and sends the downlink PDCP data to the terminal. The terminal receives, from the first relay node, the downlink PDCP data that corresponds to the target donor node and that is mapped to the second LCH (which may be understood as that the terminal receives, through the second LCH, the downlink PDCP data corresponding to the target donor node). The terminal processes, by using the PDCP configuration information corresponding to the target donor node, the downlink PDCP data corresponding to the target donor node.

For downlink data, there may be only one of the foregoing two examples, or there may be both of the foregoing two examples. Optionally, for the downlink data, in an inter-donor-node handover process (where in this embodiment of this application, the process includes a process from a time point at which the source donor node determines to perform inter-donor-node handover to a time point at which a source parent node of the migration relay node releases a context of the migration relay node), a time point at which the source donor node sends, to the terminal, the downlink PDCP data corresponding to the source donor node may overlap a time point at which the target donor node may send, to the terminal, the downlink PDCP data corresponding to the target donor node, in other words, the terminal may receive the downlink PDCP data corresponding to the source donor node and the downlink PDCP data corresponding to the target donor node at a same moment.

When the PDCP data corresponding to the source donor node is the uplink PDCP data, that the first LCH is for transmitting the PDCP data corresponding to the source donor node may be understood as that the first LCH is for sending the uplink PDCP data corresponding to the source donor node. Similarly, when the PDCP data corresponding to the target donor node is the uplink PDCP data, that the second LCH is for transmitting the PDCP data corresponding to the target donor node may be understood as that the second LCH is for sending the uplink PDCP data corresponding to the target donor node.

In an example, the terminal processes uplink data by using the PDCP configuration information corresponding to the source donor node, to obtain the uplink PDCP data corresponding to the source donor node, maps, to the first LCH, the uplink PDCP data corresponding to the source donor node, and sends, to the first relay node, the uplink PDCP data that corresponds to the source donor node and that is mapped to the first LCH (which may be understood as that the terminal sends, through the first LCH, the uplink PDCP data corresponding to the source donor node). After receiving the uplink PDCP data that corresponds to the source donor node and that is mapped to the first LCH, the first relay node sends the uplink PDCP data to the source donor node. Finally, the source donor node processes the uplink PDCP data by using the configuration information corresponding to the source donor node.

In another example, the terminal processes uplink data by using the PDCP configuration information corresponding to the target donor node, to obtain the uplink PDCP data corresponding to the target donor node, maps, to the second LCH, the uplink PDCP data corresponding to the target donor node, and sends, to the first relay node, the uplink PDCP data that corresponds to the target donor node and that is mapped to the second LCH (which may be understood as that the terminal sends, through the second LCH, the uplink PDCP data corresponding to the target donor node). After receiving the uplink PDCP data that corresponds to the target donor node and that is mapped to the second LCH, the first relay node sends the uplink PDCP data to the target donor node. Finally, the target donor node processes the uplink PDCP data by using the configuration information corresponding to the target donor node.

Optionally, for the downlink data, the first relay node may distinguish, based on the GTP-U tunnel used for downlink data transmission, between the downlink PDCP data corresponding to the source donor node and the downlink PDCP data corresponding to the target donor node. Alternatively, the first relay node may distinguish, based on the BAP address carried in the downlink data, between the downlink PDCP data corresponding to the source donor node and downlink PDCP data corresponding to the target donor node.

For the uplink data, there may be only one of the foregoing two examples, or there may be both of the foregoing two examples. Optionally, for the uplink data, during the inter-donor-node handover, a time point at which the terminal sends, to the source donor node, the uplink PDCP data corresponding to the source donor node may be staggered with a time point at which the terminal sends, to the target donor node, the uplink PDCP data corresponding to the target donor node, in other words, the terminal may send, to the source donor node, the uplink PDCP data corresponding to the source donor node or send, to the target donor node, the uplink PDCP data corresponding to the target donor node at a moment.

For a transmission process of the downlink data and the uplink data, refer to content in FIG. 12. Details are not described herein again.

In addition, before the migration relay node (namely, the first relay node or the second relay node) establishes a connection to the target donor node, the terminal sends the uplink data to the source donor node. After the migration relay node establishes the connection to the target donor node, the terminal sends the uplink data to the target donor node. However, the terminal does not sense a time point at which the migration relay node establishes the connection to the target donor node. As a result, the terminal cannot determine whether to process the uplink PDCP data by using the PDCP configuration information corresponding to the source donor node and send the uplink PDCP data to the source donor node, or process the uplink PDCP data by using the PDCP configuration information corresponding to the target donor node and send the uplink PDCP data to the target donor node. Embodiments of this application provide the following solutions, to ensure that the terminal processes the uplink data by using correct configuration information, and avoid service interruption caused by a packet loss.

FIG. 14 is a flowchart of an indication method according to an embodiment of this application. The method in FIG. 14 may be performed independently, or may be performed based on the method in FIG. 13. Content in FIG. 13 and FIG. 14 may be mutually referenced.

In the method in FIG. 14, a first LCH and a second LCH are configured for a first bearer of a terminal. The first LCH is for transmitting PDCP data corresponding to a source donor node, and the second LCH is for transmitting PDCP data corresponding to a target donor node. For the first LCH, the second LCH, and a manner of configuring the second LCH, refer to content in FIG. 13.

As shown in FIG. 14, the method in FIG. 14 includes the following steps.

S200: The terminal receives third indication information. The terminal may determine, based on the third indication information, to process uplink data by using PDCP configuration information corresponding to the target donor node.

Optionally, the third indication information may indicate the terminal to send data to the target donor node, may indicate the terminal to process data by using the configuration information corresponding to the target donor node, may indicate that a migration relay node has accessed a target parent node or relay node handover is completed, or may indicate that a migration relay node has completed a PUSCH switch.

In an implementation, after performing the PUSCH switch, the migration relay node sends the third indication information to the terminal.

In this embodiment of this application, performing the PUSCH switch may be understood as switching a PUSCH of the migration relay node from a source parent node to the target parent node. To be specific, the migration relay node originally sends PUSCH data (for example, uplink PDCP data of the terminal) to the source parent node through the PUSCH, but now sends the PUSCH data (for example, uplink PDCP data of the terminal) to the target parent node through the PUSCH. Specifically, after sending a preamble to the target donor node and receiving a random access response (random access response, RAR) message sent by the target donor node, the migration relay node performs the PUSCH switch, where the RAR message includes a UL grant (grant) resource.

In another implementation, after the migration relay node is connected to the target donor node, the migration relay node sends the third indication information to the terminal.

In this embodiment of this application, that the migration relay node is connected to the target donor node may include: An F1 interface and a GTP tunnel are established between the migration relay node and the target donor node for the first bearer, and/or routing configuration and bearer mapping configuration are completed on a path between the migration relay node and the target donor node.

Optionally, in the foregoing two implementations, the third indication information may be carried in downlink data and sent to the terminal, for example, carried in a MAC header field or an RLC header field of the downlink data. Alternatively, optionally, the third indication information may be carried in control signaling and sent to the terminal. The control signaling may be a MAC CE or downlink control information (downlink control information, DCI).

In still another implementation, after receiving an RRC reconfiguration complete message of the migration relay node, the target donor node may send the third indication information to the terminal.

Optionally, the target donor node may send the third indication information to the terminal via the RRC message.

Optionally, the foregoing three implementations may be applied to a scenario in which the terminal receives configuration information of the second LCH before the first relay node establishes a connection to the target donor node. In this scenario, after the migration relay node performs the PUSCH switch, after the migration relay node establishes the connection to the target donor node, or after the target donor node receives the RRC reconfiguration complete message, the third indication information is sent to the terminal, to avoid a case in which once the terminal receives the configuration information of the second LCH, the terminal processes the uplink data by using the PDCP configuration information corresponding to the target donor node by default, and sends the uplink data to the migration relay node, but because the migration relay node has not established the connection to the target donor node, the uplink data can only be sent to the source donor node, and the source donor node cannot parse the uplink data, resulting in a uplink data loss.

In yet another implementation, the target donor node may send configuration information of the second LCH and the third indication information to the terminal through the source donor node together. For example, the target donor node sends a second message to the source donor node, where the second message includes a third message. The source donor node sends the third message to the terminal, where the third message includes the configuration information of the second LCH and the third indication information.

S201: The terminal processes the uplink data based on the third indication information by using the PDCP configuration information corresponding to the target donor node. Optionally, the terminal may further map, to the second LCH, uplink PDCP data corresponding to the target donor node, and send the uplink PDCP data to the target donor node.

Specifically, after processing the uplink data by using the PDCP configuration information corresponding to the target donor node, the terminal may obtain the uplink PDCP data corresponding to the target donor node, map, to the second LCH, the uplink PDCP data corresponding to the target donor node, and then send the uplink PDCP data corresponding to the target donor node through the second LCH. After receiving the uplink PDCP data that corresponds to the target donor node and that is mapped to the second LCH, the first relay node sends the uplink PDCP data to the target donor node. Finally, the target donor node processes the uplink PDCP data by using the configuration information corresponding to the target donor node.

Optionally, before receiving the third indication information, the terminal processes the uplink PDCP data by using PDCP configuration information corresponding to the source donor node. After receiving the third indication information, the terminal subsequently processes the uplink PDCP data by using the PDCP configuration information corresponding to the target donor node. For detailed descriptions that the uplink PDCP data is processed by using the PDCP configuration information corresponding to the source donor node, or the uplink PDCP data is processed by using the PDCP configuration information corresponding to the target donor node, refer to content in FIG. 13. Details are not described herein again.

In the method in FIG. 14, during inter-donor-node handover, a parent node of the terminal may always remain unchanged, and the terminal does not sense when the migration relay node performs the PUSCH switch. The third indication information is sent to the terminal, so that the terminal can determine to process the uplink data by using the PDCP configuration information corresponding to the target donor node, to ensure that the terminal processes the uplink data by using correct configuration information, avoid service interruption caused by a packet loss, and improve service transmission continuity.

Optionally, in another alternative implementation of S200 and S201, S200 and S201 may not exist. After receiving configuration information of the second LCH, the terminal performs S202, to be specific, the terminal processes uplink data by using PDCP configuration information corresponding to the target donor node, maps, to the second LCH, uplink PDCP data corresponding to the target donor node, and sends the uplink PDCP data to the target donor node.

Optionally, this implementation may be applied to a scenario in which the terminal receives the configuration information of the second LCH after the first relay node establishes a connection to the target donor node. In this scenario, once the terminal receives the configuration information of the second LCH, the terminal processes the uplink data by using the PDCP configuration information corresponding to the target donor node by default, and sends the uplink data to the target donor node, to ensure service transmission continuity, and reduce signaling overheads.

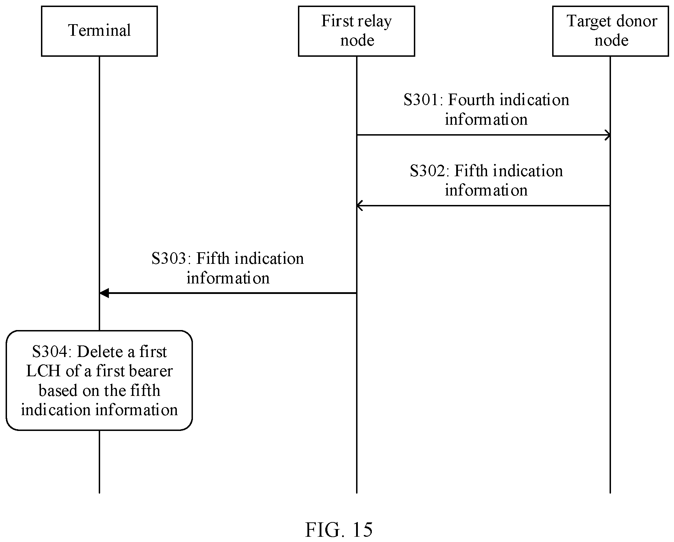

FIG. 15 is a flowchart of an LCH deletion method according to an embodiment of this application. The method in FIG. 15 may be performed independently, or may be performed based on one or both of the methods in FIG. 13 and FIG. 14. Content in FIG. 13, FIG. 14, and FIG. 15 may be mutually referenced.

In the method in FIG. 15, a first LCH and a second LCH are configured for a first bearer of a terminal. The first LCH is for transmitting PDCP data corresponding to a source donor node, and the second LCH is for transmitting PDCP data corresponding to a target donor node. For content of the first LCH, the second LCH, and a manner of configuring the second LCH, refer to content in FIG. 14.

As shown in FIG. 15, the method in FIG. 15 includes the following steps.

S301: A first relay node sends fourth indication information to the target donor node.

The fourth indication information is used by the target donor node to indicate the terminal to delete the first LCH.

In an implementation, after the first relay node completes sending, to the terminal, the PDCP data that corresponds to the source donor node and that is buffered by the first relay node, the first relay node sends the fourth indication information to the target donor node.

The PDCP data that corresponds to the source donor node and that is buffered by the first relay node is to be mapped to the first LCH of the terminal for transmission, and therefore may also be referred to as PDCP data corresponding to the first LCH.

In this implementation, optionally, before S301, the method further includes: The first relay node receives a seventh message, where the seventh message is for deleting an F1 interface and/or a GTP-U tunnel between the first relay node and the source donor node. After the first relay node receives the seventh message and completes sending, to the terminal, the PDCP data that corresponds to the source donor node and that is buffered by the first relay node, the first relay node sends the fourth indication information to the target donor node.

In an example, the method further includes: The target donor node sends an eighth message to the source donor node, to trigger the source donor node to send the seventh message to the first relay node. For example, the seventh message and the eighth message may be UE context release messages.

Optionally, the seventh message may include an ID of the first LCH and/or indication information for indicating the first relay node to delete the GTP-U tunnel between the first relay node and the source donor node.

Optionally, that the first relay node completes sending, to the terminal, the PDCP data that corresponds to the source donor node and that is buffered by the first relay node may be understood as that the first relay node has sent, to the terminal, all of the PDCP data that corresponds to the source donor node and that is buffered on the first relay node, no PDCP data corresponding to the source donor node is buffered on the first relay node, or a buffer (buffer) corresponding to the first LCH on the first relay node is empty.

Optionally, there may be a plurality of cases for content indicated by the fourth indication information. For example, the fourth indication information may indicate to delete the first LCH, may indicate that the first relay node completes sending, to the terminal, the PDCP data that corresponds to the first LCH and that is buffered by the first relay node, may indicate that the buffer corresponding to the first LCH on the first relay node is empty, or may indicate other content. This is not limited in this embodiment of this application. Optionally, the fourth indication information may include the ID of the first LCH and/or an identifier of the first bearer.

Optionally, the fourth indication information may be carried in a UE context modification required (required) message. S302: The target donor node sends fifth indication information to the first relay node.

After receiving the fourth indication information, the target donor node may determine the fifth indication information.

Optionally, the fifth indication information and the fourth indication information may be the same or different.

Optionally, there may be a plurality of cases for content indicated by the fifth indication information. For example, the fifth indication information may indicate the terminal to delete the first LCH, indicate the terminal to release a function of PDCP dual configurations, indicate the terminal to delete PDCP configuration information corresponding to the source donor node, or may indicate other content. This is not limited in this embodiment of this application.

Optionally, the fifth indication information may be carried in an RRC message. The RRC message is carried in a UE context modification request (request) message. The UE context modification request message may be an F1AP message.

Optionally, the fifth indication information may include the ID of the first LCH and/or the identifier of the first bearer.

S303: The first relay node sends the fifth indication information to the terminal.

Optionally, S303 may be: The first relay node sends the RRC message to the terminal.

S304: The terminal deletes the first LCH of the first bearer based on the fifth indication information.

Optionally, when the fifth indication information includes the ID of the first LCH, the terminal deletes the first LCH based on the fifth indication information.

Optionally, when the fifth indication information does not include the ID of the first LCH, after receiving the fifth indication information, the terminal may delete the first LCH by default, that is, delete an LCH corresponding to the source donor node by default.

Optionally, the method in FIG. 15 may further include: The first relay node deletes configuration information of the first LCH, deletes one or both of the F1 interface and the GTP-U tunnel between the first relay node and the source donor node, and the like. In an example, after S302 or S303, the first relay node may perform one or more of the following operations: deleting the configuration information of the first LCH, deleting the F1 interface between the first relay node and the source donor node, deleting the GTP-U tunnel between the first relay node and the source donor node, and the like. It may be understood that after S302 or 303, the first relay node no longer needs to transmit a message or data between the terminal and the source donor node, and the first relay node deletes the configuration information of the first LCH, and deletes the F1 interface between the first relay node and the source donor node and/or the GTP-U tunnel between the first relay node and the source donor node, to save a resource. Alternatively, in another example, before S302, the first relay node may perform one or more of the following operations: deleting the F1 interface between the first relay node and the source donor node, deleting the GTP-U tunnel between the first relay node and the source donor node, and the like.

In the method in FIG. 15, the terminal may delete the first LCH according to an indication of a network side, to save an air interface resource. In addition, after the first relay node completes sending, to the terminal, the PDCP data that corresponds to the source donor node and that is buffered by the first relay node, the first relay node sends the fourth indication information to the target donor node, and further the target donor node indicates the terminal to delete the first LCH, so that it can be ensured that the terminal deletes the first LCH only after all of the PDCP data corresponding to the source donor node is sent to the terminal through the first LCH, to ensure data transmission continuity, and avoid data transmission interruption caused because the terminal still receives the PDCP data corresponding to the source donor node after the first LCH is deleted, but the terminal cannot process or parse the PDCP data corresponding to the source donor node.

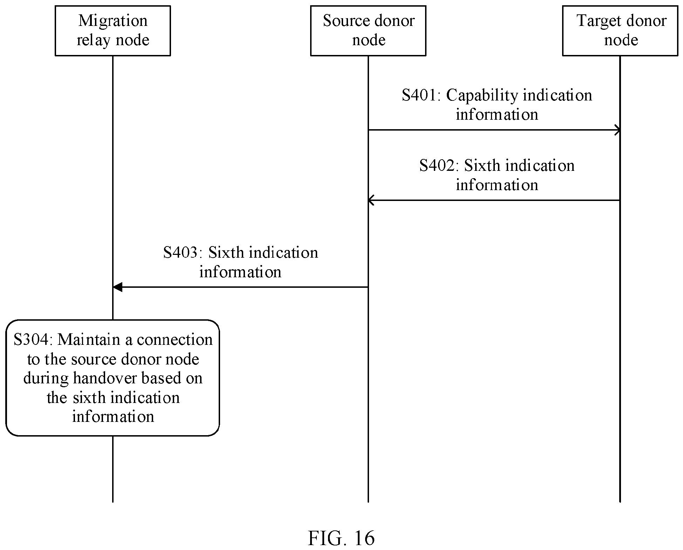

FIG. 16 is a flowchart of an indication method according to an embodiment of this application. The method in FIG. 16 may be performed independently, or may be performed based on one or more of the methods in FIG. 13, FIG. 14, and FIG. 16. Content in FIG. 13 to FIG. 16 may be mutually referenced. As shown in FIG. 16, the method includes the following steps.

S401: A source donor node sends capability indication information to a target donor node.

Optionally, the capability indication information indicates that a migration relay node supports a capability. For example, the capability indication information indicates that the migration relay node supports maintaining a connection to the source donor node during handover, indicates that the migration relay node supports maintaining connections to both the source donor node and the target donor node during handover, may indicate that the migration relay node supports a DAPS, may indicate that the migration relay node supports parallel PDSCH data transmission during handover, may indicate that the migration relay node supports parallel PUSCH data transmission during handover, or may indicate other content. This is not limited in this embodiment of this application.

It should be noted that in this specification, an example in which the capability indication information is at a granularity of the migration relay node is used for description. A person skilled in the art may understand that the capability indication information herein may alternatively be at a granularity of a bearer of a terminal. For example, the capability indication information may indicate that a first bearer of the terminal supports the DAPS, the parallel PDSCH transmission, the PUSCH transmission, or the like during handover. This is not limited in this embodiment of this application.

Optionally, the capability indication information may be generated by the source donor node.

Optionally, the capability indication information may be sent by the migration relay node to the source donor node.

In an example, the capability indication information may be carried in a handover request message sent by the source donor node to the target donor node.

Optionally, in this example, the handover request message may further include context information of the migration relay node and a descendant node of the migration relay node. The context information of the migration relay node and the descendant node includes one or more of an identifier (for example, an I AB-DU id) of a relay node accessed by the migration relay node and the descendant node, an identifier (for example, a cell global identifier (cell group identifier, CGI)) of a cell of the relay node accessed by the migration relay node and the descendant node, and a cell radio network temporary identifier (cell radio network temporary identifier, C-RNTI) of the migration relay node and the descendant node in an accessed cell.

Optionally, the handover request message may be a handover request message for group handover. The group handover may be understood as: When the migration relay node performs handover, the descendant node of the migration relay node performs handover together with the migration relay node. The migration relay node and the descendant node may be considered as a group, and the group performs handover.

S401 is optional.

S402: The target donor node sends sixth indication information to the source donor node.

In an example, the sixth indication information is carried in an RRC reconfiguration message, and the RRC reconfiguration message is carried in a handover request response message sent by the target donor node to the source donor node. It may be understood that, the target donor node sends the handover request response message to the source donor node. The handover request response message includes the RRC reconfiguration message, and the RRC reconfiguration message includes the sixth indication information.

Optionally, when S401 exists, the target donor node determines the sixth indication information based on the capability indication information. When S402 does not exist, the target donor node considers by default that the migration relay node has a capability indicated by the capability indication information, to generate the sixth indication information.

Optionally, there may be a plurality of cases for content indicated by the sixth indication information. For example, the sixth indication information may indicate that the migration relay node maintains the connection to the source donor node during the handover, may indicate that the migration relay node maintains the connections to both the source donor node and the target donor node during the handover, may indicate that the source donor node is to send, to the migration relay node, PDCP data corresponding to the source donor node during the handover, may indicate that the migration relay node starts the DAPS, may indicate that the migration relay node performs parallel PDSCH data transmission during the handover, may indicate that the migration relay node performs parallel PUSCH data transmission during the handover, or may indicate other content. This is not limited in this embodiment of this application. A handover process in this application may include a process from a time point at which the migration relay node receives the RRC reconfiguration message from the source donor node to a time point at which the migration relay node receives, from the target donor node, a message for indicating to release a protocol stack resource between the migration relay node and a source parent node.

It should be noted that, that the migration relay node performs parallel PDSCH data transmission may be understood as that the migration relay node may transmit both PDSCH data corresponding to the source donor node and PDSCH data corresponding to the target donor node. Similarly, that the migration relay node performs parallel PUSCH data transmission may be understood as that the migration relay node may transmit both PUSCH data corresponding to the source donor node and PUSCH data corresponding to the target donor node.

Optionally, the foregoing provides descriptions by using an example in which the sixth indication information is at a granularity of the migration IAB node. Optionally, the sixth indication information may be at a granularity of a bearer of the terminal. For details, refer to the descriptions that the capability indication information may be at the granularity of the bearer of the terminal. Details are not described herein again.

Optionally, the capability indication information and the sixth indication information may be the same, and may be carried in a same information element; or the capability indication information and the sixth indication information may be different.

Optionally, S402 is optional. Either S401 or S402 may occur, or both S401 and S402 occur.

S403: The source donor node sends the sixth indication information to the migration relay node.

In an example, the sixth indication information may be carried in the RRC reconfiguration message sent by the source donor node to the migration relay node.

S404: The migration relay node maintains the connection to the source donor node during the handover based on the sixth indication information.

S404 is optional.

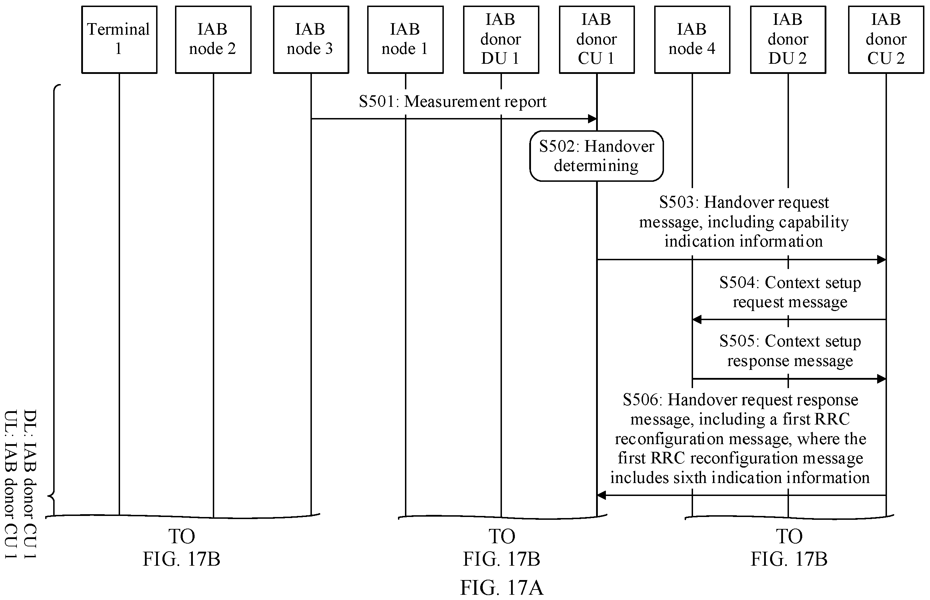

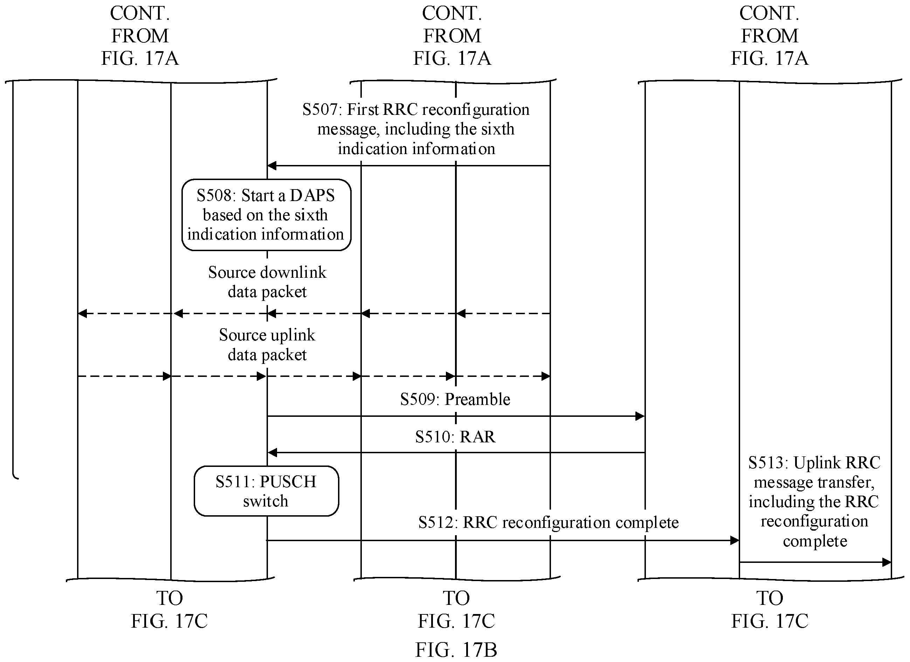

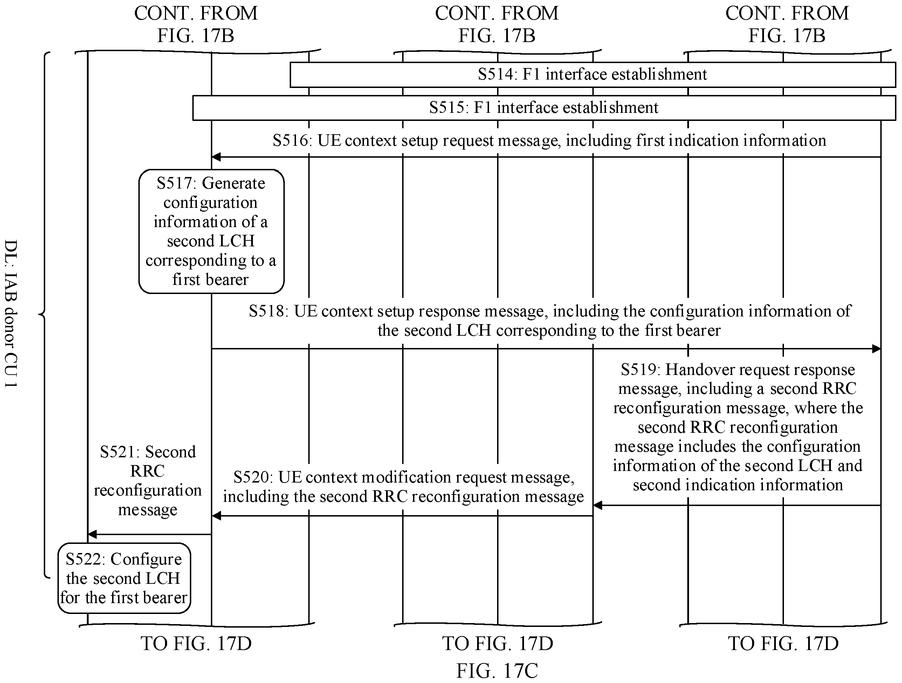

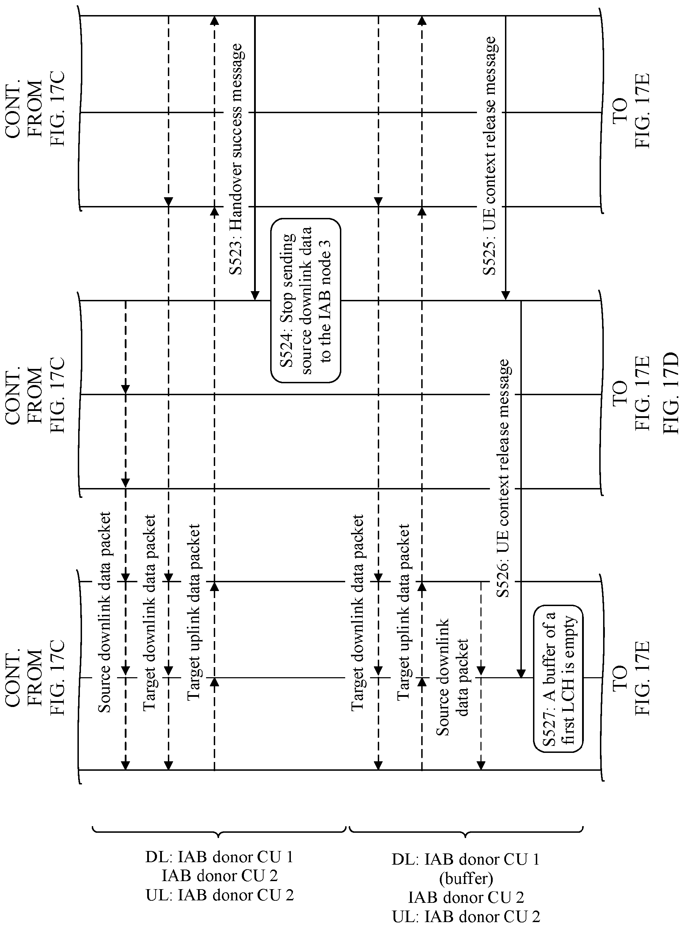

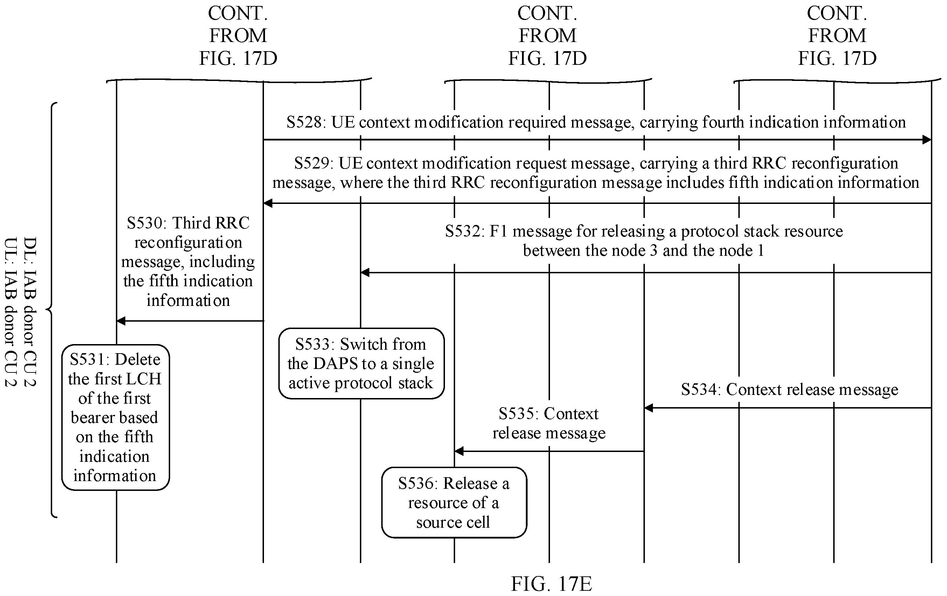

One or more of the methods in FIG. 13 to FIG. 16 may be implemented together. The following further describes content in embodiments of this application with reference to FIG. 17A to FIG. 18D. It should be noted that

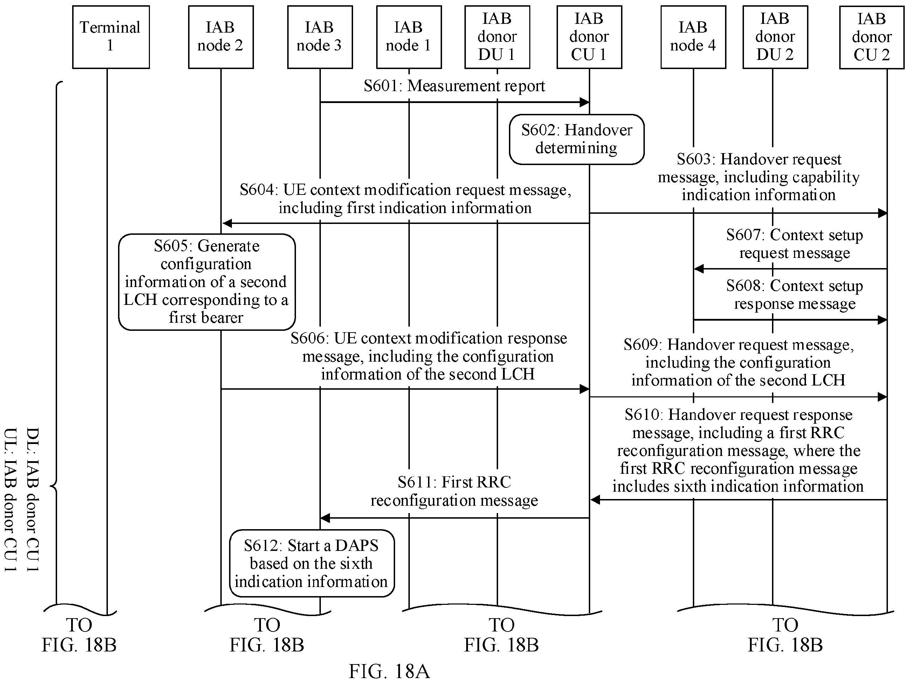

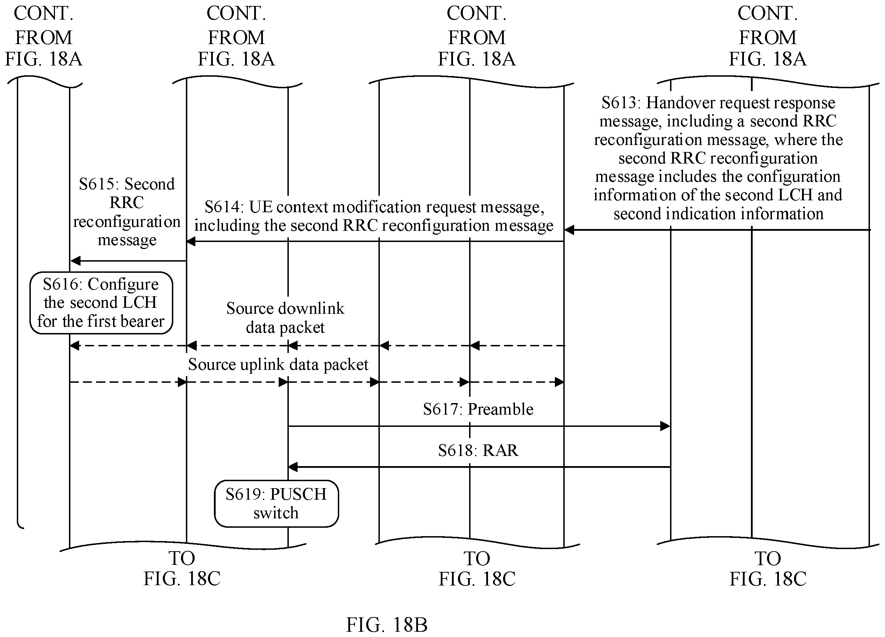

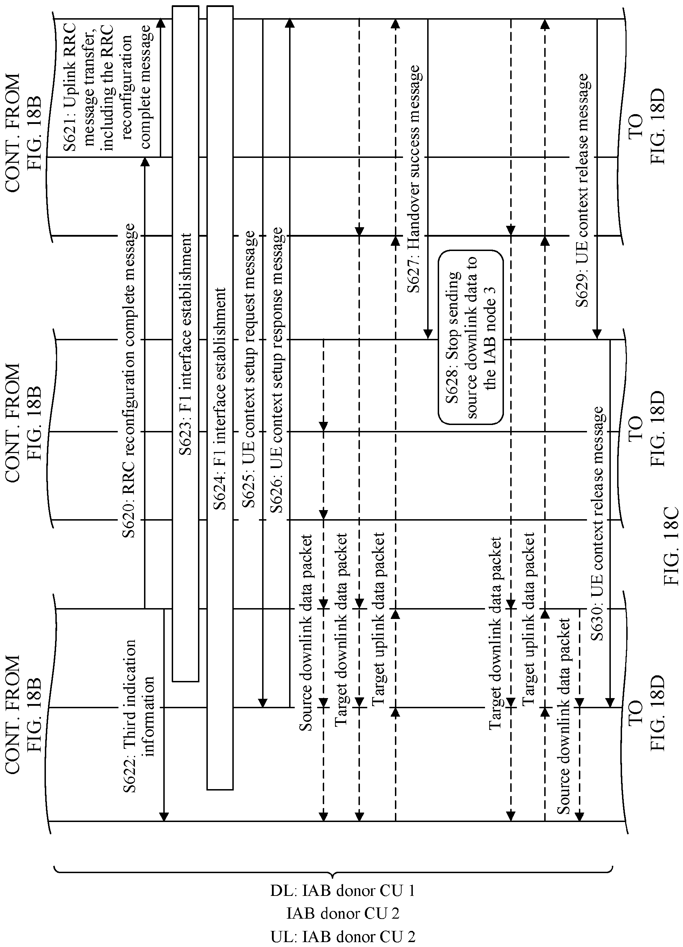

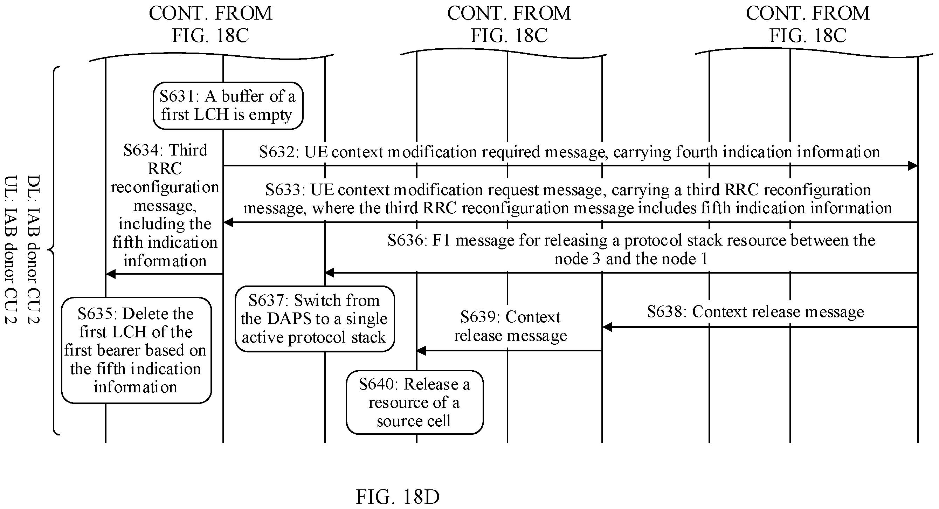

FIG. 17A to FIG. 17E and FIG. 18A to FIG. 18D each are described by using the inter-donor-node handover scenario in FIG. 11 as an example. Content in FIG. 17A to FIG. 18D is not only applicable to the scenario in FIG. 11, but also applicable to another inter-donor-node handover scenario.

FIG. 17A to FIG. 17E and FIG. 18A to FIG. 18D each are a schematic diagram of an inter-donor-node handover method according to an embodiment of this application, and describe a handover process in which an IAB node 3 is handed over from an IAB node 1 to an IAB node 4. The handover process is mainly divided into three processes: handover preparation, handover execution, and handover completion. In each process, a terminal may perform data transmission with an IAB donor CU 1 and/or an IAB donor CU 2, and the data transmission is shown by using dashed arrows in FIG. 17A to FIG. 18D. A difference lies in that in FIG. 17A to FIG. 17E, a second LCH of a first bearer is configured for the terminal in the handover completion process, and in FIG. 18A to FIG. 18D, a second LCH of a first bearer is configured for the terminal in the handover preparation process. The following separately describes FIG. 17A to FIG. 17E and FIG. 18A to FIG. 18D.

As shown in FIG. 17A to FIG. 17E, the method includes the following steps.

A process of S501 to S508 describes the handover preparation process, and content in FIG. 17A to FIG. 17E and content in FIG. 18 A to FIG. 18D may be mutually referenced.

S501: The IAB node 3 sends a measurement report to the IAB donor CU 1.

The IAB node 3 may measure, based on a measurement configuration received from the IAB donor CU 1, a serving cell of the accessed IAB node 1 and a neighboring cell serve by the IAB node 4, to obtain the measurement report, and send the measurement report to the IAB donor CU 1.

S502: The IAB donor CU 1 performs handover determining.

The IAB donor CU 1 may determine, based on the received measurement report, to hand over the IAB node 3 from the IAB node 1 to the IAB node 4.

For example, when signal quality of the cell of the IAB node 4 is better than signal quality of the cell of the IAB node 1, the IAB donor CU 1 may determine to hand over the IAB node 3 from the IAB node 1 to the IAB node 4.

S503: The IAB donor CU 1 sends a handover request message to the IAB donor CU 2, where the handover request message includes capability indication information.

Optionally, the handover request message may carry context information of the IAB node 3 and descendant (descendant) nodes of the IAB node 3. For example, the descendant nodes of the IAB node 3 include an IAB node 2 and the terminal 1, and the handover request message may carry context information of the IAB node 3, the IAB node 2, and the terminal 1. For details, refer to the context information of the migration relay node and the descendant node of the migration relay node in S401.

The handover request message may include the capability indication information. For details, refer to content in S401.

S504: The IAB donor CU 2 sends a context setup request message to the IAB node 4.

S505: The IAB node 4 sends a context setup response message to the IAB donor CU 2.

S506: The IAB donor CU 2 sends a handover request response message to the IAB donor CU 1, where the handover request response message includes a first RRC reconfiguration message, and the first RRC reconfiguration message includes sixth indication information.

For content of the sixth indication information, refer to content in S402.

A process of S509 to S513 describes the handover execution process, namely, a random access process between the IAB node 3 and an IAB donor DU 2.

S507: The IAB node CU 1 sends the first RRC reconfiguration message to the IAB node 3, where the first RRC reconfiguration message includes the sixth indication information.

S508: The IAB node 3 starts a DAPS based on the sixth indication information.

For related content of the DAPS, refer to content in FIG. 8 and FIG. 12.

It may be understood that, that the IAB node 3 starts a DAPS may be understood as that the IAB node 3 may maintain a connection to the IAB donor CU 1 during handover.

S509: The IAB node 3 sends a preamble to the IAB node 4.

S510: The IAB node 4 sends an RAR to the IAB node 3.

S511: The IAB node 3 performs a PUSCH switch (switch).

That the IAB node 3 performs a PUSCH switch may be understood as that the IAB node 3 stops transmitting uplink data (for example, uplink data of the terminal) with the IAB node 1, and starts to transmit the uplink data (for example, the uplink data of the terminal) with the IAB node 4, that is, a PUSCH of the IAB node 3 is switched from the IAB node 1 to the IAB node 4. It should be noted that, although the PUSCH of the IAB node 3 is switched to the IAB node 4, and the IAB node 3 cannot transmit the uplink data with the IAB node 1, the IAB node 3 can still transmit downlink data with the IAB node 1. For content of the PUSCH switch, refer to the foregoing descriptions.

Optionally, after S511, the IAB node 3 may send seventh indication information to the terminal 1, and the terminal 1 may stop, based on the seventh indication information, processing the uplink data by using PDCP configuration information corresponding to a source donor node, and stop mapping processed uplink data to a first LCH. For example, the seventh indication information may indicate the terminal to stop sending the uplink data to the source donor node. This avoids a case in which after the PUSCH switch, the IAB node 3 still receives uplink data corresponding to the source donor node, and the IAB node 3 sends, to a target donor node, the uplink data corresponding to the source donor node, but the target donor node cannot parse the uplink data, resulting in a packet loss, data transmission interruption, and a waste of buffer resources of a node between the IAB node 3 and the target donor node.

S512: The IAB node 3 sends an RRC reconfiguration complete message to the IAB donor DU 2.

S513: The IAB donor DU 2 sends an uplink RRC message transfer (UL RRC transfer) message to the IAB donor CU 2, where the message includes the RRC reconfiguration complete message.

S514 to S536 describe the handover completion process.

S514: An F1 interface is established between the IAB node 3 and the IAB donor CU 2.

Optionally, after obtaining a cell identity of the IAB node 3 in the IAB donor CU 2, the IAB node 3 may initiate an F1 connection establishment procedure to the IAB donor CU 2, and then the F1 interface is established between the IAB node 3 and the IAB donor CU 2.

S515: The F1 interface is established between the IAB node 2 and the IAB donor CU 2.

S516 to S521 describe a process of configuring the second LCH of the first bearer, and content herein and content in FIG. 13 may be mutually referenced. For example, S516 to S521 may correspond to a case in which after the first relay node establishes the connection to the target donor node, the first relay node receives the first indication information from the target donor node, and the first relay node sends the configuration information of the second LCH to the target donor node. It may be understood that the first message in FIG. 13 is the context setup request message in S516, the fourth message is the UE context setup response message in S518, the second message in FIG. 13 is the handover request response message in S506, and the third message in FIG. 13 is a second RRC reconfiguration message in S519 to S521.

S516: The IAB donor CU 2 sends the UE context setup request message to the IAB node 2, where the UE context setup request message includes first indication information.

Optionally, the UE context setup request message may be for establishing a GTP tunnel, and may be referred to as a GTP tunnel establishment request message. Optionally, the UE context setup request message may include a GTP tunnel identifier

In another implementation of S516, the UE context setup request message may not include first indication information.

S517: The IAB node 2 generates configuration information of the second LCH corresponding to the first bearer.

Optionally, when the UE context setup request message includes the first indication information, the IAB node 2 may generate the configuration information of the second LCH based on the first indication information. Alternatively, when the UE context setup request message does not include the first indication information, after receiving the UE context setup request message, the IAB node 2 may generate the configuration information of the second LCH for each bearer of the terminal, and send the configuration information of the second LCH to the IAB donor CU 2 via the UE context setup request response message in S517.

S518: The IAB node 2 sends the UE context setup response message to the IAB donor CU 2, where the UE context setup response message includes the configuration information of the second LCH corresponding to the first bearer.

Through S516 to S518, a GTP-U tunnel may be established between the IAB node 2 and the IAB donor CU 2 for the first bearer, where the GTP-U tunnel corresponds to the second LCH.

Optionally, in S516 to S518, routing configuration and bearer mapping configuration may be completed on a path between the IAB node 2 and the IAB donor CU 2.

S519: The IAB donor CU 2 sends the handover request response message to the IAB donor CU 1, where the handover request response message includes the second RRC reconfiguration message, and the first RRC reconfiguration message includes the configuration information of the second LCH corresponding to the first bearer and second indication information.

S520: The IAB donor CU 1 sends a UE context modification request message to the IAB node 2, where the UE context modification request message includes the second RRC reconfiguration message.

S521: The IAB node 2 sends the second RRC reconfiguration message to the terminal.

The second RRC reconfiguration message includes one or more of air interface configuration information of the first bearer, the PDCP configuration information corresponding to the source donor node, and PDCP configuration information corresponding to the target donor node. For details, refer to content in S102.

Optionally, the second RRC reconfiguration message further includes third indication information. The terminal 1 may process, based on the third indication information, the uplink data by using the PDCP configuration information corresponding to the target donor node, and map processed uplink data to the second LCH. Alternatively, optionally, the second RRC reconfiguration message may not include third indication information. After the terminal 1 receives the second RRC reconfiguration message, if the second RRC reconfiguration message carries the configuration information of the second LCH, the terminal 1 processes the uplink data by using the PDCP configuration information corresponding to the target donor node by default, and maps processed uplink data to the second LCH.

S522: The terminal configures the second LCH for the first bearer.

For details, refer to content in S104 of FIG. 13.

S523: The IAB donor CU 2 sends a handover success message to the IAB donor CU 1, to indicate the IAB donor CU 1 to stop sending source downlink data to the IAB node 3.

S524: The IAB donor CU 1 stops sending the source downlink data to the IAB node 3.

Optionally, although the IAB donor CU 1 stops sending the source downlink data to the IAB node 3, the IAB node 3 may continue to send, to the terminal 1, the source downlink data buffered on the IAB node 3.

S525 to S531 describe a process of deleting the first LCH of the first bearer. Content herein and content in FIG. 15 may be mutually referenced. For example, a UE context release message in S525 is the seventh message in FIG. 15, and the UE context release message in S526 is the eighth message in FIG. 15.

S525: The IAB donor CU 2 sends the UE context release message to the IAB donor CU 1.

S526: The IAB donor CU 1 sends the UE context release message to the IAB node 2.

S527: The IAB node 2 determines that a buffer of the first LCH is empty.

S528: The IAB node 2 sends a UE context modification required message to the IAB donor CU 2, where the message includes fourth indication information.

For the fourth indication information, refer to content in FIG. 15.

S529: The IAB donor CU 2 sends the UE context modification request message to the IAB node 2, where the message includes a third RRC reconfiguration message, and the third RRC reconfiguration message includes fifth indication information.

S530: The IAB node 2 sends the third RRC reconfiguration message to the terminal 1, where the third RRC reconfiguration message includes the fifth indication information.

S531: The terminal deletes the first LCH of the first bearer based on the fifth indication information.

For the fifth indication information, refer to content in S302 to S304.

S532: The IAB donor CU 2 sends an FlAP message to the IAB node 3, to indicate the IAB node 3 to release a protocol stack resource between the IAB node 3 and the IAB node 1.

S533: The IAB node 3 switches from the DAPS to a single active protocol stack.

The single active protocol stack may be understood as that the IAB node 3 has only a protocol stack resource corresponding to a target parent node. In other words, the IAB node 3 releases the protocol stack resource between the IAB node 3 and the IAB node 1.

S534: The IAB donor CU 2 sends the context release message to the IAB donor CU 1.

S535: The IAB donor CU 1 sends the context release message to the IAB node 1.

S536: The IAB node 1 releases a context of the IAB node 3.

In the method in FIG. 17A to FIG. 17E, before the IAB donor CU 1 performs handover determining, the first LCH is configured for the first bearer of the terminal, and the terminal may transmit, through the first LCH, downlink PDCP data (briefly referred to as source downlink data below) corresponding to the source donor node and uplink PDCP data (briefly referred to as source uplink data below) corresponding to the source donor node. In the handover completion phase, after the IAB node 2 configures the second LCH for the first bearer of the terminal through the IAB donor CU 2, the terminal may transmit, through the second LCH, downlink PDCP data (briefly referred to as target downlink data below) corresponding to the target donor node and uplink PDCP data (briefly referred to as target uplink data below) corresponding to the target donor node.

Optionally, in S501 to S511, the IAB donor CU 1 may send the source downlink data to the terminal, and the terminal may send the source uplink data to the IAB donor CU 1.

Optionally, in S511 to S522, the IAB donor CU 1 may send the source downlink data to the terminal.

Optionally, in S522 to S524, the IAB donor CU 1 may send the source downlink data to the terminal, the IAB donor CU 2 may send the target downlink data to the terminal, and the terminal may send the target uplink data to the IAB donor CU 2.

Optionally, in S524 to S527, the IAB node 3 and the IAB node 2 may continue to send, to the terminal 1, a source downlink data packet buffered on the IAB node 3 or the IAB node 2, the IAB donor CU 2 may send the target downlink data to the terminal, and the terminal may send the target uplink data to the IAB donor CU 2.

Optionally, in S527 to S536, the IAB donor CU 2 may send the target downlink data to the terminal, and the terminal may send the target uplink data to the IAB donor CU 2.

For a method for processing the source uplink data, the source downlink data, the target uplink data, and/or the target downlink data, refer to the foregoing content. Details are not described herein again.

In the method in FIG. 17A to FIG. 17E, during handover of the IAB node 3, data transmission of the terminal is always not interrupted, to ensure data transmission continuity.

FIG. 18A to FIG. 18D are a schematic diagram of another inter-donor-node handover method according to an embodiment of this application. As shown in FIG. 18A to FIG. 18D, the method includes the following steps.

A process of S601 to S616 describes a handover preparation process, and content in FIG. 17A to FIG. 17E and content in FIG. 18 A to FIG. 18D may be mutually referenced.

S601: An IAB node 3 sends a measurement report to an IAB donor CU 1.

S602: The IAB donor CU 1 performs handover determining.

S603: The IAB donor CU 1 sends a handover request message to an IAB donor CU 2, where the handover request message includes capability indication information.

S604 to S606 describe a process of configuring a second LCH of a first bearer, and content herein and content in FIG. 13 may be mutually referenced. For example, S604 to S606 may correspond to a case in which before the first relay node establishes the connection to the target donor node, the first relay node receives the first indication information from the source donor node, and sends the configuration information of the second LCH to the source donor node, and the source donor node sends the configuration information of the second LCH to the target donor node. It may be understood that the first message in FIG. 13 is a UE context modification request message in S604, the fifth message in FIG. 13 is a UE context modification response message in S606, the sixth message in FIG. 13 is the handover request message in S609, the second message in FIG. 13 is a handover request response message in S613, and the first message in FIG. 13 is a second RRC reconfiguration message in S613 to S615.

S604: The IAB donor CU 1 sends the UE context modification request message to an IAB node 2, where the UE context modification request message includes first indication information.

S605: The IAB node 2 generates configuration information of the second LCH corresponding to the first bearer.

The IAB node 2 may generate the configuration information of the second LCH based on the first indication information.

S606: The IAB node 2 sends the UE context modification response message to the IAB donor CU 2, where the UE context modification response message includes the configuration information of the second LCH.

S607: The IAB donor CU 2 sends a context setup request message to an IAB node 4.

S608: The IAB node 4 sends a context setup response message to the IAB donor CU 2.

S609: The IAB donor CU 1 sends the handover request message to the IAB donor CU 2, where the handover request message includes the configuration information of the second LCH.

Optionally, the messages in S609 and S603 may be the same handover request message.

Optionally, S609 may be performed before S607, between S607 and S608, or after S608. This is not limited in this embodiment of this application.

S610: The IAB donor CU 2 sends the handover request response message to the IAB donor CU 1, where the handover request response message includes a first RRC reconfiguration message, and the first RRC reconfiguration message includes sixth indication information.

S611: The IAB node CU 1 sends the first RRC reconfiguration message to the IAB node 3, where the first RRC reconfiguration message includes the sixth indication information.

S612: The IAB node 3 starts a DAPS based on the sixth indication information.

S613: The IAB donor CU 2 sends the handover request response message to the IAB donor CU 1, where the handover request response message includes the second RRC reconfiguration message, and the first RRC reconfiguration message includes the configuration information of the second LCH corresponding to the first bearer and second indication information.

S614: The IAB donor CU 1 sends the UE context modification request message to the IAB node 2, where the UE context modification request message includes the second RRC reconfiguration message.

S615: The IAB node 2 sends the second RRC reconfiguration message to a terminal.

Optionally, the messages in S610 and S613 may be the same handover request response message, and the handover request response message includes the first RRC reconfiguration message and the second RRC reconfiguration message.

S616: The terminal configures the second LCH for the first bearer.

A process of S617 to S621 describes a handover execution process, namely, a random access process between the IAB node 3 and an IAB donor DU 2.

S617: The IAB node 3 sends a preamble to the IAB node 4.

S618: The IAB node 4 sends an RAR to the IAB node 3.

S619: The IAB node 3 performs a PUSCH switch (switch).

S620: The IAB node 3 sends an RRC reconfiguration complete message to the IAB donor DU 2.

S621: The IAB donor DU 2 sends an uplink RRC message transfer (UL RRC transfer) message to the IAB donor CU 2, where the message includes the RRC reconfiguration complete message.

S622: The IAB node 3 sends third indication information to the terminal.

Optionally, the IAB node 3 may send the third indication information to the terminal after performing the PUSCH switch or after establishing a connection to a target donor node. For details, refer to content in S200.

S623: An F1 interface is established between the IAB node 3 and the IAB donor CU 2.

S624: The F1 interface is established between the IAB node 2 and the IAB donor CU 2.

S625: The IAB donor CU 2 sends the UE context setup request message to the IAB node 2.

S626: The IAB node 2 sends the UE context setup request response message to the IAB donor CU 2.

S627: The IAB donor CU 2 sends a handover success message to the IAB donor CU 1, to indicate the IAB donor CU 1 to stop sending source downlink data to the IAB node 3.

S628: The IAB donor CU 1 stops sending the source downlink data to the IAB node 3.

S629: The IAB donor CU 2 sends a UE context release message to the IAB donor CU 1.

S630: The IAB donor CU 1 sends the UE context release message to the IAB node 2.

S631: The IAB node 2 determines that a buffer of a first LCH is empty.

S632: The IAB node 2 sends a UE context modification required message to the IAB donor CU 2, where the message includes fourth indication information.

S633: The IAB donor CU 2 sends the UE context modification request message to the IAB node 2, where the message includes a third RRC reconfiguration message, and the third RRC reconfiguration message includes fifth indication information.

S634: The IAB node 2 sends the third RRC reconfiguration message to the terminal 1, where the third RRC reconfiguration message includes the fifth indication information.

S635: The terminal deletes the first LCH of the first bearer based on the fifth indication information.

S636: The IAB donor CU 2 sends an F1 message to the IAB node 3, to indicate the IAB node 3 to release a protocol stack resource between the IAB node 3 and an IAB node 1.

S637: The IAB node 3 switches from the DAPS to a single active protocol stack.

S638: The IAB donor CU 2 sends the context release message to the IAB donor CU 1.

S639: The IAB donor CU 1 sends the context release message to the IAB node 1.

S640: The IAB node 1 releases a context of the IAB node 3.

For content of each step in FIG. 18A to FIG. 18D, refer to content in FIG. 17A to FIG. 17E. Details are not described herein again.

Optionally, in S601 to S622, the IAB donor CU 1 may send the source downlink data to the terminal, and the terminal may send source uplink data to the IAB donor CU 1.

Optionally, in S622 to S630, the IAB donor CU 1 may send the source downlink data to the terminal, the IAB donor CU 2 may send target downlink data to the terminal, and the terminal may send the source uplink data to the IAB donor CU 2.

Optionally, in S630 to S640, the IAB donor CU 2 may send the target downlink data to the terminal, and the terminal may send target uplink data to the IAB donor CU 2.

For a method for processing the source uplink data, the source downlink data, the target uplink data, and/or the target downlink data, refer to the foregoing content. Details are not described herein again.

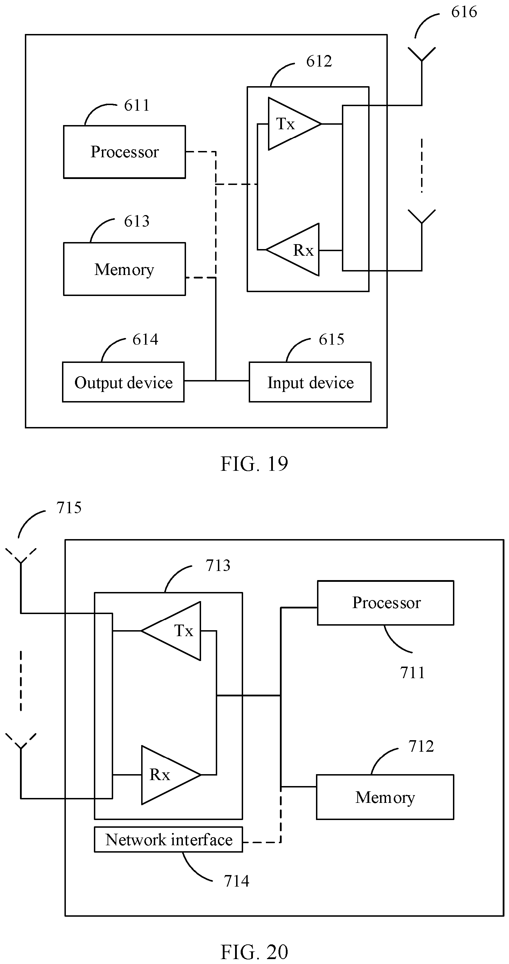

The following describes apparatuses provided in embodiments of this application with reference to FIG. 19 to FIG. 22. The apparatuses in FIG. 19 to FIG. 22 may complete the methods in FIG. 13 to FIG. 18D. Content of the apparatuses and content of the methods may be mutually referenced.

FIG. 19 is a schematic diagram of a structure of a terminal according to an embodiment of this application. The terminal may implement a function of the terminal in the foregoing method embodiments. For ease of description, FIG. 19 shows main components of the terminal. As shown in FIG. 19:

The terminal includes at least one processor 611, at least one transceiver 612, and at least one memory 613. The processor 611, the memory 613, and the transceiver 612 are connected to each other. Optionally, the terminal may further include an output device 614, an input device 615, and one or more antennas 616. The antenna 616 is connected to the transceiver 612, and the output device 614 and the input device 615 are connected to the processor 611.

The processor 611 is mainly configured to process a communication protocol and communication data, control the entire terminal, execute a software program, and process data of the software program.

In an optional implementation, the terminal device may include a baseband processor and a central processing unit. The baseband processor is mainly configured to process the communication protocol and the communication data. The central processing unit is mainly configured to control the entire terminal device, execute the software program, and process the data of the software program.

Functions of the baseband processor and the central processing unit may be integrated into the processor in FIG. 19. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program. The processor executes the software program to implement a baseband processing function.

The memory 613 is mainly configured to store the software program and data. The memory 613 may exist independently, and is connected to the processor 611. Optionally, the memory 613 and the processor 611 may be integrated together, for example, integrated on a single chip, namely, an on-chip memory, or the memory 613 is an independent storage element. This is not limited in this embodiment of this application. The memory 613 can store program code for executing the technical solutions in embodiments of this application, and the processor 611 controls execution of the program code. Various types of executed computer program code may also be considered as drivers of the processor 611.

The transceiver 612 may be configured to perform conversion between a baseband signal and a radio frequency signal and process the radio frequency signal. The transceiver 612 may be connected to the antenna 616. The transceiver 612 includes a transmitter (transmitter, Tx) and a receiver (receiver, Rx). Specifically, the one or more antennas 616 may receive a radio frequency signal. The receiver Rx of the transceiver 612 is configured to: receive the radio frequency signal from the antenna, convert the radio frequency signal into a digital baseband signal or a digital intermediate frequency signal, and provide the digital baseband signal or the digital intermediate frequency signal for the processor 611, so that the processor 611 further processes the digital baseband signal or the digital intermediate frequency signal, for example, performs demodulation processing and decoding processing. In addition, the transmitter Tx of the transceiver 612 is configured to: receive a modulated digital baseband signal or digital intermediate frequency signal from the processor 611, convert the modulated digital baseband signal or digital intermediate frequency signal into a radio frequency signal, and send the radio frequency signal through the one or more antennas 616. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal. Optionally, the transmitter Tx and the receiver Rx may be implemented by different physical structures/circuits, or may be implemented by a same physical structure/circuit, namely, the transmitter Tx and the receiver Rx may be inherited together.

The transceiver may also be referred to as a transceiver unit, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like. Alternatively, the Tx, the Rx, and the antenna may be combined into a transceiver.

The output device 614 displays information in a plurality of manners. For example, the output device 614 may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device 615 may receive an input of a user in a plurality of manners. For example, the input device 615 may be a mouse, a keyboard, a touchscreen device, or a sensing device.

For example, the processor 611 may be configured to support the terminal in performing the actions described in the foregoing method embodiments. For example, the processor 611 (for example, a baseband processor) may implement a function of the dual-configuration protocol stack of the terminal 1 in FIG. 12, obtain first indication information, process received downlink data or to-be-sent uplink data by using configuration information corresponding to a source donor node or configuration information corresponding to a target donor node, activate the configuration information corresponding to the source donor node and/or the configuration information corresponding to the target donor node, and delete the configuration information corresponding to the source donor node. For details, refer to content in the foregoing method embodiments.

For example, the memory 613 may store program code for executing an operation performed by the terminal in the foregoing method embodiments, and the processor 611 controls execution. For example, the memory 613 may store the configuration information corresponding to the source donor node and/or the configuration information corresponding to the target donor node, the memory 613 may store indication information and the like, and the memory 613 may store downlink data received from a relay node or to-be-sent uplink data. For details, refer to content in the foregoing method embodiments.

For example, the transceiver 612 and the antenna 616 may implement transmission with a parent node of the terminal, for example, receive downlink data, send uplink data, or receive indication information. For details, refer to content in the foregoing method embodiments.

FIG. 20 is a schematic diagram of a structure of a communication apparatus according to an embodiment of this application. The communication apparatus may be a relay node, and may implement a function of the relay node in the foregoing method embodiments. Alternatively, the communication apparatus may be a donor node, and may implement a function of the source donor node or the target donor node in the foregoing method embodiments. For ease of description, FIG. 20 shows main components of the communication apparatus. As shown in FIG. 20:

The communication apparatus includes at least one processor 711, at least one memory 712, at least one transceiver 713, at least one network interface 714, and one or more antennas 715. The processor 711, the memory 712, the transceiver 713, and the network interface 714 are connected to each other, for example, by using a bus. In this embodiment of this application, the connection may include various types of interfaces, transmission lines, buses, or the like. This is not limited in this embodiment. The antenna 715 is connected to the transceiver 713. The network interface 714 is configured to enable the communication apparatus to be connected to another network device through a communication link.

For the transceiver 713, the memory 712, and the antennas 716, refer to related descriptions in FIG. 19, to implement a similar function.

When the communication apparatus is a first relay node, the processor 711 may be configured to support the first relay node in performing the actions described in the foregoing method embodiments. For example, the processor 711 may generate configuration information of a second LCH that is generated by the first relay node in the foregoing method embodiments, and send the configuration information of the second LCH to a terminal. Specifically, after receiving a GTP tunnel establishment request from the target donor node, the first relay node may generate the configuration information of the second LCH. For another example, the processor 711 may generate configuration information of a second LCH based on received first indication information. For details, refer to content in the foregoing method embodiments.

The transceiver 713 and the antenna 715 may implement a connection between the first relay node and the source donor node or a connection between the first relay node and the target donor node.

The transceiver 713 and the antenna 715 may implement transmission with a parent node of the first relay node and/or a child node of the first relay node, for example, receive data of the source donor node and/or the target donor node from the parent node of the first relay node, send the data of the source donor node and/or the target donor node to the terminal, receive data of the terminal, send the data of the terminal to the parent node of the first relay node, receive, from the parent node of the first relay node, indication information generated by another node (for example, the source donor node and/or the target donor node), and send, to the terminal, the received indication information or indication information generated by the first relay node. For details, refer to content in the foregoing method embodiments.

The memory 712 may store program code and/or data for executing an operation performed by the first relay node in the foregoing method embodiments, and the processor 711 controls execution. For example, the memory 712 may store the data or indication information received from the parent node and/or the child node of the first relay node, or may store the indication information generated by the first relay node. For details, refer to content in the foregoing method embodiments.

When the communication apparatus is the target donor node, the processor 711 may be configured to support the target donor node in performing the actions described in the foregoing method embodiments. For example, the processor 711 may generate indication information, data, or the like generated by the target donor node in the foregoing method embodiments. For details, refer to content in the foregoing method embodiments.

The transceiver 713 and the antenna 715 may implement a connection between the target donor node and the relay node. The transceiver 713 and the antenna 715 may implement transmission with a child node of the target donor node, for example, send data and/or indication information to the child node, and receive data and/or indication information from the child node. For details, refer to content in the foregoing method embodiments.

The memory 712 may store program code and/or data for executing an operation performed by the target donor node in the foregoing method embodiments, and the processor 711 controls execution. For example, the memory 712 may store data or indication information received from another node, or may store the data or indication information generated by the target donor node. For details, refer to content in the foregoing method embodiments.

The network interface 714 may include a network interface between the target donor node and a core network element, for example, an S1 interface. The network interface may include a network interface between an access network device and another network device, for example, a network interface between the source donor node and the target donor node, for example, an X2 or Xn interface.

When the communication apparatus is the source donor node, the processor 711 may be configured to support the source donor node in performing the actions described in the foregoing method embodiments. For example, the processor 711 may generate indication information, data, or the like generated by the source donor node in the foregoing method embodiments. For details, refer to content in the foregoing method embodiments.

The transceiver 713 and the antenna 715 may implement a connection between the source donor node and the relay node. The transceiver 713 and the antenna 715 may implement transmission with a child node of the source donor node, for example, send data and/or indication information to the child node, and receive data and/or indication information from the child node. For details, refer to content in the foregoing method embodiments.

The memory 712 may store program code and/or data for executing an operation performed by the source donor node in the foregoing method embodiments, and the processor 711 controls execution. For example, the memory 712 may store data or indication information received from another node, or may store the data or indication information generated by the target donor node. For details, refer to content in the foregoing method embodiments.

The network interface 714 may include a network interface between the target donor node and a core network element, for example, an S1 interface. The network interface may include a network interface between an access network device and another network device, for example, a network interface between the target donor node and the source donor node, for example, an X2 or Xn interface.

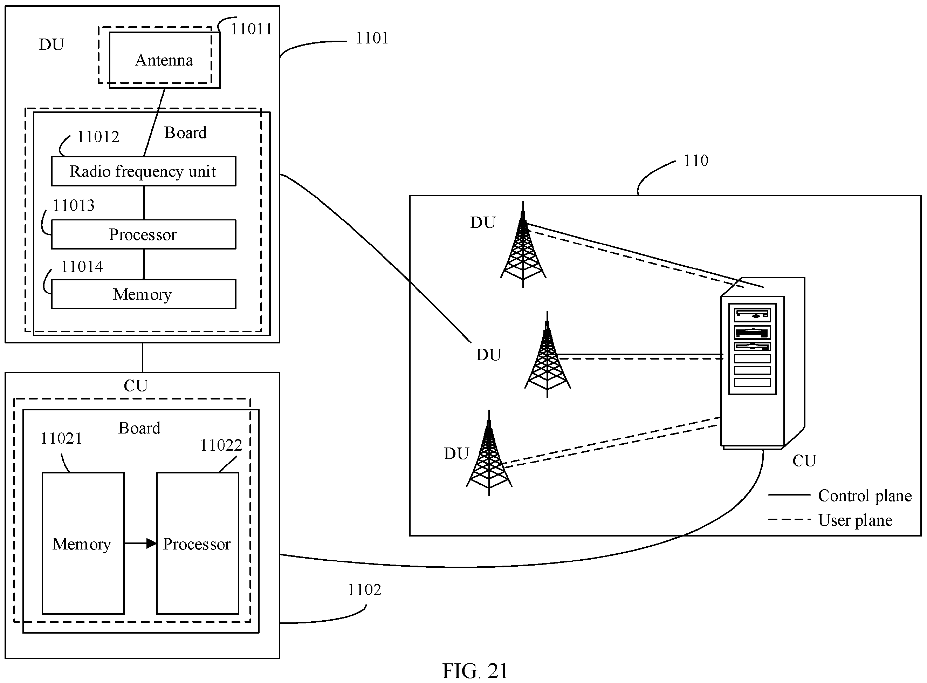

FIG. 21 is a schematic diagram of a structure of an access network device according to an embodiment of this application. For example, FIG. 21 may be a schematic diagram a structure of a donor node. A DU included in the donor node may be a donor DU, and a CU included in the donor node may be a donor CU. As shown in FIG. 21, a base station may be used in the systems shown in FIG. 1, FIG. 2, FIG. 3, and FIG. 11, and perform a function of the donor node (including a source donor node and/or a target donor node) in the foregoing method embodiments.

The access network device may include one or more DUs 1101 and one or more CUs 1102. The DU 1101 may include at least one antenna 11011, at least one radio frequency unit 11012, at least one processor 11013, and at least one memory 11014. The DU 1101 is mainly configured to: send and receive a radio frequency signal, perform conversion between a radio frequency signal and a baseband signal, and perform partial baseband processing. The CU 1102 may include at least one processor 11022 and at least one memory 11021. The CU 1102 and the DU 1101 may communicate with each other through an interface. A control plane (control plane) interface may be F1-C, and a user plane (user Plane) interface may be F1-U.

The CU 1102 is mainly configured to: perform baseband processing, control the base station, and the like. The DU 1101 and the CU 1102 may be physically disposed together, or may be physically disposed separately, namely, a distributed base station. The CU 1102 is a control center of the base station, may also be referred to as a processing unit, and is mainly configured to complete a baseband processing function. For example, the CU 1102 may be configured to control the base station to perform an operation procedure related to the network device in the foregoing method embodiments.

Specifically, the baseband processing of the CU and the DU may be classified based on a protocol layer of a wireless network. For details, refer to content in FIG. 3.

In addition, optionally, a donor base station 110 may include one or more radio frequency units (radio units, RUs), one or more DUs, and one or more CUs. The DU may include the at least one processor 11013 and the at least one memory 11014, the RU may include the at least one antenna 11011 and the at least one radio frequency unit 11012, and the CU may include the at least one processor 11022 and the at least one memory 11021.

In an example, the CU 1102 may include one or more boards, and the plurality of boards may jointly support a radio access network (for example, a 5G network) of a single access standard, or may separately support radio access networks (for example, an LTE network, a 5G network, or another network) of different access standards. The memory 11021 and the processor 11022 may serve one or more boards. In other words, a memory and a processor may be independently disposed on each board, or a plurality of boards may share a same memory and a same processor. In addition, a necessary circuit may further be disposed on each board. The DU 1101 may include one or more boards, and the plurality of boards may jointly support a radio access network (for example, a 5G network) of a single access standard, or may separately support radio access networks (for example, an LTE network, a 5G network, or another network) of different access standards. The memory 11014 and the processor 11013 may serve one or more boards. In other words, a memory and a processor may be independently disposed on each board, or a plurality of boards may share a same memory and a same processor. In addition, a necessary circuit may further be disposed on each board.

For example, when the access network device is the target donor node, a CU of the target donor node may perform transmission with a child node through a DU. For example, in a downlink direction, the CU of the target donor node may generate data (for example, PDCP data) and/or indication information, and then send the data to the DU of the target donor node through an interface between the CU and the DU, and the DU of the target donor node sends the data to the child node of the DU through an antenna. In an uplink direction, the DU of the target donor node may receive data from the child node through the antenna, and then send the data to the CU of the target donor node through the interface between the CU and the DU.

For example, when the access network device is the source donor node, a CU of the source donor node may perform transmission with a child node through a DU. For example, in a downlink direction, the CU of the source donor node may generate data (for example, PDCP data) and/or indication information, and then send the data to the DU of the source donor node through an interface between the CU and the DU, and the DU of the source donor node sends the data to the child node of the DU through an antenna. In an uplink direction, the DU of the source donor node may receive data from the child node through the antenna, and then send the data to the CU of the source donor node through the interface between the CU and the DU.

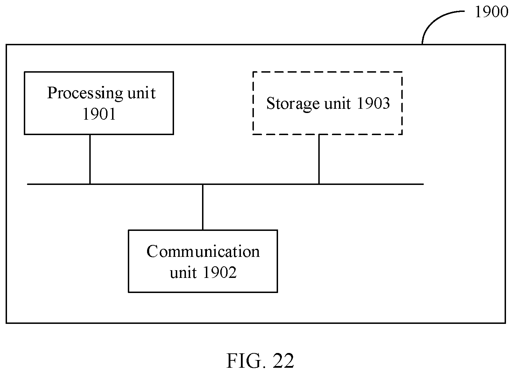

FIG. 22 is a schematic diagram of a structure of a communication apparatus according to an embodiment of this application. The communication apparatus may perform the method described in the foregoing method embodiments. For details, refer to descriptions in the foregoing method embodiments. The communication apparatus may be used in a communication device, a circuit, a hardware component, or a chip. For example, the communication apparatus may be a terminal, a chip in the terminal, a donor node (including a source donor node or a target donor node), a chip in the donor node (including the source donor node or the target donor node), a relay node (including a first relay node and a second relay node), or a chip in the relay node.

The apparatus 1900 includes a processing unit 1901 and a communication unit 1902. Optionally, the communication apparatus 1900 further includes a storage unit 1903.

The processing unit 1901 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control the apparatus (for example, a donor node, a terminal, or a chip), execute a software program, and process data of the software program.

The communication unit 1902 may be an apparatus for inputting (receiving) or outputting (sending) a signal, and is configured to perform signal transmission with another network device or another component in a device.

The storage unit 1903 may be an apparatus having a storage function, and may include one or more memories.

Optionally, the processing unit 1901, the communication unit 1902, and the storage unit 1903 are connected by using a communication bus.

Optionally, the storage unit 1903 may exist independently, and is connected to the processing unit 1901 by using the communication bus. The storage unit 1903 may alternatively be integrated into the processing unit 1901.

Optionally, in this embodiment of this application, the communication apparatus 1900 may be the terminal or the chip in the donor node. The communication unit 1902 may be an input/output interface, a pin, a circuit, or the like. The storage unit 1903 may be a register, a cache, a RAM, or the like, and the storage unit 1903 may be integrated into the processing unit 1901. The storage unit 1903 may be a ROM or another type of static storage device that can store static information and instructions, and the storage unit 1903 may be independent of the processing unit 1901. Optionally, with development of wireless communication technologies, the transceiver may be integrated into the communication apparatus 1900. For example, the transceiver 612 shown in FIG. 19 is integrated into the communication unit 1902.

In a possible design, the processing unit 1901 may include instructions, and the instructions may be run on the processor, to enable the communication apparatus 1900 to perform the method of the terminal or the donor node in the foregoing embodiments.

In another possible design, the storage unit 1903 stores instructions, and the instructions may be run on the processing unit 1901, to enable the communication apparatus 1900 to perform the method of the terminal or the donor node in the foregoing embodiments. Optionally, the storage unit 1903 may further store data. Optionally, the processing unit 1901 may also store instructions and/or data.

The communication apparatus 1900 may be the terminal in embodiments of this application. A schematic diagram of the terminal may be shown in FIG. 19. Optionally, the communication unit 1902 of the apparatus 1900 may include an antenna and a transceiver of the terminal, for example, the antenna 612 and the transceiver 616 in FIG. 19. Optionally, the communication unit 1902 may further include an output device and an input device, for example, the output device 614 and the input device 615 in FIG. 19.

When the communication apparatus 1900 may be the terminal in embodiments of this application or the chip of the terminal, the communication apparatus 1900 may implement a function implemented by the terminal in the foregoing method embodiments.

For example, the processing unit 1901 may configure a first LCH and/or a second LCH for a first bearer, process received downlink data or to-be-sent uplink data by using configuration information corresponding to the source donor node or configuration information corresponding to the target donor node, and map, to the first LCH or the second LCH, uplink data that is processed by using the configuration information corresponding to the source donor node or the configuration information corresponding to the target donor node, process, based on second indication information, the uplink data by using the PDCP configuration information corresponding to the target donor node, and delete the first LCH based on the indication information. The communication unit 1902 may implement transmission with a parent node of the terminal, for example, receive downlink data, send uplink data, or receive indication information.

When the communication apparatus 1900 may be the source donor node in embodiments of this application or the chip of the source donor node, the communication apparatus 1900 may implement a function of the source donor node in the foregoing method embodiments.

For example, the processing unit 1901 may generate indication information or data generated by the source donor node in the foregoing method embodiments. For example, the communication unit 1902 may perform transmission with a child node of the target source donor node, for example, send data and/or indication information to the child node, or receive data and/or indication information from the child node.

When the communication apparatus 1900 may be the target donor node in embodiments of this application or the chip of the target donor node, the communication apparatus 1900 may implement a function of the target donor node in the foregoing method embodiments.

For example, the processing unit 1901 may generate indication information or data generated by the target donor node in the foregoing method embodiments. For example, the communication unit 1902 may perform transmission with a child node of the target donor node, for example, send data and/or indication information to the child node, or receive data and/or indication information from the child node.

The foregoing describes the flowcharts of the methods in embodiments of this application. It should be understood that the terminal may have a functional unit (means) corresponding to the method or step of the terminal, the relay node may have a functional unit corresponding to the method or step of the relay node, the source donor node (for example, a CU and/or a DU) may have a functional unit corresponding to the method or step of the source donor node (for example, a CU and/or a DU), the target donor node (for example, a CU and/or a DU) may have a functional unit corresponding to the method or step of the target donor node (for example, a CU and/or a DU), the CU of the source donor node may have a functional unit corresponding to the method or step of the CU of the source donor node, and another node in a relay system may have a functional unit corresponding to the another node. One or more of the foregoing modules or units may be implemented by software, hardware, or a combination thereof. When any one of the foregoing modules or units is implemented by software, the software exists in a form of computer program instructions, and is stored in a memory. A processor may be configured to execute the program instructions to implement the foregoing method procedures.

The processor in this application may include but is not limited to at least one of the following various computing devices that run software: a central processing unit (central processing unit, CPU), a microprocessor, a digital signal processor (DSP), a microcontroller unit (microcontroller unit, MCU), or an artificial intelligence processor. Each computing device may include one or more cores configured to execute software instructions to perform an operation or processing. The processor may be a separate semiconductor chip; may be integrated with another circuit into a semiconductor chip, for example, may form a system on a chip (system on a chip, SoC) with another circuit (for example, a codec circuit, a hardware acceleration circuit, or various bus and interface circuits); or may be integrated into an application-specific integrated circuit (application-specific integrated circuit, ASIC) as a built-in processor of the ASIC. The ASIC integrated with the processor may be packaged separately or may be packaged together with another circuit. The processor includes a core for executing software instructions to perform operation or processing, and may further include a necessary hardware accelerator, for example, a field programmable gate array (field programmable gate array, FPGA), a programmable logic device (programmable logic device, PLD), or a logic circuit that implements a special-purpose logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed to a computer. However, the memory is not limited thereto.

In addition to a data bus, the bus may further include a power bus, a control bus, a status signal bus, and the like. However, for clear description, various types of buses in the figures are marked as the bus.

In an implementation process, steps in the foregoing methods can be implemented by a hardware integrated logical circuit in the processor, or by using instructions in a form of software. The steps of the method disclosed with reference to embodiments of this application may be directly performed by a hardware processor, or may be performed by a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

According to the method provided in embodiments of this application, an embodiment of this application further provides a system, including the foregoing apparatus and one or more network devices.

It should be further understood that first, second, third, fourth, and various numbers in this specification are merely used for differentiation for ease of description, and are not intended to limit the scope of embodiments of this application. These numbers may be replaced with other numbers.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" generally indicates an "or" relationship between the associated objects.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with various illustrative logical blocks (illustrative logical block) and steps (step) described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on the computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A logical channel LCH configuration method, wherein a first data radio bearer DRB of a terminal corresponds to a first LCH, the first LCH is for transmitting packet data convergence protocol PDCP data corresponding to a source donor node, and the method comprises:
generating, by a first relay node, configuration information of a second LCH corresponding to the first DRB, wherein the second LCH is for transmitting PDCP data corresponding to a target donor node; and
sending, by the first relay node, the configuration information of the second LCH to the terminal, wherein
the first relay node is an access relay node of the terminal; and the source donor node is a source donor node during first relay node handover, and the target donor node is a target donor node during the first relay node handover; or the source donor node is a source donor node during second relay node handover, and the target donor node is a target donor node during the second relay node handover, wherein a second relay node is a relay node on a link between the first relay node and the source donor node.

2. The method according to claim 1, wherein the PDCP data corresponding to the source donor node is processed by using PDCP configuration information corresponding to the source donor node, and the PDCP data corresponding to the target donor node is processed by using PDCP configuration information corresponding to the target donor node.

3. The method according to claim 1 or 2, wherein the method further comprises:
receiving, by the first relay node, first indication information from the source donor node or the target donor node; and
generating, by the first relay node, the configuration information of the second LCH based on the first indication information.

4. The method according to claim 2, wherein
the first indication information is carried in a user equipment UE context modification request message received by the first relay node from the source donor node or a UE context setup request message received by the first relay node from the target donor node.

5. The method according to claim 1 or 2, wherein the method further comprises:
after the first relay node receives a first message from the target donor node, generating, by the first relay node, the configuration information of the second LCH.

6. The method according to claim 5, wherein the first message is a user equipment UE context setup request message

7. The method according to any one of claims 1 to 6, wherein the method further comprises:
sending, by the first relay node, second indication information to the terminal, wherein the second indication information is for configuring the second LCH for the first DRB, or indicates the terminal to associate the first DRB with two LCHs.

8. The method according to any one of claims 1 to 7, wherein the method further comprises:
sending, by the first relay node, third indication information to the terminal, wherein the third indication information indicates the terminal to process uplink data by using the PDCP configuration information corresponding to the target donor node.

9. The method according to claim 8, wherein the source donor node is the source donor node during the first relay node handover, the target donor node is the target donor node during the first relay node handover, and the method comprises:
after the first relay node performs a PUSCH switch or after a GTP tunnel is established between the first relay node and the target donor node, sending, by the first relay node, the third indication information to the terminal.

10. The method according to any one of claims 1 to 9, wherein the method further comprises:
sending, by the first relay node, fourth indication information to the target donor node, wherein the fourth indication information is used by the target donor node to indicate the terminal to delete the first LCH.

11. The method according to claim 10, wherein after the first relay node completes sending, to the terminal, the PDCP data that corresponds to the source donor node and that is buffered by the first relay node, sending, by the first relay node, the fourth indication information to the target donor node.

12. The method according to any one of claims 1 to 11, wherein the source donor node is the source donor node during the first relay node handover, the target donor node is the target donor node during the first relay node handover, and the method further comprises:
receiving, by the first relay node, fifth indication information from the target donor node through the source donor node; and
maintaining, by the first relay node, a connection to the source donor node during the handover based on the fifth indication information.

13. The method according to claim 12, wherein the method further comprises:
sending, by the first relay node, capability indication information to the target donor node through the source donor node, wherein the capability indication information indicates that the first relay node supports a capability of maintaining the connection to the source donor node during the handover.

14. The method according to any one of claims 1 to 13, wherein the first LCH corresponds to a general packet radio service tunneling protocol-user plane GTP-U tunnel between the first relay node and the source donor node, and the second LCH corresponds to a GTP-U tunnel between the first relay node and the target donor node.

15. The method according to any one of claims 1 to 14, wherein the method further comprises:
receiving, by the first relay node through the source donor node, information about a backhaul adaptation protocol BAP address allocated by the target donor node, wherein the BAP address allocated by the target donor node to the first relay node is different from a BAP address allocated by the source donor node to the first relay node.

16. The method according to any one of claims 1 to 15, wherein the method further comprises: receiving, by the first relay node, sixth indication information from the target donor node, wherein the sixth indication information indicates the first relay node to start, activate, or enable dual configurations of a BAP layer, and the dual configurations of the BAP layer comprise a BAP configuration corresponding to the source donor node and a BAP configuration corresponding to the target donor node.

17. A logical channel LCH configuration method, wherein a first DRB of a terminal corresponds to a first LCH, the first LCH is for transmitting PDCP data corresponding to a source donor node, and the method comprises:
receiving, by the terminal, configuration information of a second LCH from a first relay node, wherein the second LCH is for transmitting PDCP data corresponding to a target donor node; and
configuring, by the terminal, the second LCH for the first DRB, wherein
the first relay node is an access relay node of the terminal; and the source donor node is a source donor node during first relay node handover, and the target donor node is a target donor node during the first relay node handover; or the source donor node is a source donor node during second relay node handover, and the target donor node is a target donor node during the second relay node handover, wherein a second relay node is a relay node on a link between the first relay node and the source donor node.

18. The method according to claim 17, wherein the PDCP data corresponding to the source donor node is processed by using PDCP configuration information corresponding to the source donor node, and the PDCP data corresponding to the target donor node is processed by using PDCP configuration information corresponding to the target donor node.

19. The method according to claim 17 or 18, wherein the method further comprises:
receiving, by the terminal, first indication information from the first relay node; and
the configuring, by the terminal, the second LCH for the first DRB comprises:
configuring, by the terminal, the second LCH for the first DRB based on the first indication information, to associate the first DRB with two LCHs.

20. The method according to any one of claims 17 to 19, wherein the PDCP data corresponding to the target donor node comprises uplink PDCP data corresponding to the target donor node, and the method further comprises:
receiving, by the terminal, second indication information from the first relay node; and
processing, by the terminal based on the second indication information, uplink data by using the PDCP configuration information corresponding to the target donor node, to obtain the uplink PDCP data corresponding to the target donor node.

21. The method according to any one of claims 17 to 19, wherein the PDCP data corresponding to the target donor node comprises uplink PDCP data corresponding to the target donor node, and the method further comprises:
after the terminal receives the configuration information of the second LCH from the target donor node through the first relay node, processing, by the terminal, uplink data by using the PDCP configuration information corresponding to the target donor node, to obtain the uplink PDCP data corresponding to the target donor node.

22. The method according to any one of claims 17 to 21, wherein the method further comprises:
receiving, by the terminal, third indication information from the first relay node; and
deleting, by the terminal, the first LCH based on the third indication information.

23. A communication apparatus, comprising at least one processor and a memory coupled to the at least one processor, wherein the at least one processor is configured to perform the method according to any one of claims 1 to 16.

24. A communication apparatus, comprising at least one processor and a memory coupled to the at least one processor, wherein the at least one processor is configured to perform the method according to any one of claims 17 to 22.

25. A computer-readable storage medium, wherein the computer-readable storage medium stores a program or instructions for implementing the method according to any one of claims 1 to 24.

26. A computer program product, wherein the computer program product comprises instructions; and when the instructions are executed, the method according to any one of claims 1 to 22 is performed.

27. A communication system, wherein the communication system comprises the first relay node according to claims 1 to 16 and the terminal according to claims 17 to 22.
